# FASCICULE DE BREVET EUROPEEN

(11) **EP 0 388 321 B1**
(45) Date de publication et mention de la délivrance du brevet: **18.12.1996**
(21) Numéro de dépôt: 90420051.6
(22) Date de dépôt: 30.01.1990
(51) Int. Cl.: C08G 77/388, C08L 101/00, C08K 5/54

(54) **Nouveaux composés à fonction pipéridinyle et leur application dans la photostabilisation des polymères**
Piperidinyl-Verbindungen und deren Anwendung zur Photostabilisierung von Polymeren
Piperidinyle compounds and their use as a photostabilizer for polymers

(30) Priorité: 03.02.1989 FR 8901653
(43) Date de publication de la demande: 19.09.1990
(60) Demande divisionnaire: 95103303.4
(73) Titulaire: RHONE-POULENC CHIMIE, 92408 Courbevoie Cédex (FR)
(72) Inventeur: Gay, Michel, F-69100 Villeurbanne (FR); Lavault, Sylvie, F-69003 Lyon (FR)
(74) Mandataire: Trolliet, Maurice

(56) Documents cités:
- EP-A- 0 162 524
- EP-A- 0 263 561
- EP-A- 0 343 717
- DD-A- 0 236 103
- FR-A- 2 312 502
- FR-A- 2 351 144
- US-A- 4 859 759
- W. Noll, Chemistry and Technology of Silicones, 2. Ed. (1968) Academic Press, p. 374, 572, 573

## Description

La présente invention concerne de nouveaux composés à fonctions pipéridinyle portées par une chaîne siloxanique.

Elle concerne également l'utilisation de tels composés dans les polymrèes pour améliorer leur photostabilisation.

En effet, les polymères organiques, et plus particulièrement les polyoléfines et les polyalcadiènes, subissent une dégradation lorsqu'ils sont soumis aux agents extérieurs et notamment à l'action combinée de l'air et des radiations ultra-violettes solaires.

Cette dégradation est généralement limitée par l'introduction dans le polymère de petites quantités d'agents stabilisants.

Parmi ces stabilisants anti-UV, les amines à encombrement stérique, notamment les tétraméthyl-2,2,6,6 pipéridines, sont actuellement parmi les plus efficaces.

Cependant, en pratique, l'un des problèmes majeurs relatifs à l'utilisation de ces stabilisants anti-UV est d'obtenir un bon compromis entre leur efficacité, qui implique leur mobilité au sein du polymère, et la permanence de leur action, qui implique la mise en oeuvre de molécules à haute masse moléculaire et n'exsudant pas.

C'est pourquoi il a été proposé d'utiliser des polyalkylpipéridines de haute masse moléculaire, afin de limiter leurs pertes, notamment lors de la mise en oeuvre des polymères à haute température. Ainsi le brevet US-A-4 698 381 cite de très nombreux exemples de tétraméthylpipéridines de masse moléculaire élevée ou polymériques ; ce même document décrit des N,N',N"-tris(tétraméthyl-2,2,6,6 pipéridinyl)triazinyl) undécanetriamines possédant des masses moléculaire supérieures à environ 1500.

La demande de brevet européen EP-A-0 162 524 propose une autre solution, consistant à utiliser des composés contenant dans leur molécule des groupements amine stériquement encombrés et des groupements silyle hydrolysables.

Ces composés peuvent conduire à des structures résineuses complexes, par réaction dans le polymère ou extemporanément.

De tels composés semblent avoir une action stabilisante effective selon les exemples du document EP-A-0 162 524, mais ils présentent également certains inconvénients.

Ainsi la réaction de réticulation engendre la formation d'un alcool à partir des groupements hydrolysables, ce qui modifie donc les formulations polymériques complexes dans lesquelles tous les constituants jouent un rôle.

En outre la présence de groupements hydrolysables dans la formule de ces composés rend leur conservation délicate.

Enfin la formation d'une résine de structure complexe limite la mobilité de la structure stabilisante dans le polymère.

Les nouveaux composés selon l'invention ne présentent pas les inconvénients indiqués précédemment.

EP-A-0 343 717, qui est un document intercalaire, décrit des produits de formule : 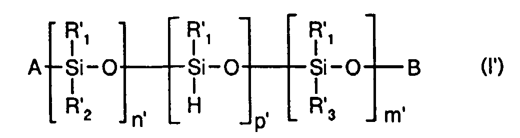 dans laquelle :
- R'₁ et R'₃ qui peuvent être identiques ou difféents, sont des radicaux alkyles linéaires ou ramifiés en C₁ - C₁₀, des radicaux cycloaliphatiques en C₅ - C₁₁ ou des radicaux phényle ;
- R'₂ est un radical choisi parmi ceux correspondant à la formule générale : 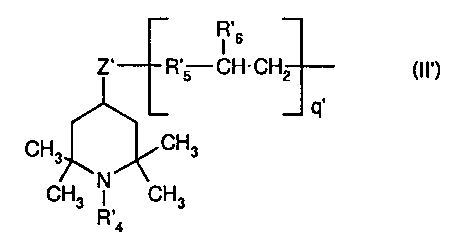 dans laquelle :
   R'₄ est un hydrogène ou méthyle ou un benzyle,
   R'₅ est un radical alkyle linéaire ou ramifié en C₁ - C₇
   R'₆ est un atome d'hydrogène ou un méthyle
   Z' est un groupe choisi parmi -O- : 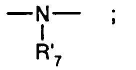 (où R'₇ est un groupe alkyle linéaire ou ramifié en C₁ - C₅ ou un hydrogène) ;
   q' est zéro ou un ;
- n' est un nombre entier autre 0 ;
- m' et p', qui peuvent être identiques ou différents, sont zéro ou des nombres entiers avec la condition que n' + p' + m' soit inférieur ou égal à 50 ;
- A est un groupe correspondant à la formule : 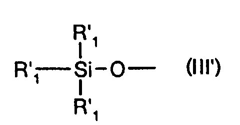 où R'₁ a la signification ci-dessus ;
- B est un groupe correspondant à la formule : 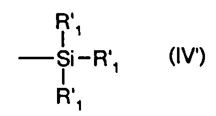 où R'₁ a la signification mentionnée ci-dessus ;
- ou A et B représentent conjointement une liaison directe engendrant une structure cyclique ; de pareils produits de formule (I') sont exclus de la portée de la présente invention.

Plus précisément, les composés selon l'invention sont des composés de formule générale (I) 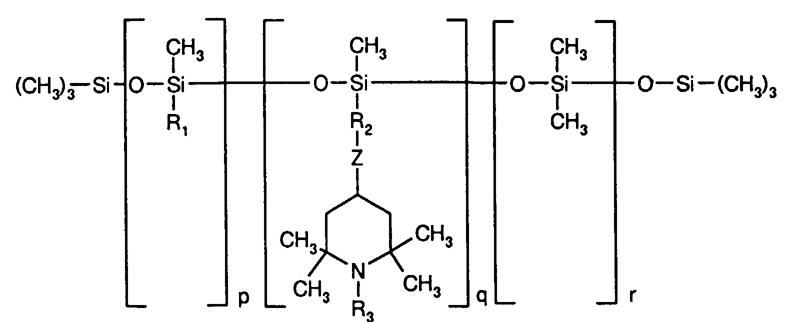 dans laquelle :
- les différents motifs sont répartis de manière statistique dans la chaîne ;
- p et r représentent des nombres égaux ou supérieurs à 0 ;
- q représente un nombre supérieur à 0 ;
- la somme de p, q et r est supérieure ou égale à 5 ;
- R₁ représente :
   . un radical de formule -(CH₂)ₙ-COO-R₄ dans laquelle n représente un nombre de 5 à 20 et R₄ représente un radical alkyle de 1 à 12 atomes de carbone ;
   . un radical de formule -(CH₂)ₘ-OR₅ dans laquelle m représente un nombre de 3 à 10 et R₅ représente un atome d'hydrogène, un enchaînement oxyde d'éthylène, un enchaînement oxyde de propylène ou un radical acyle ayant de 2 à 12 atomes de carbone ;
- R2 représente un radical organique divalent choisi parmi :
   . les radicaux alkylènes, linéaires ou ramifiés, ayant de 2 à 18 atomes de carbone ;
   . les radicaux alkylène-carbonyle dont la partie alkylène, linéaire ou ramifiée, comporte 2 à 20 atomes de carbone ;
   . les radicaux alkylène-cyclohexylène dont la partie alkylène, linéaire ou ramifiée, comporte 2 à 12 atomes de carbone et la partie cyclohexylène comporte un groupement -OH et éventuellement 1 ou 2 radicaux alkyles ayant de 1 à 4 atomes de carbone ;
   . les radicaux de formule -R₆-O-R₇- dans laquelle les radicaux R₆ et R₇, identiques ou différents, représentent des radicaux alkylènes ayant 1 à 12 atomes de carbone ;
   . les radicaux de formule -R₆-O-R₇- dans laquelle R₆ et R₇ ont les significations indiquées précédemment et l'un d'entre eux ou les deux sont substitués par un ou deux groupements -OH ;
   . les radicaux de formules -R₆-COO-R₇- et -R₆-OCO-R₇- dans lesquelles R₆ et R₇ ont les significations précédentes ;
   . les radicaux de formule -R₆-O-R₇-O-CO-R₈- dans laquelle R₆, R₇ et R₈, identiques ou différents, représentent des radicaux alkylènes ayant 2 à 12 atomes de carbone et le radical R₇ est substitué par un groupement hydroxyle ;
- R₃ représente un atome d'hydrogène ou un radical alkyle, linéaire ou ramifié, ayant de 1 à 12 atomes de carbone ;
- Z représente -O- ou -NR₉-, R₉ ayant les significations indiquées pour R₃ ;
à l'exclusion des produits de formule (I') définis ci-avant à propos de la citation du document intercalaire EP-A-0 343 717.

Généralement les composés de l'invention sont le plus souvent les composés de formule (I) dans laquelle :
- p représente un nombre de 0 à 100;
- r représente un nombre de 0 à 100;
- q représente un nombre de 3 à 100
- la somme de p et de r est un supérieure à 0 ;
- la somme de p, q et r est supérieure ou égale à 10 ;
- R₁ représente :
   . un radical de formule -(CH₂)₁₀-COO-R₄ dans laquelle R₄ représente un radical alkyle de 1 à 6 atomes de carbone ;
   . un radical de formule -(CH₂)₃-OR₅ dans laquelle R₅ représente un atome d'hydrogène, un enchaînement oxyde d'éthylène, un enchaînement oxyde de propylène ou un groupement acyle ayant de 2 à 6 atomes de carbone ;
- R₂ représente un radical hydrocarboné divalent choisi parmi :
   . les radicaux alkylènes, linéaires ou ramifiés, ayant de 3 à 12 atomes de carbone ;
   . les radicaux alkylène-carbonyle dont la partie alkylène, linéaire ou ramifiée, comporte 2 à 12 atomes de carbone ;
   . les radicaux alkylène-cyclohexylène dont la partie alkylène, linéaire ou ramifiée, comporte de 2 à 6 atomes de carbone et la partie cyclohexylène comporte un groupement -OH et éventuellement 1 ou 2 substituants alkyles ayant 1 à 4 atomes de carbone ;
   . les radicaux de formule -R₆-O-R₇- dans laquelle les radicaux R₆ et R₇, identiques ou différents, représentent des radicaux alkylènes ayant 2 à 6 atomes de carbone ;
   . les radicaux de formule -R₆-O-R₇- dans laquelle R₆ et R₇ ont les significations indiquées précédemment et R₇ est substitué par un groupe OH ;
   . les radicaux de formules -R₆-COO-R₇- et -R₆-OCO-R₇- dans lesquelles R₆ et R₇ ont les significations précédentes ;
   . les radicaux de formule -R₆-O-R₇-O-CO-R₈- dans laquelle R₆, R₇ et R₈, identiques ou différents, représentent des radicaux alkylènes ayant 2 à 6 atomes de carbone et le radical R₇ est substitué par un groupement hydroxyle ;
- R₃ représente un atome d'hydrogène ou un radical alkyle, linéaire ou ramifié, ayant de 1 à 6 atomes de carbone ;
- Z représente -O- ou -NR₉-, R₉ représentant un atome d'hydrogène ou un radical alkyle ayant 1 à 6 atomes de carbone.

De préférence les composés de l'invention seront plus particulièrement les composés de formule (I) dans laquelle :
- p représente un nombre de 5 à 55 ;
- r représente un nombre de 0 à 40 ;
- q représente un nombre de 5 à 54,5
- la somme de p, q et r est un nombre de 10 à l00 ;
- R₁ représente :
   . un radical de formule -(CH₂)₁₀-COO-R₄ dans laquelle R₄ représente un radical alkyle de 1 à 6 atomes de carbone ;
   . un radical de formule -(CH₂)₃-OR₅ dans laquelle R₅ représente un atome d'hydrogène, un enchaînement oxyde d'éthylène, un enchaînement oxyde de propylène ou un groupement acyle ayant de 2 à 6 atomes de carbone ;
- R2 représente un radical hydrocarboné choisi parmi :
   . les radicaux alkylènes, linéaires ou ramifiés, ayant de 3 à 12 atomes de carbone ;
   . le radical -(CH₂)₁₀-CO- ;
   . les radicaux alkylène-cyclohexylène dont la partie alkylène, linéaire ou ramifiée, comporte 2 à 6 atomes de carbone et la partie cyclohexylène comporte un groupement -OH et éventuellement 1 ou 2 substituants alkyles ayant 1 à 4 atomes de carbone ;
   . les radicaux de formule -R₆-O-R₇- dans laquelle les radicaux R₆ et R₇, identiques ou différents, représentent des radicaux alkylènes ayant 2 à 6 atomes de carbone ;
   . les radicaux de formule -R₆-O-R₇- dans laquelle R₆ et R₇ ont les significations indiquées précédemment et R₇ est substitué par un groupe OH ;
   . les radicaux de formules -R₆-COO-R₇- et -R₆-OCO-R₇- dans lesquelles R₆ et R₇ ont les significations précédentes ;
   . les radicaux de formule -R₆-O-R₇-O-CO-R₈- dans laquelle R₆, R₇ et R₈, identiques ou différents, représentent des radicaux alkylènes ayant 2 à 6 atomes de carbone et le radical R₇ est substitué par un groupement hydroxyle ;
- R₃ représente un atome d'hydrogène ou un radical alkyle, linéaire ou ramifié, ayant de 1 à 6 atomes de carbone ;
- Z représente -O- ou -NR₉-, R₉ représentant un atome d'hydrogène ou un radical alkyle ayant 1 à 6 atomes de carbone.

Comme exemples plus spécifiques de composés de formule (I) on peut citer les composés pour lesquels :
- p représente un nombre de 5 à 30 ;
- r représente un nombre de 0 à 40 ;
- q représente un nombre de 5 à 54,5 ;
- la somme de p, q et r est un nombre de 10 à 100 ;
- R₁ représente :
   . un radical décaméthylène-carboxylate de méthyle ou d'éthyle ;
- R₂ représente :
   . un radical triméthylène;
   . un radical décaméthylène-carbonyle;
   . un radical hydroxy-2 oxa-4 heptaméthylène ;
   . un radical hydroxy-6 dioxa-4,8 oxo-3 undécaméthylène;
   . un radical (méthyl-1 éthylène)-4 hydroxy-2 méthyl-1 cyclohexyle ;
- R₃ représente un atome d'hydrogène ou un radical méthyle ;
- Z représente -O- ou -NH- ou -N(CH₃)-.

La préparation des composés selon l'invention peut se faire à partir d'un composé organosiloxanique de formule générale (II) : 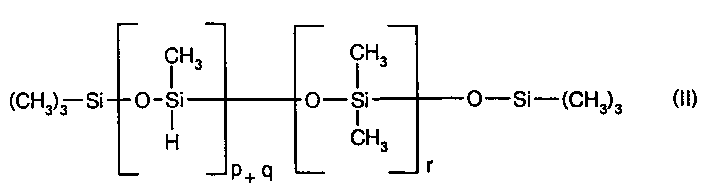 dans laquelle :
- p, q et r ont les significations indiquées précédemment pour les composés de formule (I).

De tels composés de formule (Il) sont disponibles dans le commerce.

Le remplacement des atomes d'hydrogène du composé (Il) par le groupement de formule (III) : 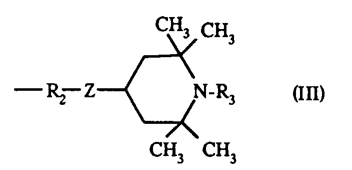 et éventuellement par le groupement R₁ se fait par réaction de (Il) avec un composé présentant une insaturation éthylénique susceptible de réagir en hydrosilylation en présence d'un catalyseur au platine.

Ce composé sera donc le précurseur insaturé du radical (III) ou du radical R₁.

Comme précurseurs de R₁, on peut citer à titre d'exemple non limitatif l'undécénoate de méthyle.

Comme précurseurs du radical de formule (III) on peut citer à titre d'exemples non limitatifs l'allyloxy-4 tétraméthyl-2,2,6,6 pipéridine, l'allyloxy-4 pentaméthyl-1,2,2,6,6 pipéridine, l'undécénoate de tétraméthyl-2,2,6,6 pipéridinyle-4.

Il est également possible pour former les motifs 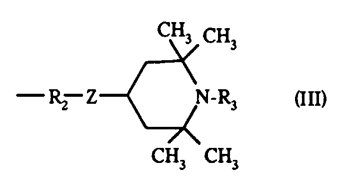 de faire réagir un précurseur du radical R₂, comportant une double liaison éthylénique, par hydrosilylation sur ≡Si-H, puis de faire une 2ème réaction sur ce précurseur de R₂, afin de fixer le radical tétraméthyl-2,2,6,6 pipéridinyle-4.

C'est notamment le cas, lorsque Z représente -NR₉, en utilisant comme précurseur de R₂ un composé comportant une double liaison éthylénique et un groupement époxyde, tel que l'allyloxy-3 époxy-1,2 propane ou l'époxy-1,2 isopropényl-4 méthyl-1 cyclohexane.

La réaction d'hydrosilylation entre les groupements ≡Si-H du composé organosiloxanique (Il) avec les composés précurseurs des radicaux R₁ et R₂ peut se faire simultanément en modulant les rapports molaires des différents réactifs, en fonction des nombres p et q souhaités. Cette réaction connue en elle-même s'effectue en présence d'un catalyseur en platine.

La réaction entre le précurseur de R₂ à fonction époxyde et l'amino-4 tétraméthyl-2,2,6,6 pipéridine ou l'alkylamino-4 tétraméthyl-2,2,6,6 pipéridine 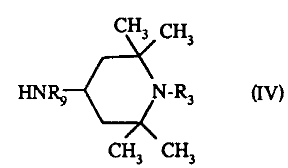 se fait par simple chauffage à une température de 80 à 140°C environ pendant quelques minutes à plusieurs heures.

Le radical R₂ peut également être constitué en plusieurs étapes ; ainsi on peut par exemple faire tout d'abord une réaction d'hydrosilylation entre la fonction ≡Si-H du composé organosiloxanique de formule (Il) et un alcool insaturé tel que l'alcool allylique ; on fait alors réagir la fonction alcool du radical hydroxyalkyle (par exemple hydroxy-3 propyle) ainsi greffé sur l'atome de Si avec un acide carboxylique insaturé, ou de préférence l'un de ses esters d'alkyle, de méthyle par exemple, comme l'acide acrylique ou l'acide méthacrylique. Enfin la double liaison de l'acide insaturé peut réagir sur le dérivé de formule (IV) de la tétraméthyl-2,2,6,6 pipéridine (addition de MICHAEL).

Ces différentes voies de synthèse des différents composés (I) de l'invention ne sont pas limitatives.

Les composés de formule (I) peuvent être utilisés comme stabilisants UV dans les polymères organiques.

A titre d'exemples de tels polymères organiques, on peut citer les polyoléfines, les polyalcadiènes, les polystyrènes, les polyuréthannes, les polyamides, les polyesters, les polycarbonates, les polysulfones, les polyéthers-sulfones, les polyéthers-cétones, les polymères acryliques, leurs copolymères et leurs mélanges.

Parmi ces polymères, les composés de l'invention ont une action plus particulièrement efficace avec les polyoléfines et les polyalcadiènes tels que le polypropylène, le polyéthylène haute densité, le polyéthylène basse densité linéaire, le polyéthylène basse densité, le polybutadiène, leurs copolymères et leurs mélanges.

Parmi les composés de formule (I) ceux pour lesquels le symbole p représente un nombre supérieur à 0 sont particulièrement intéressants, car outre leur action stabilisante, la présence de groupements R₁ apporte une compatibilité plus grande avec les polymères à stabiliser.

Compte-tenu des larges possibilités de variations des nombres relatifs p, q et r des différents motifs présents dans la chaîne siloxanique des composés de formule (I), cesdits composés peuvent être facilement adaptables aux différents problèmes à résoudre.

En outre par rapport à certains composés de l'art antérieur, tels que ceux décrits dans EP-A-0 162 524, ils n'évoluent pas car leurs chaînes sont dites bloquées (groupements terminaux (CH₃)₃-Si). De cette manière la longueur des chaînes est contrôlée et par conséquent la viscosité des composés et leur efficacité.

Un autre objet de la présente invention consiste donc dans les compositions de polymère organique stabilisé contre les effets néfastes de la lumière et des UV (rayonnement de longueur d'onde entre 250 nm et 800 nm) par une quantité efficace d'au moins un composé de formule (I).

Habituellement ces compositions contiennent de 0,04 à 20 milliéquivalents en fonction tétraméthyl-2,2,6,6 pipéridinyle pour 100 g de polymère.

De préférence les compositions polymériques stabilisées selon l'invention contiennent de 0,20 à 4 milliéquivalents en fonction tétraméthyl-2,2,6,6 pipéridinyle pour 100 g de polymère.

A titre indicatif, généralement les compositions polymériques stabilisées contiennent de 0,01 % à 5 % en poids de composé de formule (I) par rapport au polymère.

L'addition des composés de formule (I) peut être effectuée pendant ou après la préparation des polymères.

Ces compositions peuvent contenir en outre tous les additifs et stabilisants utilisés habituellement avec les polymères qu'elles contiennent.

Ainsi on peut mettre en oeuvre les stabilisants et additifs suivants.

### 1. Anti-oxydants

1.1. Monophénols alkylés, tels que :
   - di-tertiobutyl-2,6 méthyl-4 phénol,
   - tertiobutyl-2 diméthyl-4,6 phénol
   - di-tertiobutyl-2,6 éthyl-4 phénol,
   - di-tertiobutyl-2,6 n-butyl-4 phénol,
   - di-tertiobutyl-2,6 isobutyl-4 phénol,
   - dicyclopentyl-2,6 méthyl-4 phénol,
   - (α-méthyl-cyclohexyl)-2 diméthyl-4,6 phénol,
   - dioctadécyl-2,6 méthyl-4 phénol,
   - tricyclohexyl-2,4,6 phénol,
   - di-tertio-butyl-2,6 méthoxyméthyl-4 phénol,
   - di-nonyl-2,6 méthyl-4 phénol.
1.2. Hydroquinones alkylées, telles que :
   - di-tertiobutyl-2,6 méthoxy-4 phénol,
   - di-tertiobutyl-2,5 hydroquinone,
   - di-tertiopentyl-2,5 hydroquinone;
   - diphényl-2,6 octadécyloxy-4 phénol.
1.3. Sulfures de diphényles hydroxylés, tels que :
   - thio-2,2' bis-(tertiobutyl-6 méthyl-4 phénol),
   - thio-2,2' bis-(octyl-4 phénol),
   - thio-4,4' bis-(tertiobutyl-6 méthyl-3 phénol),
   - thio-4,4' bis-(tertiobutyl-6 méthyl-2 phénol),
1.4. Alkylidène-bis-phénols, tels que :
   - méthylène-2,2' bis-(tertiobutyl-6 méthyl-4 phénol),
   - méthylène-2,2' bis-(tertiobutyl-6 éthyl-4 phénol),
   - méthylène-2,2' bis-[méthyl-4 (α-méthylcyclohexyl)-6 phénol],
   - méthylène-2,2' bis-(méthyl-4 cyclohexyl-6 phénol),
   - méthylène-2,2' bis-(nonyl-6 méthyl-4 phénol),
   - méthylène-2,2' bis-(di-tertiobutyl-4,6 phénol),
   - éthylidène-2,2' bis-(di-tertiobutyl-4,6 phénol),
   - éthylidène-2,2' bis-(tertiobutyl-6 isobutyl-4 phénol),
   - méthylène-2,2' bis-[(α-méthylbenzyl)-6 nonyl-4 phénol],
   - méthylène-2,2' bis-[(α,α-diméthylbenzyl)-6 nonyl-4 phénol],
   - méthylène-4,4' bis-(di-tertiobutyl-2,6 phénol),
   - méthylène-4,4' bis-(tertiobutyl-6 méthyl-2 phénol),
   - bis-(tertiobutyl-5 hydroxy-4 méthyl-2 phényl)-1,1 butane,
   - bis-(tertiobutyl-3 méthyl-5 hydroxy-2 benzyl)-2,6 méthyl-4 phénol,
   - tris-(tertiobutyl-5 hydroxy-4 méthyl-2 phényl)-1,1,3 butane,
   - bis-(tertiobutyl-5 hydroxy-4 méthyl-2 phényl)-1,1 n-dodécylthio-3 butane,
   - bis-[bis-(tertiobutyl-3 hydroxy-4 phényl)-3,3, butyrate] de l'éthylène-glycol,
   - bis-(tertiobutyl-3 hydroxy-4 méthyl-5 phényl)-dicyclopentadiène,
   - téréphtalate de bis-[(tertiobutyl-3 hydroxy-2 méthyl-5 benzyl)-2 tertiobutyl-6 méthyl-4 phényle].
1.5. Composés benzyliques, tels que :
   - tris-(di-tertiobutyl-3,5 hydroxy-4 benzyl)-1,3,5 triméthyl-2,4,6 benzène,
   - sulfure de bis-(di-tertiobutyl-3,5 hydroxy-4 benzyle),
   - (di-tertiobutyl-3,5 hydroxy-4 benzylthio)-acétate d'iso-octyle,
   - dithiotéréphtalate de bis-(tertiobutyl-4 hydroxy-3 diméthyl-2,6 benzyle),
   - isocyanurate de tris-(di-tertiobutyl-3,5 hydroxy-4 benzyle),
   - isocyanurate de tris-(tertiobutyl-4 hydroxy-3 diméthyl-2,6 benzyle),
   - (di-tertiobutyl-3,5 hydroxy-4 benzyl)-phosphonate de dioctadécyle,
   - sel calcique mono-ester éthylique de l'acide (di-tertiobutyl-3,5 hydroxy-4 benzyl)-phosphonique,
   - isocyanurate de tris-(dicyclohexyl-3,5 hydroxy-4 benzyle).
1.6. Acylamino-phénols, tels que :
   - lauroylamino-4 phénol,
   - stéaroylamino-4 phénol,
   - bis-octylthio-2,4 (di-tert-butyl-3,5 hydroxy-4 anilino)-6 triazine-1,3,5,
   - N-(di-tert-butyl-3,5 hydroxy-4 phényl)-carbamate d'octyle.
1.7. Esters de l'acide (di-tertiobutyl-3,5 hydroxy-4 phényl)-3 propionique qui dérivent de mono-alcools ou de polyols, ces alcools étant par exemple :
   - le méthanol,
   - l'octadécanol,
   - l'hexane-diol-1,6,
   - le néopentylglycol,
   - le thio-diéthylène-glycol,
   - le diéthylène-glycol,
   - le triéthylène-glycol,
   - le pentaérythritol,
   - l'isocyanurate de tris-(hydroxyéthyle),
   - le N,N'-bis-(hydroxyéthyl)-oxalamide.
1.8. Esters de l'acide tertiobutyl-5 hydroxy-4 méthyl-3 phényl)-3 propionique qui dérivent de mono-alcools ou de polyols, ces alcools étant par exemple :
   - le méthanol,
   - l'octadécanol,
   - l'hexane-diol-1,6,
   - le néopentylglycol,
   - le thio-diéthylène-glycol,
   - le diéthylène-glycol,
   - le triéthylène-glycol,
   - le pentaérythritol,
   - l'isocyanurate de tris-(hydroxyéthyle),
   - le N,N'-bis-(hydroxyéthyl)-oxalamide.
1.9. Esters de l'acide (dicyclohexyl-3,5 hydroxy-4 phényl)-3 propionique qui dérivent de mono-alcools ou de polyols, ces alcools étant par exemple :
   - le méthanol,
   - l'octadécanol,
   - l'hexane-diol-1,6,
   - le néopentylglycol,
   - le thio-diéthylène-glycol,
   - le diéthylène-glycol,
   - le triéthylène-glycol,
   - le pentaérythritol,
   - l'isocyanurate de tris-(hydroxyéthyle),
   - le N,N'-bis-(hydroxyéthyl)-oxalamide.
1.10. Amides de l'acide (di-tertio-butyl-3,5 hydroxy-4 phényl)-3 propionique, tels que :
   - N,N'-bis-(di-tertiobutyl-3,5 hydroxy-4 phényl-propionyl)-hexaméthylène-diamine,
   - N,N'-bis-(di-tertiobutyl-3,5 hydroxy-4 phényl-propionyl)-triméthylène-diamine,
   - N,N'-bis-(di-tertiobutyl-3,5 hydroxy-4 phényl-propionyl)-hydrazine.

2. Absorbeurs de rayons ultra-violets et stabilisants à la lumière
2.1. (Hydroxy-2' phényl)-2 benzotriazoles, par exemple les dérivés:
   - méthyl-5',
   - di-tertiobutyl-3',5',
   - tertiobutyl-5',
   - (tétraméthyl-1,1,3,3 butyl)-5',
   - chloro-5 ditertiobutyl-3',5',
   - chloro-5 tertiobutyl-3' méthyl-5',
   - sec-butyl-3' tertiobutyl-5',
   - octyloxy-4' di-tertiopentyl-3',5',
   - bis-(α,α-diméthylbenzyl)-3',5'.
2.2. Hydroxy-2 benzophénones, telles que les dérivés :
   - hydroxy-4,
   - méthoxy-4,
   - octyloxy-4,
   - décyloxy-4,
   - dodécyloxy-4,
   - benzyloxy-4,
   - trihydroxy-4,2',4',
   - hydroxy-2' diméthoxy-4,4'.
2.3. Esters d'acides benzoïques éventuellement substitués, tels que :
   - salicylate de tertiobutyl-4 phényle,
   - salicylate de phényle,
   - salicylate d'octylphényle,
   - dibenzoyl-résorcinol,
   - bis-(tertiobutyl-4 benzoyl)-résorcinol,
   - benzoyl-résorcinol,
   - di-tertiobutyl-3,5 hydroxy-4 benzoate de di-tert-butyl-2,4 phényle,
   - di-tertiobutyl-3,5 hydroxy-4 benzoate d'hexadécyle.
2.4. Esters acryliques, tels que :
   - α-cyano-β,β-diphénylacrylate d'éthyle ou d'iso-octyle,
   - α-méthoxycarbonyl-cinnamate de méthyle,
   - α-cyano-β-méthyl-p-méthoxy-cinnamate de méthyle ou de butyle,
   - α-méthoxycarbonyl-p-méthoxy-cinnamate de méthyle,
   - N-(β-méthoxycarbonyl-β-cyanovinyl) méthyl-2 indoline.
2.5. Composés du nickel, tels que :
   - complexes du nickel dérivant du thio-2,2' bis-[(tétraméthyl-1,1,3,3 butyl)-4 phénol], par exemple le complexe 1:1 ou le complexe 1:2, éventuellement avec d'autres coordinats, tels que la n-butylamine, la triéthanolamine ou la N-cyclohexyldiéthanolamine,
   - dibutyl-dithiocarbamate de nickel,
   - sels de nickel de mono-esters alkyliques de l'acide (hydroxy-4 di-tertiobutyl-3,5 benzyl)-phosphonique, tels que les esters méthylique et éthylique,
   - complexes du nickel dérivant de cétoximes, tels que le complexe du nickel dérivant de l'oxime du dodécanoyl-l hydroxy-2 méthyl-4 benzène,
   - complexes du nickel du phényl-l lauroyl-4 hydroxy-5 pyrazole, éventuellement avec des coordinats supplémentaires.
2.6. Oxalamides, tels que :
   - bis-octyloxy-4,4' oxalanilide,
   - bis-octyloxy-2,2'di-tertiobutyl-5,5' oxalanilide,
   - bis-dodécyloxy-2,2' di-tertiobutyl-5,5' oxalanilide,
   - éthoxy-2 éthyl-2' oxalanilide,
   - N,N'-bis-(diméthylamino-3 propyl)-oxalamide,
   - éthoxy-2 tertiobutyl-5 éthyl-2' oxalanilide,
   - mélanges de ce dernier avec l'éthoxy-2 éthyl-2' di-tertiobutyl-5,4' oxalanilide,
   - mélanges de diméthoxy-2,2' et -4,4' oxalanilides ainsi que de diéthoxy-2,2' et -4,4' oxalanilides.
3. Désactivants de métaux, tels que :
   - N,N'-diphényl-oxalamide,
   - N-salicylidène-N'-salicyloyl-hydrazine,
   - N'-bis-salicyloyl-hydrazine,
   - N,N'-bis-(di-tertiobutyl-3,5 hydroxy-4 phényl-propionyl)-hydrazine,
   - salicyloylamino-3 triazole-1,2,4,
   - bis-(benzylidène-hydrazide) de l'acide oxalique.
4. Phosphites et phosphonites, tels que :
   - phosphite de triphényle,
   - phosphites de diphényle et d'alkyles,
   - phosphites de dialkyles et de phényle,
   - phosphite de tris-(nonylphényle),
   - phosphite de trilauryle,
   - phosphite de trioctadécyle,
   - bis-stéaryloxy-3,9 tétra-oxa-2,4,8,10 diphospha-3,9 spiro [5.5] undécane,
   - phosphite de tris-(di-tertiobutyl-2,4 phényle),
   - bis-isodécyloxy-3,9 tétraoxa-2,4,8,10 diphospha-3,9 spiro [5.5] undécane,
   - bis-(di-tertiobutyl-2,4 phénoxy)-3,9 tétraoxa-2,4,8,10 diphospha-3,9 spiro [5.5] undécane,
   - triphosphite de sorbitol tristéarylé,
   - biphénylylène-4,4' diphosphonite de tétrakis-(di-tertiobutyl-2,4 phényle).
5. Composés destructeurs de peroxydes, tels que :
   - esters de l'acide β-thiodipropionique, tels que les esters laurylique, stéarylique, myristylique et tridécylique,
   - sel de zinc du mercapto-2 benzimidazole,
   - dibutyl-dithiocarbamate de zinc,
   - disulfure de dioctadécyle,
   - tétrakis-(dodécylthio-3 propionate) du pentaérythrol.
6. Stabilisants de polyamides, tels que :
   - sels de cuivre associés à des iodures et/ou à des composés du phosphore,
   - sels du manganèse divalent.
7. Co-stabilisants basiques, tels que :
   - mélamine,
   - polyvinylpyrrolidone,
   - cyanoguanidine,
   - cyanurate de triallyle,
   - dérivés de l'urée,
   - dérivés de l'hydrazine,
   - amines,
   - polyamides,
   - polyuréthannes,
   - sels de métaux alcalins ou de métaux alcalino-terreux d'acides gras supérieurs, tels que le stéarate de calcium, le stéarate de zinc, le stéarate de magnésium, le ricinoléate de sodium ou le palmitate de potassium,
   - pyrocatécholate d'antimoine,
   - pyrocatécholate d'étain.
8. Agents de nucléation, tels que :
   - acide tertiobutyl-4 benzoïque,
   - acide adipique,
   - acide diphényl-acétique.
9. Charges et agents de renforcement, tels que :
   - carbonate de calcium,
   - silicates,
   - fibres de verre,
   - amiante,
   - talc,
   - kaolin,
   - mica,
   - sulfate de baryum,
   - oxydes et hydroxydes de métaux,
   - noir de carbone et graphite.
10. Autres additifs, tels que par exemple :
   - plastifiants,
   - lubrifiants,
   - émulsionnants,
   - pigments,
   - azurants optiques,
   - ignifugeants,
   - antistatiques et porogènes.

Les compositions de polymères ainsi stabilisées peuvent être appliquées sous les formes les plus variées, par exemple sous la forme d'objets moulés, de feuilles, de fibres, de matériaux cellulaires (mousses), de profilés ou de produits de revêtement, ou comme feuillogènes (liants) pour peintures, vernis, colles ou ciments.

Les exemples suivants illustrent la présente invention.

### EXEMPLE 1 : Préparation de composé de formule (I) dans laquelle :

- p = 0
- R₂ = -(CH₂)₃-
- Z = -O-
- R₃ = -CH₃

### A) Préparation de pentaméthyl-1,2,2,6,6 allyloxy-4 pipéridine

On dissout 85,5 g (0,5 mole) de pentaméthyl-1,2,2,6,6 hydroxy-4 pipéridine dans 200 cm³ de toluène.

On chauffe à 100°C et on ajoute progressivement sous agitation, 11,5 g de sodium métal (0,5 mole) en 1 h 30.

La température de 100°C et l'agitation sont maintenues pendant encore 20 heures, de manière à faire réagir la quasi totalité du sodium. Ensuite on coule en 15 min (à 100°C) une solution de 60,5 g (0,5 mole) de bromure d'allyle dans 50 cm³ de toluène. On laisse réagir 3 h 30 à la température de reflux du toluène, puis on ajoute 30 cm³ d'éthanol afin d'éliminer toute trace de sodium métal.

On filtre et lave le précipité de bromure de sodium par du toluène. La solution toluénique est concentrée à l'aide d'un évaporateur rotatif et on obtient ainsi 104,9 g d'une masse organique brute. Ce produit brut est lavé à l'eau afin d'éliminer la pentaméthyl-1,2,2,6,6 hydroxy-4 pipéridine n'ayant pas réagi. Le produit brut est alors purifié par distillation fractionnée. On obtient 68,5 g (rendement de 65 %) de pentaméthyl-1,2,2,6,6 allyloxy-4 pipéridine pure (point d'ébullition sous une pression de 133 Pa : 110°C environ ; structure confirmée par résonance magnétique nucléaire).

### B) Préparation du composé de formule (I)

Dans un ballon tricol en verre de 50 cm³, muni d'une agitation centrale, d'une gaine thermométrique, d'un système d'introduction au moyen d'un pousse-seringue et d'un réfrigérant surmonté d'un ciel d'azote, on charge :
- 4,22 g (19,95 mmol) de pentaméthyl-1,2,2,6,6 allyloxy-4 pipéridine préparée en A ;
- 25 cm³ de toluène ;
- 4µl d'une solution dans l'hexane d'un catalyseur au platine (catalyseur dit "de KARSTED"), contenant environ 5 % en poids de Pt métal.

On coule en 55 min, dans le mélange précédent maintenu à 95 - 100°C :
- 4,6 g d'une huile hydrogénosiloxanique de formule (II) : 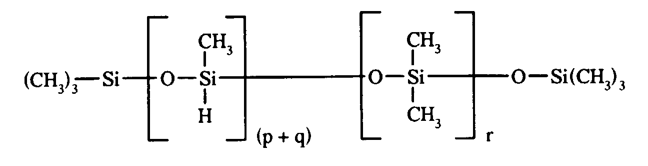
avec les valeurs moyennes suivantes :
p + q = 11,3
r = 42
ayant un titre de 290 milliéquivalents de fonction ≡Si-H pour 100 g (dosage volumétrique pour une solution titrée de potasse dans le butanol).

On laisse réagir à 95°C en suivant la disparition des fonctions ≡Si-H ; cette disparition est complète après 23 heures de réaction.

Le mélange réactionnel est ensuite chauffé à 100°C sous une pression de 67 Pa pendant 1 heure, afin d'éliminer les produits volatils.

On obtient ainsi 8 g d'une huile limpide, assez fluide et légèrement colorée en jaune.

Une analyse en RMN (résonance magnétique nucléaire) confirme la structure attendue.

### Formule statistique moyenne :

formule (I) avec p = 0,
q = 11,3
r = 42.

### EXEMPLE 2 : Préparation de composé de formule (I) dans laquelle :

- p = 0
- R₂ = 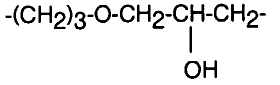
- Z = -NH-
- R₃ = H

Dans un ballon tricol en verre de 50 cm³, muni d'une agitation centrale, d'une gaine thermométrique, d'une ampoule de coulée et d'un réfrigérant surmonté d'un ciel d'azote, on charge 12,2 g (78 mmol) d'amino-4 tétraméthyl-2,2,6,6 pipéridine.

On chauffe à 100°C et on coule en 25 min, sous agitation et en maintenant la température à 100 - 105°C, 10 g d'une huile organosiloxanique de formule (V) : 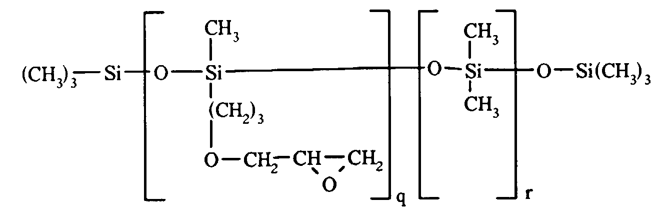 dans laquelle :
- la valeur moyenne de q est de 9
- la valeur moyenne de r est de 7,5
et qui titre 391 milliéquivalents de fonction époxyde pour 100 g.

Cette huile organosiloxanique est préparée selon le mode opératoire de l'exemple 1A, par réaction entre les fonctions ≡Si-H du composé organosiloxanique de formule (Il) correspondant et de l'allyloxy-3 époxy-1,2 propane.

Après 3 heures de réaction à 100°C, la totalité des fonctions époxydes a réagi avec l'amino-4 tétraméthyl-2,2,6,6 pipéridine. Le mélange réactionnel est chauffé à 130 - 140°C sous une pression de 67 Pa, afin de distiller l'excès d'amino-4 tétraméthyl2,2,6,6 pipéridine engagée.

Le composé obtenu est très visqueux et pèse 16,2 g.

Les analyses par IR et RMN montrent que l'on a la structure attendue et en particulier que seule la fonction amine primaire de l'amino-4 tétraméthyl-2,2,6,6 pipéridine a réagi avec les fonctions époxydes.

### Formule statistique moyenne :

formule (I) avec p = 0
q = 9
r = 7,5.

### EXEMPLE 3 : Préparation de composé de formule (I) dans laquelle :

- p = 0
- q = 63,3
- r = 0
- R₂ = -(CH₂)₃-
- Z = -O-
- R₃ = CH₃

### A) Préparation d'hydroxy-4 pentaméthyl-1,2,2,6,6 pipéridine

Dans un ballon tétracol en verre de 2 000 cm³, muni d'une agitation centrale, d'une gaine thermométrique, d'un réfrigérant surmonté d'un ciel d'azote et d'une ampoule de coulée, on charge 314 g (2 mol) d'hydroxy-4 tétraméthyl-2,2,6,6 pipéridine et on agite lentement sous atmosphère d'azote. On refroidit à 18 - 20°C.

On coule alors en 1 heure 276 g (6 mol) d'acide formique, en maintenant la température au dessous de 20°C, puis on laisse encore 1 h 30 sous agitation.

On coule enfin en 45 min, à température ambiante, 422 cm³ (5,2 mol) d'une solution aqueuse à 37 % en poids par volume de formaldéhyde et on laisse sous agitation jusqu'à obtention d'un milieu homogène (1 h).

On maintient le mélange réactionnel sous agitation pendant 7 h à 78°C.

On ajuste le pH du mélange réactionnel à 11,9, après refroidissement à 20°C, à l'aide d'une solution aqueuse de potasse à 38 %.

L'hydroxy-4 pentaméthyl-1,2,2,6,6 pipéridine précipite ; on la dissout et l'extrait à l'aide d'éther éthylique ; on sèche la solution éthérée sur sulfate de sodium anhydre, on filtre et on concentre à l'évaporateur rotatif.

On récupère ainsi un solide qui est grossièrement concassé et que l'on finit de sécher sous pression réduite à température ambiante.

On obtient finalement 299,6 g (rendement de 87 %) d'hydroxy-4 pentaméthyl-1,2,2,6,6 pipéridine pure :
- point de fusion : 72°C
- structure confirmée par RMN du proton
- pureté confirmée par chromatographie en phase vapeur.

### B) Préparation de pentaméthyl-1,2,2,6,6 allyloxy-4 pipéridine

Dans un ballon tricol en verre de 1 000 cm³, muni d'une agitation centrale, d'une gaine thermométrique, d'un réfrigérant surmonté d'un ciel d'azote et d'une ampoule de coulée, on charge :
- 171 g (1,1 mol) d'hydroxy-4 pentaméthyl-1,2,2,6,6 pipéridine obtenu dans A,
- 255,5 g (3,34 mol) de chlorure d'allyle
- 78,5 g (1,962 mol) de soude broyée
- 1,67 g (5,2 x 10⁻³ mol) de bromure de tétrabutylammonium.

On agite vigoureusement et on chauffe à reflux pendant 8 h (50°C).

On refroidit le mélange réactionnel, on ajoute 400 cm³ d'eau et on sépare 2 phases.

On extrait la phase aqueuse par 100 cm³ de toluène puis on réunit les 2 phases organiques en une seule phase, à laquelle on rajoute 200 cm³ de toluène.

Cette phase organique est lavée 2 fois à l'eau, séchée sur sulfate de sodium et filtrée.

On la concentre à l'évaporateur rotatif à 45°C sous 650 Pa.

On récupère ainsi 275 g d'une masse organique brute, que l'on purifie par distillation fractionnée.

On obtient 200 g (rendement de 94 %) de pentaméthyl-1,2,2,6,6 allyloxy-4 pipéridine pure :
- point d'ébullition : 88°C sous 130 Pa
- structure confirmée par RMN du proton
- pureté confirmée par chromatographie en phase vapeur.

### C) Préparation du composé de formule (I)

Dans un ballon tétracol en verre de 100 cm³, muni d'une agitation centrale, d'une gaine thermométrique, d'un système d'introduction au moyen d'un pousse-seringue et d'un réfrigérant surmonté d'un ciel d'azote, on charge :
- 33,97 g (161 mol) de pentaméthyl-1,2,2,6,6 allyloxy-4 pipéridine préparée en B ;
- 2,7 µl d'une solution dans l'hexane d'un catalyseur au platine (catalyseur dit "de KARSTED"), contenant environ 9,05 % en poids de Pt métal.

On injecte à l'aide du pousse-seringue en 1 h 30 min, dans le mélange précédent maintenu à 100°C :
- 8 g d'une huile hydrogénosiloxanique de formule (Il) 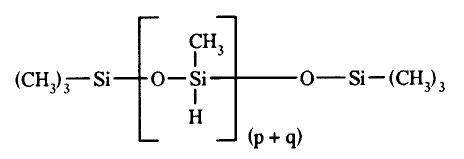 ayant un titre de 1609,25 milliéquivalents de fonction ≡Si-H pour 100 g (dosage volumétrique pour une solution titrée de potasse dans le butanol).

On injecte à nouveau 0,7 µl de catalyseur "KARSTED" et on laisse réagir à 100°C en suivant la disparition des fonctions ≡Si-H ; cette disparition est complète après 9 h de réaction.

Le mélange réactionnel est ensuite chauffé à 125 - 230°C sous une pression de 70 Pa pendant 2 h, afin d'éliminer les produits volatils.

On obtient ainsi 33 g d'une huile limpide, très visqueuse et légèrement colorée en jaune, dont la teneur en fonction pipéridinyle est de 364 meq/100 g.

Une analyse en RMN confirme la structure attendue.

### EXEMPLE 4 : Photostabilisation du polypropylène

Dans un mélangeur lent, on prépare les 3 compositions en poudre A, B et C suivantes :

| COMPOSITIONS | A | B | C |
|---|---|---|---|
| Polypropylène HIMONT PROFAX 6501 | 100 g | 100 g | 100 g |
| Téréphtalate de 2,2-méthylène bis(méthyl-4 tertiobutyl-6 phényle) | 0,1 g | 0,1 g | 0,1 g |
| Composé de formule (I) préparé dans l'exemple 1B | 0 | 0,15 g | 0,30 g |

Ces 3 compositions sont malaxées sur mélangeur à cylindres de marque LESCUYER, à 180°C et les feuilles obtenues sont pressées à 190°C sur une presse à plateaux en films de 200 µm d'épaisseur.

Ces films sont exposés dans une enceinte de vieillissement accéléré, équipée d'un tube fluorescent émettant entre 290 et 400 nm, avec un maximum d'environ 360 nm, commercialisé par la Société OSRAM sous la référence L 40 W 70. La stabilité du flux énergétique dans le temps est contrôlée tout au long de l'essai. La température de l'enceinte est de 35°C.

Le vieillissement des films est suivi par spectrométrie Infra-rouge : la densité optique de la bande carbonyle à 1720 - 1740 cm⁻¹ traduit le degré de photooxydation du matériau polymérique.

Les résultats suivants sont obtenus (voir tableau I).

**Tableau I**

| Durée de Vieillissement | Densité optique des compositions | | |
|---|---|---|---|
| | A | B | C |
| 300 h | 0,15 | 0,10 | 0,10 |
| 400 h | 0,72 | 0,12 | 0,15 |
| 600 h | 1,00 | 0,12 | 0,15 |
| | (échantillon cassant) | | |
| 1200 h | -- | 0,15 | 0,18 |
| 1800 h | -- | 0,15 | 0,38 |

La comparaison de l'évolution de la composition A (témoin) et des compositions B et C (selon l'invention) montre l'effet photostabilisant des produits de l'invention.

### EXEMPLE 5 : Photostabilisation du polypropylène basse densité linéaire (PEBDL)

En opérant comme dans l'exemple 4, on compare la stabilité photochimique des compositions D, E, F suivantes :

| COMPOSITIONS | D | E | F |
|---|---|---|---|
| PEBDL (NATENE LL 101 AP) | 100 g | 100 g | 100 g |
| Téréphtalate de 2,2-méthylène bis(méthyl-4 tertiobutyl-6 phényle) | 0,05 g | 0,05 g | 0,05 g |
| Composé de formule (I) préparé dans l'exemple 1B | 0 | 0,15 g | 0,30 g |

Les résultats obtenus sont les suivants (tableau Il)

**Tableau II**

| Durée de Vieillissement | Densité optique des compositions | | |
|---|---|---|---|
| | D | E | F |
| 300 h | 0,12 | 0,05 | 0,03 |
| 400 h | 0,50 | 0,07 | 0,03 |
| 600 h | 0,77 | 0,08 | 0,03 |
| 900 h | 1,00 | 0,09 | 0,04 |
| | (échantillon cassant) | | |
| 1200 h | -- | 0,10 | 0,07 |
| 1800 h | -- | 0,12 | 0,07 |

La comparaison de l'évolution de la composition D (témoin) et des compositions E et F (selon l'invention) montre l'effet photostabilisant des produits de l'invention.

### EXEMPLE 6 : Photostabilisation du polypropylène

Dans un mélangeur lent, on prépare les 4 compositions en poudre Q, R, S et T suivantes :

**Tableau III**

| COMPOSITIONS | Q | R | S | T |
|---|---|---|---|---|
| Polypropylène HIMONT PROFAX 6501 | 100 g | 100 g | 100 g | 100 g |
| Téréphtalate de 2,2-méthylène bis(méthyl-4 tertiobutyl-6 phényle) | 0,1 g | 0,1 g | 0,1 g | 0,1 g |
| Anti-UV CHIMASSORB 944 | 0 | 0,5 meq* | 0 | 0 |
| Anti-UV TINUVIN 622 ** | 0 | 0 | 0,5 meq* | 0 |
| Composé de formule (I) préparé dans l'exemple 1B | 0 | 0 | 0 | 0,5 meq* |

| | | | | |
|---|---|---|---|---|
| * meq = milliéquivalent en fonction tétraméthyl-2,2,6,6 pipéridinyle | | | | |
| ** anti-UV commercial de formule : | | | | |

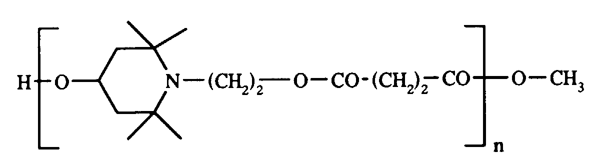

n > 1.

Ces 4 compositions sont malaxées sur mélangeur à cylindres de marque LESCUYER, à 180°C et les feuilles obtenues sont pressées à 210°C sur une presse à plateaux en films de 200 µm d'épaisseur.

Ces films sont exposés en atmosphère sèche dans une enceinte de vieillissement accéléré, équipée d'un tube fluorescent émettant entre 290 et 400 nm, avec un maximum d'environ 360 nm, commercialisé par la Société OSRAM sous la référence L 40 W 70. La stabilité du flux énergétique dans le temps est contrôlée tout au long de l'essai. La température de l'enceinte est de 35°C.

Le vieillissement des films est suivi par spectrométrie Infra-rouge : la densité optique de la bande carbonyle à 1720 - 1740 cm⁻¹ traduit le degré de photooxydation du matériau polymérique.

Les résultats suivants sont obtenus (voir tableau IV).

**Tableau IV**

| Durée de Vieillissement | Densité optique des compositions | | | |
|---|---|---|---|---|
| | Q | R | S | T |
| 0 h | 0,07 | 0,02 | 0,11 | 0,09 |
| 280 h | 0,15 | 0,02 | 0,11 | 0,12 |
| 400 h | 0,72 | 0,02 | 0,11 | 0,13 |
| 600 h | 1,00* | 0,02 | 0,11 | 0,13 |
| 1000 h | > 1,00 | 0,02 | 0,11 | 0,14 |
| 1360 h | > 1,00 | 0,23 | 0,12 | 0,15 |
| 1500 h | > 1,00 | 0,49 | 0,13 | 0,15 |
| 2000 h | > 1,00 | 0,60 | 0,25 | 0,15 |

| | | | | |
|---|---|---|---|---|
| * échantillon cassant | | | | |

La comparaison de l'évolution des compositions Q (témoin), S et R (stabilisées avec des anti-UV polymériques commerciaux très largement utilisés) et de la composition T (selon l'invention) montre la meilleure efficacité des produits de l'invention, à teneur équivalente en fonction tétraméthyl-2,2,6,6 pipéridinyle.

### EXEMPLE 7: Photostabilisation du polypropylène basse densité linéaire (PEBDL)

Dans un mélangeur lent, on prépare les 4 compositions en poudre U, V, W et X suivantes :

**Tableau V**

| COMPOSITIONS | U | V | W | X |
|---|---|---|---|---|
| PEBDL INOVEX LL 0209 AP (Sté B.P.) | 100 g | 100 g | 100 g | 100 g |
| Téréphtalate de 2,2-méthylène bis(méthyl-4 tertiobutyl-6 phényle) | 0,1 g | 0,1 g | 0,1 g | 0,1g |
| Anti-UV CHIMASSORB 944 | 0 | 0,5 meq* | 0 | 0 |
| Anti-UV TINUVIN 622 | 0 | 0 | 0,5 meq* | 0 |
| Composé de formule (I) préparé dans l'exemple 1B | 0 | 0 | 0 | 0,5 meq* |

| | | | | |
|---|---|---|---|---|
| * meq = milliéquivalent en fonction tétraméthyl-2,2,6,6 pipéridinyle | | | | |

Ces 4 compositions sont malaxées sur mélangeur à cylindres de marque LESCUYER, à 120°C et les feuilles obtenues sont pressées à 210°C sur une presse à plateaux en films de 200 µm d'épaisseur.

Ces films sont exposés en atmosphère sèche dans une enceinte de vieillissement accéléré, équipée d'un tube fluorescent émettant entre 290 et 400 nm, avec un maximum d'environ 360 nm, commercialisé par la Société OSRAM sous la référence L 40 W 70. La stabilité du flux énergétique dans le temps est contrôlée tout au long de l'essai. La température de l'enceinte est de 35°C.

Le vieillissement des films est suivi par spectrométrie Infra-rouge : la densité optique de la bande carbonyle à 1720 - 1740 cm⁻¹ traduit le degré de photooxydation du matériau polymérique.

Les résultats suivants sont obtenus (voir tableau VI).

**Tableau VI**

| Durée de Vieillissement | Densité optique des compositions | | | |
|---|---|---|---|---|
| | U | V | W | X |
| 0h | 0,02 | 0,02 | 0,16 | 0,03 |
| 280 h | 0,12 | 0,05 | 0,16 | 0,03 |
| 400 h | 0,50 | 0,06 | 0,17 | 0,03 |
| 600 h | 0,77 | 0,06 | 0,17 | 0,03 |
| 1000 h | 1,00 * | 0,08 | 0,16 | 0,05 |
| 1360 h | > 1,00 | 0,10 | 0,15 | 0,07 |
| 1500 h | > 1,00 | 0,10 | 0,16 | 0,07 |
| 2000 h | > 1,00 | 0,30 | 0,25 | 0,08 |

| | | | | |
|---|---|---|---|---|
| * échantillon cassant | | | | |

La comparaison de l'évolution des compositions U (témoin), V et W (stabilisées avec des anti-UV polymériques commerciaux très largement utilisés) et de la composition X (selon l'invention) montre la meilleure efficacité des produits de l'invention, à teneur équivalente en fonction tétraméthyl-2,2,6,6 pipéridinyle.

### EXEMPLE 8 : Photostabilisation du polypropylène

Dans un mélangeur lent, on prépare les 3 compositions en poudre YA, YB et YC suivantes :

**Tableau VII**

| COMPOSITIONS | YA | YB | YC |
|---|---|---|---|
| Polypropylène NESTE VD 2001 | 100 g | 100 g | 100 g |
| Antioxydant IRGANOX 1076** | 0,1 g | 0,1 g | 0,1 g |
| Anti-UV CHIMASSORB 944 | 0 | 0,5 meq* | 0 |
| Composé de formule (I) préparé dans l'exemple 2 | 0 | 0 | 0,5 meq* |

| | | | |
|---|---|---|---|
| * meq = milliéquivalent en fonction tétraméthyl-2,2,6,6 pipéridinyle | | | |
| ** (ditertiobutyl-3,5 hydroxy-4 phényl)-3 propionate d'octadécyle. | | | |

Ces 3 compositions sont malaxées sur mélangeur à cylindres de marque LESCUYER, à 180°C et les feuilles obtenues sont pressées à 210°C sur une presse à plateaux en films de 200 µm d'épaisseur.

Ces films sont exposés en atmosphère à 50 % d'humidité relative dans une enceinte de vieillissement accéléré, équipée d'un tube fluorescent de type B émettant entre 275 et 400 nm, avec un maximum d'environ 312 nm. La stabilité du flux énergétique dans le temps est contrôlée tout au long de l'essai. La température de l'enceinte est de 55°C.

Le vieillissement des films est suivi par spectrométrie Infra-rouge : la densité optique de la bande carbonyle à 1720 - 1740 cm⁻¹ traduit le degré de photooxydation du matériau polymérique.

Les résultats suivants sont obtenus (voir tableau VIII).

**Tableau VIII**

| Durée de Vieillissement | Densité optique des compositions | | |
|---|---|---|---|
| | YA | YB | YC |
| 0h | 0,03 | 0,07 | 0,03 |
| 24 h | 0,15 | 0,07 | 0,03 |
| 48 h | 0,59 | 0,07 | 0,03 |
| 100h | 1,00 * | 0,07 | 0,04 |
| 150 h | > 1,00 | 0,14 | 0,07 |
| 190 h | > 1,00 | 0,16 | 0,08 |
| 240 h | > 1,00 | 0,30 | 0,08 |
| 320 h | > 1 ,00 | 1,00 * | 0,09 |
| 385 h | > 1,00 | > 1,00 | 0,12 |
| 430 h | > 1,00 | > 1,00 | 0,35 |

| | | | |
|---|---|---|---|
| * échantillon cassant | | | |

La comparaison de l'évolution des compositions YA (témoin) et YB (stabilisée avec un anti-UV polymérique commercial très largement utilisé) et de la composition YC (selon l'invention) montre la meilleure efficacité des produits de l'invention, à teneur équivalente en fonction tétraméthyl-2,2,6,6 pipéridinyle.

## Revendications (Revendications pour l'(les) Etat(s) contractant(s) suivant(s): AT, BE, CH, DE, FR, GB, GR, LI, LU, NL, SE)

1. Composés de formule générale (I) 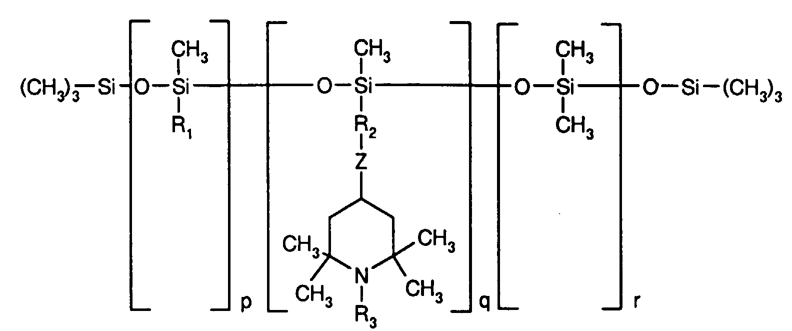 dans laquelle :
- les différents motifs sont répartis de manière statistique dans la chaîne ;
- p et r représentent des nombres égaux ou supérieurs à 0 ;
- q représente un nombre supérieur à 0 ;
- la somme de p, q et r est supérieure ou égale à 5 ;
- R₁ représente :
. un radical de formule -(CH₂)ₙ-COO-R₄ dans laquelle n représente un nombre de 5 à 20 et R₄ représente un radical alkyle de 1 à 12 atomes de carbone ;
. un radical de formule -(CH₂)ₘ-OR₅ dans laquelle m représente un nombre de 3 à 10 et R₅ représente un atome d'hydrogène, un enchaînement oxyde d'éthylène, un enchaînement oxyde de propylène ou un radical acyle ayant de 2 à 12 atomes de carbone ;
- R2 représente un radical organique divalent choisi parmi :
. les radicaux alkylènes, linéaires ou ramifiés, ayant de 2 à 18 atomes de carbone ;
. les radicaux alkylène-carbonyle dont la partie alkylène, linéaire ou ramifiée, comporte 2 à 20 atomes de carbone ;
. les radicaux alkylène-cyclohexylène dont la partie alkylène, linéaire ou ramifiée, comporte 2 à 12 atomes de carbone et la partie cyclohexylène comporte un groupement -OH et éventuellement 1 ou 2 radicaux alkyles ayant de 1 à 4 atomes de carbone ;
. les radicaux de formule -R₆-O-R₇- dans laquelle les radicaux R₆ et R₇, identiques ou différents, représentent des radicaux alkylènes ayant 1 à 12 atomes de carbone ;
. les radicaux de formule -R₆-O-R₇- dans laquelle R₆ et R₇ ont les significations indiquées précédemment et l'un d'entre eux ou les deux sont substitués par un ou deux groupements -OH ;
. les radicaux de formules -R₆-COO-R₇- et -R₆-OCO-R₇- dans lesquelles R₆ et R₇ ont les significations précédentes ;
. les radicaux de formule -R₆-O-R₇-O-CO-R₈- dans laquelle R₆, R₇ et R₈, identiques ou différents, représentent des radicaux alkylènes ayant 2 à 12 atomes de carbone et le radical R₇ est substitué par un groupement hydroxyle ;
- R₃ représente un atome d'hydrogène ou un radical alkyle, linéaire ou ramifié, ayant de 1 à 12 atomes de carbone ;
- Z représente -O- ou -NR₉-, R₉ ayant les significations indiquées pour R₃ ; à l'exclusion des produits de formule : 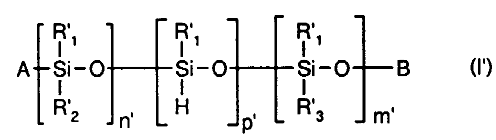 dans laquelle :
- R'₁ et R'₃ qui peuvent être identiques ou difféents, sont des radicaux alkyles linéaires ou ramifiés en C₁ - C₁₀, des radicaux cycloaliphatiques en C₅ - C₁₁ ou des radicaux phényle ;
- R'₂ est un radical choisi parmi ceux correspondant à la formule générale : 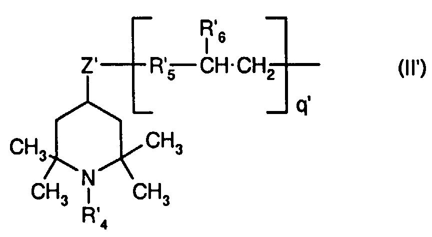 dans laquelle :
R'₄ est un hydrogène ou méthyle ou un benzyle,
R'₅ est un radical alkyle linéaire ou ramifié en C₁ - C₇
R'₆ est un atome d'hydrogène ou un méthyle
Z' est un groupe choisi parmi -O-: 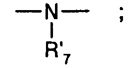 (où R'₇ est un groupe alkyle linéaire ou ramifié en C₁ - C₅ ou un hydrogène) ;
q' est zéro ou un ;
- n' est un nombre entier autre 0 ;
- m' et p', qui peuvent être identiques ou différents, sont zéro ou des nombres entiers avec la condition que n' + p' + m' soit inférieur ou égal à 50 ;
- A est un groupe correspondant à la formule : 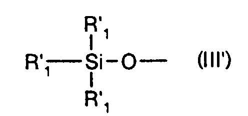 où R'₁ a la signification ci-dessus ;
- B est un groupe correspondant à la formule : 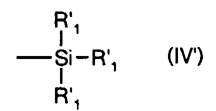 où R'₁ a la signification mentionnée ci-dessus ;
- ou A et B représentent conjointement une liaison directe engendrant une structure cyclique.

2. Composés de formule (I) selon la revendication 1, dans laquelle :
- p représente un nombre de 0 à 100 ;
- r représente un nombre de 0 à 100;
- q représente un nombre de 3 à 100
- la somme de p et de r est un supérieure à 0 ;
- la somme de p, q et r est supérieure ou égale à 10;
- R₁ représente :
. un radical de formule -(CH₂)₁₀-COOR₄ dans laquelle R₄ représente un radical alkyle de 1 à 6 atomes de carbone ;
. un radical de formule -(CH₂)₃-OR₅ dans laquelle R₅ représente un atome d'hydrogène, un enchaînement oxyde d'éthylène, un enchaînement oxyde de propylène ou un groupement acyle ayant de 2 à 6 atomes de carbone ;
- R₂ représente un radical hydrocarboné divalent choisi parmi :
. les radicaux alkylènes, linéaires ou ramifiés, ayant de 3 à 12 atomes de carbone ;
. les radicaux alkylène-carbonyle dont la partie alkylène, linéaire ou ramifiée, comporte 2 à 12 atomes de carbone ;
. les radicaux alkylène-cyclohexylène dont la partie alkylène, linéaire ou ramifiée, comporte de 2 à 6 atomes de carbone et la partie cyclohexylène comporte un groupement -OH et éventuellement 1 ou 2 substituants alkyles ayant 1 à 4 atomes de carbone ;
. les radicaux de formule -R₆-O-R₇- dans laquelle les radicaux R₆ et R₇, identiques ou différents, représentent des radicaux alkylènes ayant 2 à 6 atomes de carbone ;
. les radicaux de formule -R₆-O-R₇- dans laquelle R₆ et R₇ ont les significations indiquées précédemment et R₇ est substitué par un groupe OH ;
. les radicaux de formules -R₆-COO-R₇- et -R₆-OCOR₇- dans lesquelles R₆ et R₇ ont les significations précédentes ;
. les radicaux de formule -R₆-O-R₇-O-CO-R₈- dans laquelle R₆, R₇ et R₈, identiques ou différents, représentent des radicaux alkylènes ayant 2 à 6 atomes de carbone et le radical R₇ est substitué par un groupement hydroxyle ;
- R₃ représente un atome d'hydrogène ou un radical alkyle, linéaire ou ramifié, ayant de 1 à 6 atomes de carbone ;
- Z représente -O- ou -NR₉-, R₉ représentant un atome d'hydrogène ou un radical alkyle ayant 1 à 6 atomes de carbone.

3. Composés de formule (I) selon la revendication 1, dans laquelle :
- p représente un nombre de 5 à 55 ;
- r représente un nombre de 0 à 40 ;
- q représente un nombre de 5 à 54,5
- la somme de p, q et r est un nombre de 10 à 100 ;
- R₁ représente :
. un radical de formule -(CH₂)₁₀-COO-R₄ dans laquelle R₄ représente un radical alkyle de 1 à 6 atomes de carbone ;
. un radical de formule -(CH₂)₃-OR₅ dans laquelle R₅ représente un atome d'hydrogène, un enchaînement oxyde d'éthylène, un enchaînement oxyde de propylène ou un groupement acyle ayant de 2 à 6 atomes de carbone ;
- R2 représente un radical hydrocarboné choisi parmi :
. les radicaux alkylènes, linéaires ou ramifiés, ayant de 3 à 12 atomes de carbone ;
. le radical -(CH₂)₁₀-CO- ;
. les radicaux alkylène-cyclohexylène dont la partie alkylène, linéaire ou ramifiée, comporte 2 à 6 atomes de carbone et la partie cyclohexylène comporte un groupement -OH et éventuellement 1 ou 2 substituants alkyles ayant 1 à 4 atomes de carbone ;
. les radicaux de formule -R₆-O-R₇- dans laquelle les radicaux R₆ et R₇, identiques ou différents, représentent des radicaux alkylènes ayant 2 à 6 atomes de carbone ;
. les radicaux de formule -R₆-O-R₇- dans laquelle R₆ et R₇ ont les significations indiquées précédemment et R₇ est substitué par un groupe OH ;
. les radicaux de formules -R₆-COO-R₇- et -R₆-OCOR₇- dans lesquelles R₆ et R₇ ont les significations précédentes ;
. les radicaux de formule -R₆-O-R₇-O-CO-R₈- dans laquelle R₆, R₇ et R₈, identiques ou différents, représentent des radicaux alkylènes ayant 2 à 6 atomes de carbone et le radical R₇ est substitué par un groupement hydroxyle ;
- R₃ représente un atome d'hydrogène ou un radical alkyle, linéaire ou ramifié, ayant de 1 à 6 atomes de carbone ;
- Z représente -O- ou -NR₉-, R₉ représentant un atome d'hydrogène ou un radical alkyle ayant 1 à 6 atomes de carbone.

4. Composés de formule (I) selon la revendication 1, dans laquelle :
- p représente un nombre de 5 à 30 ;
- r représente un nombre de 0 à 40 ;
- q représente un nombre de 5 à 54,5 ;
- la somme de p, q et r est un nombre de 10 à 100 ;
- R₁ représente :
. un radical décaméthylène-carboxylate de méthyle ou d'éthyle ;
- R₂ représente :
. un radical triméthylène ;
. un radical décaméthylène-carbonyle;
. un radical hydroxy-2 oxa-4 heptaméthylène ;
. un radical hydroxy-6 dioxa-4,8 oxo-3 undécaméthyléne ;
. un radical (méthyl-1 éthylène)-4 hydroxy-2 méthyl-1 cyclohexyle ;
- R₃ représente un atome d'hydrogène ou un radical méthyle ;
- Z représente -O- ou -NH- ou -N(CH₃)-.

5. Procédé de préparation des composés de formule (I) selon l'une des revendications 1 à 4, caractérisé en ce qu'il utilise un composé organosiloxanique de formule générale (II) : 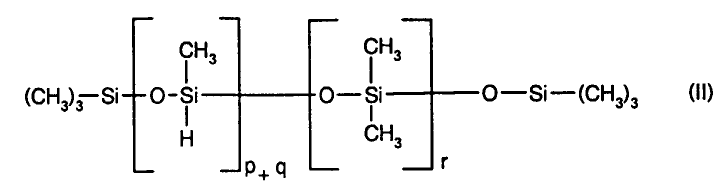 dans laquelle :
- p, q et r ont les significations indiquées précédemment pour les composés de formule (I).

6. Procédé selon la revendication 5, caractérisé en ce que l'on remplace des atomes d'hydrogène du composé (Il) par le groupement de formule (III) : 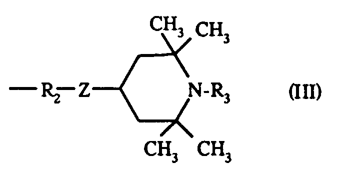 et éventuellement par le groupement R₁, par réaction du composé (Il) avec un composé présentant une insaturation éthylénique susceptible de réagir en hydrosilylation en présence d'un catalyseur au platine.

7. Procédé selon la revendication 5, caractérisé en ce que l'on remplace des atomes d'hydrogène du composé (Il) par le groupement de formule (III) : 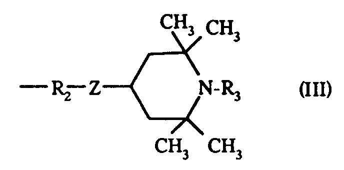 en faisant réagir un précurseur du radical R₂, comportant une double liaison éthylénique, par hydrosilylation sur ≡Si-H, puis en faisant une 2ème réaction sur ce précurseur de R₂, afin de fixer le radical tétraméthyl-2,2,6,6 pipéridinyle-4.

8. Procédé selon la revendication 7, caractérisé en ce que l'on utilise, lorsque Z représente -NR₉ comme précurseur de R₂ un composé comportant une double liaison éthylénique et un groupement époxyde, tel que l'allyloxy-3 époxy-1,2 propane ou l'époxy-1,2 isopropényl-4 méthyl-1 cyclohexane.

9. Procédé selon la revendication 8, caractérisé en ce que la réaction entre le précurseur de R₂ à fonction époxyde et l'amino-4 tétraméthyl-2,2,6,6 pipéridine ou l'alkylamino-4 tétraméthyl-2,2,5,6 pipéridine de formule (IV) 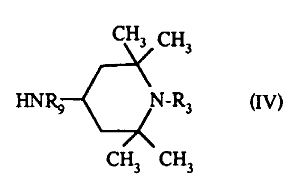 se fait par chauffage à une température de 80 à 140°C environ pendant quelques minutes à plusieurs heures.

10. Procédé selon la revendication 6, caractérisé en ce que le radical R₂ est constitué en faisant tout d'abord une réaction d'hydrosilylation entre la fonction ≡Si-H du composé organosiloxanique de formule (II) et un alcool insaturé, puis en faisant réagir la fonction alcool du radical hydroxyalkyle ainsi greffé sur l'atome de Si avec un acide carboxylique insaturé, ou de préférence l'un de ses esters d'alkyle, enfin en faisant réagir la double liaison de l'acide insaturé avec le dérivé de formule (IV) de la tétraméthyl-2,2,6,6 pipéridine.

11. Utilisation d'une quantité efficace des composés de formule (I) selon l'une des revendications 1 à 4 comme stabilisants UV dans les polymères organiques.

12. Utilisation d'une quantité efficace des composés de formule (I) selon l'une des revendications 1 à 4, comme stabilisants UV des polyoléfines, des polyalcadiènes, des polystyrènes, des polyuréthannes, des polyamides, des polyesters, des polycarbonates, des polysulfones, des polyéthers-sulfones, des polyéthers-cétones, des polymères acryliques, de leurs copolymères et de leurs mélanges.

13. Utilisation d'une quantité efficace des composés de formule (I) selon l'une des revendications 1 à 4, comme stabilisants UV des polyoléfines et des polyalcadiènes tels que le polypropylène, le polyéthylène haute densité, le polyéthylène basse densité linéaire, le polyéthylène basse densité, le polybutadiène, leurs copolymères et leurs mélanges.

14. Composition de polymère organique stabilisé contre les effets néfastes de la lumière et des UV caractérisé en ce qu'elle contient de 0,04 à 20 milliéquivalents en fonction tétraméthyl-2,2,6,6 pipéridinyle pour 100 g de polymère et de préférence de 0,20 à 4 milliéquivalents en fonction tétraméthyl-2,2,6,6 pipéridinyle pour 100 g de polymère.

## Revendications (Revendications pour l'(les) Etat(s) contractant(s) suivant(s): DK, IT)

1. Composés de formule générale (I) 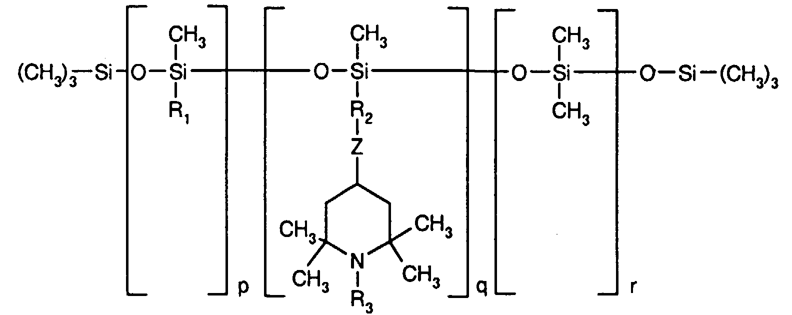 dans laquelle :
- les différents motifs sont répartis de manière statistique dans la chaîne ;
- p et r représentent des nombres égaux ou supérieurs à 0 ;
- q représente un nombre supérieur à 0 ;
- la somme de p, q et r est supérieure ou égale à 5 ;
- R₁ représente :
. un radical de formule -(CH₂)ₙ-COO-R₄ dans laquelle n représente un nombre de 5 à 20 et R₄ représente un radical alkyle de 1 à 12 atomes de carbone ;
. un radical de formule -(CH₂)ₘ-OR₅ dans laquelle m représente un nombre de 3 à 10 et R₅ représente un atome d'hydrogène, un enchaînement oxyde d'éthylène, un enchaînement oxyde de propylène ou un radical acyle ayant de 2 à 12 atomes de carbone ;
- R2 représente un radical organique divalent choisi parmi :
. les radicaux alkylènes, linéaires ou ramifiés, ayant de 2 à 18 atomes de carbone ;
. les radicaux alkylène-carbonyle dont la partie alkylène, linéaire ou ramifiée, comporte 2 à 20 atomes de carbone ;
. les radicaux alkylène-cyclohexylène dont la partie alkylène, linéaire ou ramifiée, comporte 2 à 12 atomes de carbone et la partie cyclohexylène comporte un groupement -OH et éventuellement 1 ou 2 radicaux alkyles ayant de 1 à 4 atomes de carbone ;
. les radicaux de formule -R₆-O-R₇- dans laquelle les radicaux R₆ et R₇, identiques ou différents, représentent des radicaux alkylènes ayant 1 à 12 atomes de carbone ;
. les radicaux de formule -R₆-O-R₇- dans laquelle R₆ et R₇ ont les significations indiquées précédemment et l'un d'entre eux ou les deux sont substitués par un ou deux groupements -OH ;
. les radicaux de formules -R₆-COO-R₇- et -R₆-OCO-R₇- dans lesquelles R₆ et R₇ ont les significations précédentes ;
. les radicaux de formule -R₆-O-R₇-O-CO-R₈- dans laquelle R₆, R₇ et R₈, identiques ou différents, représentent des radicaux alkylènes ayant 2 à 12 atomes de carbone et le radical R₇ est substitué par un groupement hydroxyle ;
- R₃ représente un atome d'hydrogène ou un radical alkyle, linéaire ou ramifié, ayant de 1 à 12 atomes de carbone ;
- Z représente -O- ou -NR₉-, R₉ ayant les significations indiquées pour R₃.

2. Composés de formule (I) selon la revendication 1, dans laquelle :
- p représente un nombre de 0 à 100;
- r représente un nombre de 0 à 100 ;
- q représente un nombre de 3 à 100
- la somme de p et de r est un supérieure à 0 ;
- la somme de p, q et r est supérieure ou égale à 10 ;
- R₁ représente :
. un radical de formule -(CH₂)₁₀-COO-R₄ dans laquelle R₄ représente un radical alkyle de 1 à 6 atomes de carbone ;
. un radical de formule -(CH₂)₃-OR₅ dans laquelle R₅ représente un atome d'hydrogène, un enchaînement oxyde d'éthylène, un enchaînement oxyde de propylène ou un groupement acyle ayant de 2 à 6 atomes de carbone ;
- R₂ représente un radical hydrocarboné divalent choisi parmi :
. les radicaux alkylènes, linéaires ou ramifiés, ayant de 3 à 12 atomes de carbone ;
. les radicaux alkylène-carbonyle dont la partie alkylène, linéaire ou ramifiée, comporte 2 à 12 atomes de carbone ;
. les radicaux alkylène-cyclohexylène dont la partie alkylène, linéaire ou ramifiée, comporte de 2 à 6 atomes de carbone et la partie cyclohexylène comporte un groupement -OH et éventuellement 1 ou 2 substituants alkyles ayant 1 à 4 atomes de carbone ;
. les radicaux de formule -R₆-O-R₇- dans laquelle les radicaux R₆ et R₇, identiques ou différents, représentent des radicaux alkylènes ayant 2 à 6 atomes de carbone ;
. les radicaux de formule -R₆-O-R₇- dans laquelle R₆ et R₇ ont les significations indiquées précédemment et R₇ est substitué par un groupe OH ;
. les radicaux de formules -R₆-COO-R₇- et -R₆-OCO-R₇- dans lesquelles R₆ et R₇ ont les significations précédentes ;
. les radicaux de formule -R₆-O-R₇-O-CO-R₈- dans laquelle R₆, R₇ et R₈, identiques ou différents, représentent des radicaux alkylènes ayant 2 à 6 atomes de carbone et le radical R₇ est substitué par un groupement hydroxyle ;
- R₃ représente un atome d'hydrogène ou un radical alkyle, linéaire ou ramifié, ayant de 1 à 6 atomes de carbone ;
- Z représente -O- ou -NR₉-, R₉ représentant un atome d'hydrogène ou un radical alkyle ayant 1 à 6 atomes de carbone.

3. Composés de formule (I) selon la revendication 1, dans laquelle :
- p représente un nombre de 5 à 55 ;
- r représente un nombre de 0 à 40 ;
- q représente un nombre de 5 à 54,5
- la somme de p, q et r est un nombre de 10 à 100 ;
- R₁ représente :
. un radical de formule -(CH₂)₁₀-COO-R₄ dans laquelle R₄ représente un radical alkyle de 1 à 6 atomes de carbone ;
. un radical de formule -(CH₂)₃-OR₅ dans laquelle R₅ représente un atome d'hydrogène, un enchaînement oxyde d'éthylène, un enchaînement oxyde de propylène ou un groupement acyle ayant de 2 à 6 atomes de carbone ;
- R2 représente un radical hydrocarboné choisi parmi :
. les radicaux alkylènes, linéaires ou ramifiés, ayant de 3 à 12 atomes de carbone ;
. le radical -(CH₂)₁₀-CO- ;
. les radicaux alkylène-cyclohexylène dont la partie alkylène, linéaire ou ramifiée, comporte 2 à 6 atomes de carbone et la partie cyclohexylène comporte un groupement -OH et éventuellement 1 ou 2 substituants alkyles ayant 1 à 4 atomes de carbone ;
. les radicaux de formule -R₆-O-R₇- dans laquelle les radicaux R₆ et R₇, identiques ou différents, représentent des radicaux alkylènes ayant 2 à 6 atomes de carbone ;
. les radicaux de formule -R₆-O-R₇- dans laquelle R₆ et R₇ ont les significations indiquées précédemment et R₇ est substitué par un groupe OH ;
. les radicaux de formules -R₆-COO-R₇- et -R₆-OCO-R₇- dans lesquelles R₆ et R₇ ont les significations précédentes ;
. les radicaux de formule -R₆-O-R₇-O-CO-R₈- dans laquelle R₆, R₇ et R₈, identiques ou différents, représentent des radicaux alkylènes ayant 2 à 6 atomes de carbone et le radical R₇ est substitué par un groupement hydroxyle ;
- R₃ représente un atome d'hydrogène ou un radical alkyle, linéaire ou ramifié, ayant de 1 à 6 atomes de carbone ;
- Z représente -O- ou -NR₉-, R₉ représentant un atome d'hydrogène ou un radical alkyle ayant 1 à 6 atomes de carbone.

4. Composés de formule (I) selon la revendication 1, dans laquelle :
- p représente un nombre de 5 à 30 ;
- r représente un nombre de 0 à 40 ;
- q représente un nombre de 5 à 54,5 ;
- la somme de p, q et r est un nombre de 10 à 100 ;
- R₁ représente :
. un radical décaméthylène-carboxylate de méthyle ou d'éthyle ;
- R₂ représente :
. un radical triméthylène ;
. un radical décaméthylène-carbonyle;
. un radical hydroxy-2 oxa-4 heptaméthylène ;
. un radical hydroxy-6 dioxa-4,8 oxo-3 undécaméthylène ;
. un radical (méthyl-1 éthylène)-4 hydroxy-2 méthyl-1 cyclohexyle ;
- R₃ représente un atome d'hydrogène ou un radical méthyle ;
- Z représente -O- ou -NH- ou -N(CH₃)-.

5. Procédé de préparation des composés de formule (I) selon l'une des revendications 1 à 4, caractérisé en ce qu'il utilise un composé organosiloxanique de formule générale (II) : 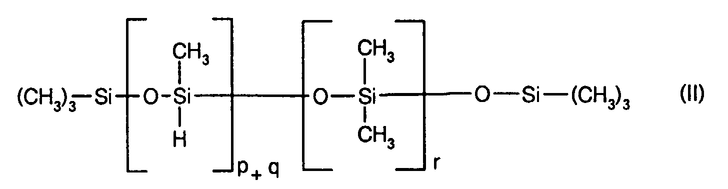 dans laquelle :
- p, q et r ont les significations indiquées précédemment pour les composés de formule (I).

6. Procédé selon la revendication 5, caractérisé en ce que l'on remplace des atomes d'hydrogène du composé (Il) par le groupement de formule (III) : 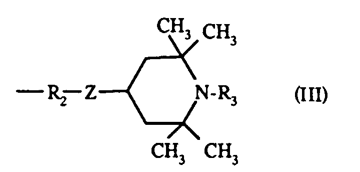 et éventuellement par le groupement R₁, par réaction du composé (Il) avec un composé présentant une insaturation éthylénique susceptible de réagir en hydrosilylation en présence d'un catalyseur au platine.

7. Procédé selon la revendication 5, caractérisé en ce que l'on remplace des atomes d'hydrogène du composé (Il) par le groupement de formule (III): 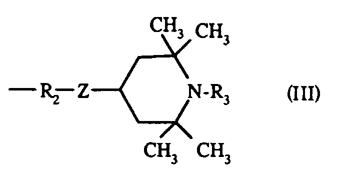 en faisant réagir un précurseur du radical R₂, comportant une double liaison éthylénique, par hydrosilylation sur ≡Si-H, puis en faisant une 2ème réaction sur ce précurseur de R₂, afin de fixer le radical tétraméthyl-2,2,6,6 pipéridinyle-4.

8. Procédé selon la revendication 7, caractérisé en ce que l'on utilise, lorsque Z représente -NR₉ comme précurseur de R₂ un composé comportant une double liaison éthylénique et un groupement époxyde, tel que l'allyloxy-3 époxy-1,2 propane ou l'époxy-1,2 isopropényl-4 méthyl-1 cyclohexane.

9. Procédé selon la revendication 8, caractérisé en ce que la réaction entre le précurseur de R₂ à fonction époxyde et l'amino-4 tétraméthyl-2,2,6,6 pipéridine ou l'alkylamino-4 tétraméthyl-2,2,5,6 pipéridine de formule (IV) 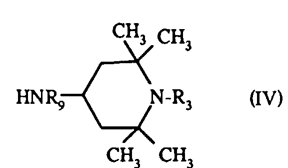 se fait par chauffage à une température de 80 à 140°C environ pendant quelques minutes à plusieurs heures.

10. Procédé selon la revendication 6, caractérisé en ce que le radical R₂ est constitué en faisant tout d'abord une réaction d'hydrosilylation entre la fonction ≡Si-H du composé organosiloxanique de formule (Il) et un alcool insaturé, puis en faisant réagir la fonction alcool du radical hydroxyalkyle ainsi greffé sur l'atome de Si avec un acide carboxylique insaturé, ou de préférence l'un de ses esters d'alkyle, enfin en faisant réagir la double liaison de l'acide insaturé avec le dérivé de formule (IV) de la tétraméthyl-2,2,6,6 pipéridine.

11. Utilisation d'une quantité efficace des composés de formule (I) selon l'une des revendications 1 à 4 comme stabilisants UV dans les polymères organiques.

12. Utilisation d'une quantité efficace des composés de formule (I) selon l'une des revendications 1 à 4, comme stabilisants UV des polyoléfines, des polyalcadiènes, des polystyrènes, des polyuréthannes, des polyamides, des polyesters, des polycarbonates, des polysulfones, des polyéthers-sulfones, des polyéthers-cétones, des polymères acryliques, de leurs copolymères et de leurs mélanges.

13. Utilisation d'une quantité efficace des composés de formule (I) selon l'une des revendications 1 à 4, comme stabilisants UV des polyoléfines et des polyalcadiènes tels que le polypropylène, le polyéthylène haute densité, le polyéthylène basse densité linéaire, le polyéthylène basse densité, le polybutadiène, leurs copolymères et leurs mélanges.

14. Composition de polymère organique stabilisé contre les effets néfastes de la lumière et des UV caractérisé en ce qu'elle contient de 0,04 à 20 milliéquivalents en fonction tétraméthyl-2,2,6,6 pipéridinyle pour 100 g de polymère et de préférence de 0,20 à 4 milliéquivalents en fonction tétraméthyl-2,2,6,6 pipéridinyle pour 100 g de polymère.

## Revendications (Revendications pour l'(les) Etat(s) contractant(s) suivant(s): ES)

1. Procédé de préparation de composés de formule générale (I) 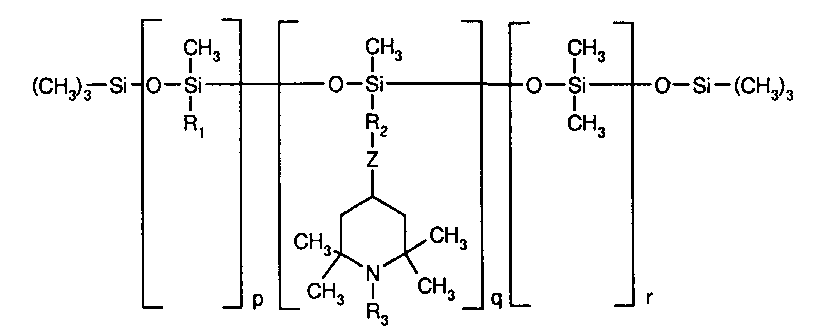 dans laquelle :
- les différents motifs sont répartis de manière statistique dans la chaîne ;
- p et r représentent des nombres égaux ou supérieurs à 0 ;
- q représente un nombre supérieur à 0 ;
- la somme de p, q et r est supérieure ou égale à 5 ;
- R₁ représente :
. un radical de formule -(CH₂)ₙ-COO-R₄ dans laquelle n représente un nombre de 5 à 20 et R₄ représente un radical alkyle de 1 à 12 atomes de carbone ;
. un radical de formule -(CH₂)ₘ-OR₅ dans laquelle m représente un nombre de 3 à 10 et R₅ représente un atome d'hydrogène, un enchaînement oxyde d'éthylène, un enchaînement oxyde de propylène ou un radical acyle ayant de 2 à 12 atomes de carbone ;
- R2 représente un radical organique divalent choisi parmi :
. les radicaux alkylènes, linéaires ou ramifiés, ayant de 2 à 18 atomes de carbone ;
. les radicaux alkylène-carbonyle dont la partie alkylène, linéaire ou ramifiée, comporte 2 à 20 atomes de carbone ;
. les radicaux alkylène-cyclohexylène dont la partie alkylène, linéaire ou ramifiée, comporte 2 à 12 atomes de carbone et la partie cyclohexylène comporte un groupement -OH et éventuellement 1 ou 2 radicaux alkyles ayant de 1 à 4 atomes de carbone ;
. les radicaux de formule -R₆-O-R₇- dans laquelle les radicaux R₆ et R₇, identiques ou différents, représentent des radicaux alkylènes ayant 1 à 12 atomes de carbone ;
. les radicaux de formule -R₆-O-R₇- dans laquelle R₆ et R₇ ont les significations indiquées précédemment et l'un d'entre eux ou les deux sont substitués par un ou deux groupements -OH ;
. les radicaux de formules -R₆-COO-R₇- et -R₆-OCO-R₇- dans lesquelles R₆ et R₇ ont les significations précédentes ;
. les radicaux de formule -R₆-O-R₇-O-CO-R₈- dans laquelle R₆, R₇ et R₈, identiques ou différents, représentent des radicaux alkylènes ayant 2 à 12 atomes de carbone et le radical R₇ est substitué par un groupement hydroxyle ;
- R₃ représente un atome d'hydrogène ou un radical alkyle, linéaire ou ramifié, ayant de 1 à 12 atomes de carbone ;
- Z représente -O- ou -NR₉-, R₉ ayant les significations indiquées pour R₃ ; à l'exclusion des produits de formule : 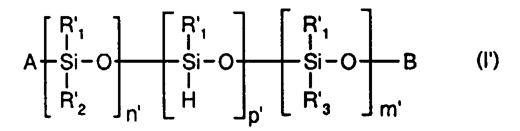 dans laquelle :
- R'₁ et R'₃ qui peuvent être identiques ou difféents, sont des radicaux alkyles linéaires ou ramifiés en C₁ - C₁₀, des radicaux cycloaliphatiques en C₅ - C₁₁ ou des radicaux phényle ;
- R'₂ est un radical choisi parmi ceux correspondant à la formule générale : 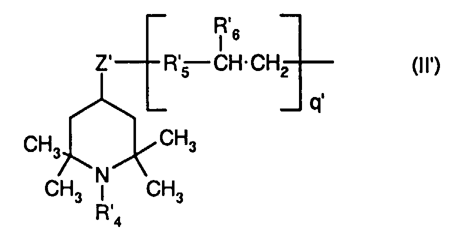 dans laquelle :
R'₄ est un hydrogène ou méthyle ou un benzyle,
R'₅ est un radical alkyle linéaire ou ramifié en C₁ - C₇
R'₆ est un atome d'hydrogène ou un méthyle
Z' est un groupe choisi parmi -O- : 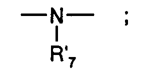 (où R'₇ est un groupe alkyle linéaire ou ramifié en C₁ - C₅ ou un hydrogène);
q' est zéro ou un ;
- n' est un nombre entier autre 0 ;
- m' et p', qui peuvent être identiques ou différents, sont zéro ou des nombres entiers avec la condition que n' + p' + m' soit inférieur ou égal à 50 ;
- A est un groupe correspondant à la formule : 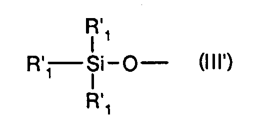 où R'₁ a la signification ci-dessus ;
- B est un groupe correspondant à la formule : 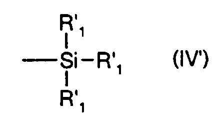 où R'₁ a la signification mentionnée ci-dessus ;
- ou A et B représentent conjointement une liaison directe engendrant une structure cyclique ;
caractérisé :
- en ce que l'on utilise un composé organosiloxanique de formule générale (II) : 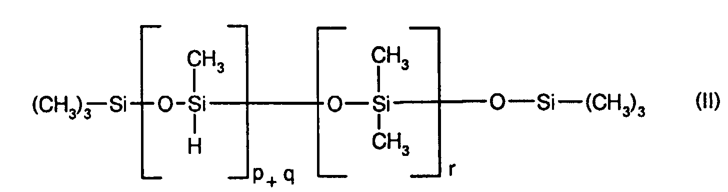 dans laquelle :
- p, q et r ont les significations indiquées précédemment pour les composés de formule (I),
- en ce que l'on remplace des atomes d'hydrogène du composé (Il) par le groupement de formule (III): 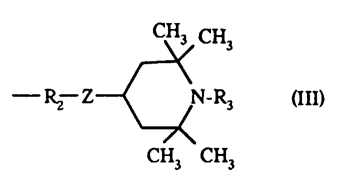 et éventuellement par le groupement R₁, par réaction du composé (Il) avec un composé présentant une insaturation éthylénique susceptible de réagir en hydrosilylation en présence d'un catalyseur au platine.

2. Procédé selon la revendication 1 de préparation de composés de formule générale (I) 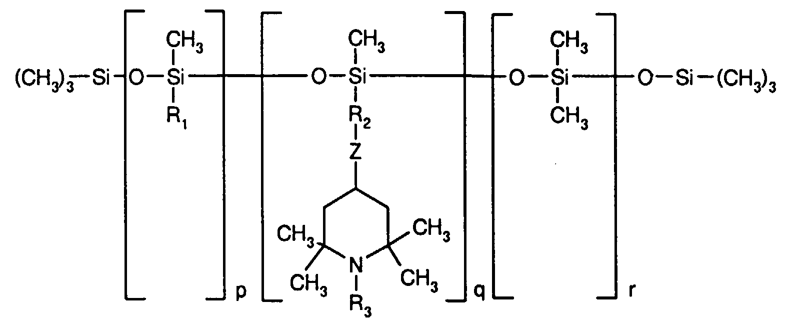 dans laquelle :
- les différents motifs sont répartis de manière statistique dans la chaîne ;
- p et r représentent des nombres égaux ou supérieurs à 0 ;
- q représente un nombre supérieur à 0 ;
- la somme de p, q et r est supérieure ou égale à 5 ;
- R₁ représente :
. un radical de formule -(CH₂)ₙ-COO-R₄ dans laquelle n représente un nombre de 5 à 20 et R₄ représente un radical alkyle de 1 à 12 atomes de carbone ;
. un radical de formule -(CH₂)ₘ-OR₅ dans laquelle m représente un nombre de 3 à 10 et R₅ représente un atome d'hydrogène, un enchaînement oxyde d'éthylène, un enchaînement oxyde de propylène ou un radical acyle ayant de 2 à 12 atomes de carbone ;
- R2 représente un radical organique divalent choisi parmi :
. les radicaux alkylènes, linéaires ou ramifiés, ayant de 2 à 18 atomes de carbone ;
. les radicaux alkylène-carbonyle dont la partie alkylène, linéaire ou ramifiée, comporte 2 à 20 atomes de carbone ;
. les radicaux alkylène-cyclohexylène dont la partie alkylène, linéaire ou ramifiée, comporte 2 à 12 atomes de carbone et la partie cyclohexylène comporte un groupement -OH et éventuellement 1 ou 2 radicaux alkyles ayant de 1 à 4 atomes de carbone ;
. les radicaux de formule -R₆-O-R₇- dans laquelle les radicaux R₆ et R₇, identiques ou différents, représentent des radicaux alkylènes ayant 1 à 12 atomes de carbone ;
. les radicaux de formule -R₆-O-R₇- dans laquelle R₆ et R₇ ont les significations indiquées précédemment et l'un d'entre eux ou les deux sont substitués par un ou deux groupements -OH ;
. les radicaux de formules -R₆-COO-R₇- et -R₆-OCO-R₇- dans lesquelles R₆ et R₇ ont les significations précédentes ;
. les radicaux de formule -R₆-O-R₇-O-CO-R₈- dans laquelle R₆, R₇ et R₈, identiques ou différents, représentent des radicaux alkylènes ayant 2 à 12 atomes de carbone et le radical R₇ est substitué par un groupement hydroxyle ;
- R₃ représente un atome d'hydrogène ou un radical alkyle, linéaire ou ramifié, ayant de 1 à 12 atomes de carbone ;
- Z représente -O- ou -NR₉-, R₉ ayant les significations indiquées pour R₃ ; à l'exclusion des produits de formule : 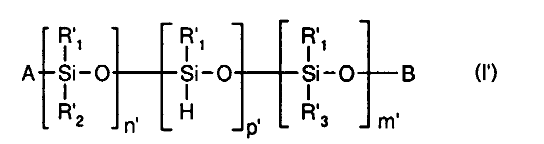 dans laquelle :
- R'₁ et R'₃ qui peuvent être identiques ou difféents, sont des radicaux alkyles linéaires ou ramifiés en C₁ - C₁₀, des radicaux cycloaliphatiques en C₅ - C₁₁ ou des radicaux phényle ;
- R'₂ est un radical choisi parmi ceux correspondant à la formule générale : 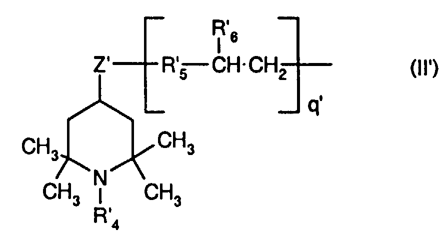 dans laquelle :
R'₄ est un hydrogène ou méthyle ou un benzyle,
R'₅ est un radical alkyle linéaire ou ramifié en C₁ - C₇
R'₆ est un atome d'hydrogène ou un méthyle
Z' est un groupe choisi parmi -O- : 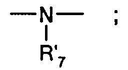 (où R'₇ est un groupe alkyle linéaire ou ramifié en C₁ - C₅ ou un hydrogène) ;
q' est zéro ou un ;
- n' est un nombre entier autre 0 ;
- m' et p', qui peuvent être identiques ou différents, sont zéro ou des nombres entiers avec la condition que n' + p' + m' soit inférieur ou égal à 50 ;
- A est un groupe correspondant à la formule : 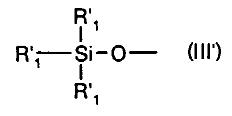 où R'₁ a la signification ci-dessus ;
- B est un groupe correspondant à la formule : 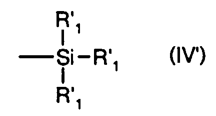 où R'₁ a la signification mentionnée ci-dessus ;
- ou A et B représentent conjointement une liaison directe engendrant une structure cyclique ;
caractérisé :
- en ce que l'on utilise un composé organosiloxanique de formule générale (II) : 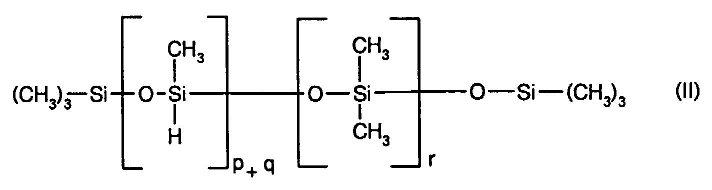 dans laquelle :
- p, q et r ont les significations indiquées précédemment pour les composés de formule (I),
- en ce que l'on remplace des atomes d'hydrogène du composé (Il) par le groupement de formule (III) : 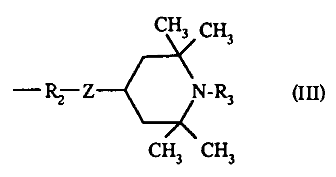 en faisant réagir un précurseur du radical R₂, comportant une double liaison éthylénique, par hydrosilylation sur ≡Si-H, puis en faisant une deuxième réaction sur ce précurseur de R₂, afin de fixer le radical tétraméthyl-2,2,6,6 pipéridinyle-4.

3. Procédé selon la revendication 2, caractérisé en ce que l'on utilise, lorsque Z représente -NR₉, comme précurseur de R₂ un composé comportant une double liaison éthylénique et un groupement époxyde, tel que l'allyloxy-3 époxy-1,2 propane ou l'époxy-1,2 isopropényl-4 méthyl-1 cyclohexane.

4. Procédé selon la revendication 3, caractérisé en ce que la réaction entre le précurseur de R₂ à fonction époxyde et l'amino-4 tétraméthyl-2,2,6,6 pipéridine ou l'alkylamino-4 tétraméthyl-2,2,6,6 pipéridine de formule (IV) 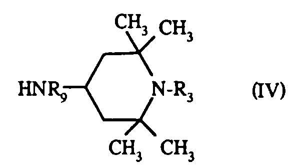 se fait par chauffage à une température de 80 à 140°C environ pendant quelques minutes à plusieurs heures.

5. Procédé selon la revendication 1, caractérisé en ce que le radical R₂ est constitué en faisant tout d'abord une réaction d'hydrosilylation entre la fonction ≡Si-H du composé organosiloxanique de formule (II) et un alcool insaturé, puis en faisant réagir la fonction alcool du radical hydroxyalkyle ainsi greffé sur l'atome de Si avec un acide carboxylique insaturé, ou de préférence l'un de ses esters d'alkyle, enfin en faisant réagir la double liaison de l'acide insaturé avec le dérivé de formule (IV) de la tétraméthyl-2,2,6,6 pipéridine.

6. Procédé selon l'une des revendications 1 à 5, caractérisé en ce que l'on prépare des composés de formule (I) dans laquelle :
- p représente un nombre de 0 à 100;
- r représente un nombre de 0 à 100 ;
- q représente un nombre de 3 à 100
- la somme de p et de r est un supérieure à 0 ;
- la somme de p, q et r est supérieure ou égale à 10 ;
- R₁ représente :
. un radical de formule -(CH₂)₁₀-COO-R₄ dans laquelle R₄ représente un radical alkyle de 1 à 6 atomes de carbone ;
. un radical de formule -(CH₂)₃-OR₅ dans laquelle R₅ représente un atome d'hydrogène, un enchaînement oxyde d'éthylène, un enchaînement oxyde de propylène ou un groupement acyle ayant de 2 à 6 atomes de carbone ;
- R₂ représente un radical hydrocarboné divalent choisi parmi :
. les radicaux alkylènes, linéaires ou ramifiés, ayant de 3 à 12 atomes de carbone ;
. les radicaux alkylène-carbonyle dont la partie alkylène, linéaire ou ramifiée, comporte 2 à 12 atomes de carbone ;
. les radicaux alkylène-cyclohexylène dont la partie alkylène, linéaire ou ramifiée, comporte de 2 à 6 atomes de carbone et la partie cyclohexylène comporte un groupement -OH et éventuellement 1 ou 2 substituants alkyles ayant 1 à 4 atomes de carbone ;
. les radicaux de formule -R₆-O-R₇- dans laquelle les radicaux R₆ et R₇, identiques ou différents, représentent des radicaux alkylènes ayant 2 à 6 atomes de carbone ;
. les radicaux de formule -R₆-O-R₇- dans laquelle R₆ et R₇ ont les significations indiquées précédemment et R₇ est substitué par un groupe OH ;
. les radicaux de formules -R₆-COO-R₇- et -R₆-OCO-R₇- dans lesquelles R₆ et R₇ ont les significations précédentes ;
. les radicaux de formule -R₆-O-R₇-O-CO-R₈- dans laquelle R₆, R₇ et R₈, identiques ou différents, représentent des radicaux alkylènes ayant 2 à 6 atomes de carbone et le radical R₇ est substitué par un groupement hydroxyle ;
- R₃ représente un atome d'hydrogène ou un radical alkyle, linéaire ou ramifié, ayant de 1 à 6 atomes de carbone ;
- Z représente -O- ou -NR₉-, R₉ représentant un atome d'hydrogène ou un radical alkyle ayant 1 à 6 atomes de carbone.

7. Procédé selon l'une des revendications 1 à 5, caractérisé en ce que l'on prépare des composés de formule (I) dans laquelle :
- p représente un nombre de 5 à 55 ;
- r représente un nombre de 0 à 40 ;
- q représente un nombre de 5 à 54,5
- la somme de p, q et r est un nombre de 10 à 100;
- R₁ représente:
. un radical de formule -(CH₂)₁₀-COO-R₄ dans laquelle R₄ représente un radical alkyle de 1 à 6 atomes de carbone ;
. un radical de formule -(CH₂)₃-OR₅ dans laquelle R₅ représente un atome d'hydrogène, un enchaînement oxyde d'éthylène, un enchaînement oxyde de propylène ou un groupement acyle ayant de 2 à 6 atomes de carbone ;
- R₂ représente un radical hydrocarboné choisi parmi :
. les radicaux alkylènes, linéaires ou ramifiés, ayant de 3 à 12 atomes de carbone ;
. le radical -(CH₂)₁₀-CO- ;
. les radicaux alkylène-cyclohexylène dont la partie alkylène, linéaire ou ramifiée, comporte 2 à 6 atomes de carbone et la partie cyclohexylène comporte un groupement -OH et éventuellement 1 ou 2 substituants alkyles ayant 1 à 4 atomes de carbone ;
. les radicaux de formule -R₆-O-R₇- dans laquelle les radicaux R₆ et R₇, identiques ou différents, représentent des radicaux alkylènes ayant 2 à 6 atomes de carbone ;
. les radicaux de formule -R₆-O-R₇- dans laquelle R₆ et R₇ ont les significations indiquées précédemment et R₇ est substitué par un groupe OH;
. les radicaux de formules -R₆-COO-R₇- et -R₆-OCO-R₇- dans lesquelles R₆ et R₇ ont les significations précédentes ;
. les radicaux de formule -R₆-O-R₇-O-CO-R₈- dans laquelle R₆, R₇ et R₈, identiques ou différents, représentent des radicaux alkylènes ayant 2 à 6 atomes de carbone et le radical R₇ est substitué par un groupement hydroxyle ;
- R₃ représente un atome d'hydrogène ou un radical alkylène, linéaire ou ramifié, ayant de 1 à 6 atomes de carbone ;
- Z représente -O- ou -NR₉-, R₉ représentant un atome d'hydrogène ou un radical alkyle ayant 1 à 6 atomes de carbone.

8. Procédé selon l'une des revendications 1 à 5, caractérisé en ce que l'on prépare des composés de formule (I) dans laquelle :
- p représente un nombre de 5 à 30 ;
- r représente un nombre de 0 à 40 ;
- q représente un nombre de 5 à 54,5 ;
- la somme de p, q et r est un nombre de 10 à 100 ;
- R₁ représente:
. un radical décaméthylène-carboxylate de méthyle ou d'éthyle ;
- R₂ représente :
. un radical triméthylène ;
. un radical décaméthylène-carbonyle ;
. un radical hydroxy-2 oxa-4 heptaméthylène ;
. un radical hydroxy-6 dioxa-4,8 oxo-3 undécaméthylène ;
. un radical (méthyl-1 éthylène)-4 hydroxy-2 méthyl-1 cyclohexyle ;
- R₃ représente un atome d'hydrogène ou un radical méthyle ;
- Z représente -O- ou -NH- ou -N(CH₃)-.

9. Stabilisation des polymères organiques contre les rayonnements UV, dans une zone de longueur d'onde de 250 nm à 800 nm, caractérisée par l'utilisation d'une quantité efficace de composés de formule (I) préparés selon l'une des revendications 1 à 8.

10. Stabilisation selon la revendication 9, caractérisée en ce que l'on utilise une quantité efficace des composés de formule (I) préparés selon l'une des revendications 1 à 8, comme stabilisants UV, dans une zone de longueur d'onde de 250 nm à 800 nm, des polyoléfines, des polyalcadiènes, des polystyrènes, des polyuréthannes, des polyamides, des polyesters, des polycarbonates, des polysulfones, des polyéthers-sulfones, des polyéthers-cétones, des polymères acryliques, de leurs copolymères et de leurs mélanges.

11. Stabilisation selon l'une des revendications 9 ou 10, caractérisée en ce que l'on utilise une quantité efficace des composés de formule (I) selon l'une des revendications 1 à 8, comme stabilisants UV, dans une zone de longueur d'onde de 250 nm à 800 nm, des polyoléfines et des polyalcadiènes tels que le polypropylène, le polyéthylène haute densité, le polyéthylène basse densité linéaire, le polyéthylène basse densité, le polybutadiène, leurs copolymères et leurs mélanges.

12. Stabilisation de polymère organique contre les effets néfastes de la lumière et des UV, selon l'une des revendications 9 à 11, caractérisée en ce que l'on incorpore audit polymère l'un des composés de formule (I) préparés selon l'une des revendications 1 à 8 à raison de 0,04 à 20 milliéquivalents en fonction tétraméthyl-2,2,6,6 pipéridinyle pour 100 g de polymère et de préférence de 0,20 à 4 milliéquivalents en fonction tétraméthyl-2,2,6,6 pipéridinyle pour 100 g de polymère.

## Patentansprüche (Patentansprüche für folgende(n) Vertragsstaat(en): AT, BE, CH, DE, FR, GB, GR, LI, LU, NL, SE)

1. Verbindungen der allgemeinen Formel (I) 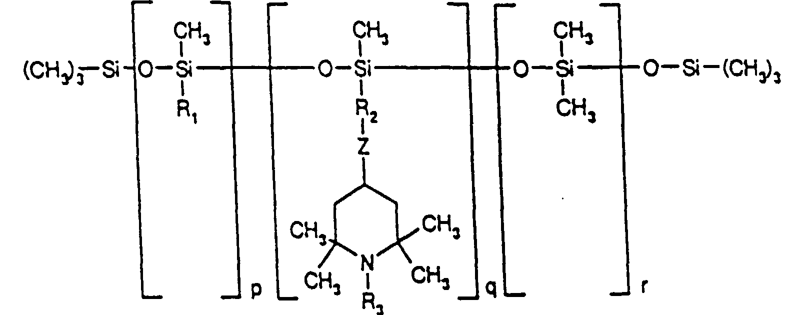 worin
- die verschiedenen Einheiten statistisch in der Kette verteilt sind;
- p und r Zahlen von gleich oder größer 0 bedeuten;
- q eine Zahl größer 0 bedeutet;
- die Summe p, q und r größer oder gleich 5 ist;
- R₁:
. einen Rest der Formel -(CH₂)ₙ-COO-R₄, worin n eine Zahl von 5 bis 20 bedeutet und R₄ einen Alkylrest mit 1 bis 12 Kohlenstoffatomen bedeutet;
. einen Rest der Formel -(CH₂)ₘ-OR₅, worin m eine Zahl von 3 bis 10 bedeutet und R₅ ein Wasserstoffatom, eine Ethylenoxidverknüpfung, eine Propylenoxidverknüpfung oder einen Acylrest mit 2 bis 12 Kohlenstoffatomen bedeutet;
bedeutet;
- R₂ einen zweiwertigen organischen Rest bedeutet, ausgewählt aus:
. linearen oder verzweigten Alkylenresten mit 2 bis 18 Kohlenstoffatomen;
. Alkylencarbonylresten, deren linearer oder verzweigter Alkylenteil 2 bis 20 Kohlenstoffatome trägt;
. Alkylencyclohexylenresten, deren linearer oder verzweigter Alkylenteil 2 bis 12 Kohlenstoffatome besitzt und deren Cyclohexylenteil eine OH-Gruppierung und gegebenenfalls 1 oder 2 Alkylreste mit 1 bis 4 Kohlenstoffatomen besitzt;
. Resten der Formel -R₆-O-R₇-, worin die Reste R₆ und R₇, die gleich oder verschieden sind, Alkylenreste mit 1 bis 12 Kohlenstoffatomen bedeuten;
. Resten der Formel -R₆-O-R₇-, worin R₆ und R₇ wie vorstehend definiert sind und einer der beiden oder beide durch eine oder zwei OH-Gruppen substituiert sind;
. Resten der Formeln -R₆-COO-R₇- und -R₆-OCO-R₇-, worin R₆ und R₇ wie vorstehend definiert sind;
. Resten der Formel -R₆-O-R₇-O-CO-R₈-, worin R₆, R₇ und R₈, die gleich oder verschieden sind, Alkylenreste mit 2 bis 12 Kohlenstoffatomen bedeuten und der Rest R₇ durch eine Hydroxylgruppe substituiert ist;
- R₃ ein Wasserstoffatom oder einen linearen oder verzweigten Alkylrest mit 1 bis 12 Kohlenstoffatomen bedeutet;
- Z -O- oder -NR₉- bedeutet, wobei R₉ wie R₃ definiert ist;
ausgenommen die Verbindungen der Formel: 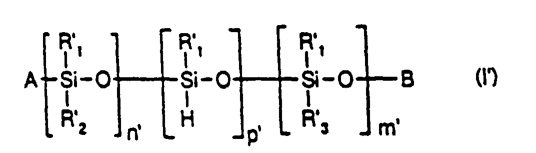 worin:
- R'₁ und R'₃, die gleich oder verschieden sein können, lineare oder verzweigte C₁-C₁₀-Alkylreste, cycloaliphatische C₅-C₁₁-Reste oder Phenylreste sind;
- R'₂ ein Rest, ausgewählt aus denjenigen der allgemeinen Formel: 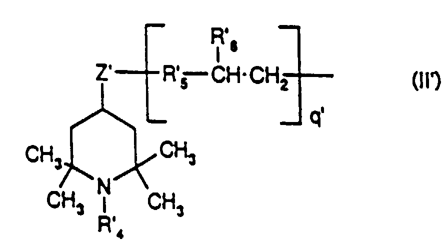 ist, worin:
R'₄ Wasserstoff oder Methyl oder Benzyl bedeutet,
R'₅ einen linearen oder verzweigten C₁-C₇-Alkylrest bedeutet,
R'₆ ein Wasserstoffatom oder eine Methylgruppe bedeutet,
Z' eine Gruppe, ausgewählt aus -O-: 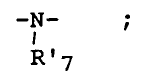 (worin R'₇ ein linearer oder verzweigter C₁-C₅-Alkylrest oder Wasserstoff ist) ist;
q' den Wert 0 oder 1 hat;
- n' eine ganze Zahl, ausgenommen 0, ist;
- m' und p', die gleich oder verschieden sein können, null oder ganze Zahlen sind, mit der Maßgabe, daß n'+p'+m' kleiner oder gleich 50 ist;
- A ein Rest der Formel: 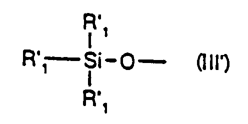 ist, worin R'₁ wie vorstehend definiert ist;
- B ein Rest der Formel: 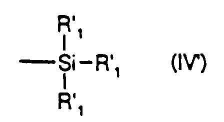 ist, worin R'₁ wie vorstehend definiert ist;
- oder A und B zusammen eine direkte Bindung bilden, die eine cyclische Struktur ergibt.

2. Verbindungen der Formel (I) nach Anspruch 1, worin
- p eine Zahl von 0 bis 100 bedeutet;
- r eine Zahl von 0 bis 100 bedeutet;
- q eine Zahl von 3 bis 100 bedeutet;
- die Summe p und r größer 0 ist;
- die Summe p, q und r größer oder gleich 10 ist;
- R₁:
. einen Rest der Formel -(CH₂)₁₀-COO-R₄, worin R₄ einen Alkylrest mit 1 bis 6 Kohlenstoffatomen bedeutet;
. einen Rest der Formel -(CH₂)₃-OR₅, worin R₅ ein Wasserstoffatom, eine Ethylenoxidverknüpfung, eine Propylenoxidverknüpfung oder einen Acylrest mit 2 bis 6 Kohlenstoffatomen bedeutet;
bedeutet;
- R₂ einen zweiwertigen Kohlenwasserstoffrest, ausgewählt aus:
. linearen oder verzweigten Alkylenresten mit 3 bis 12 Kohlenstoffatomen;
. Alkylencarbonylresten, deren linearer oder verzweigter Alkylenteil 2 bis 12 Kohlenstoffatome trägt;
. Alkylencyclohexylenresten, deren linearer oder verzweigter Alkylenteil 2 bis 6 Kohlenstoffatome trägt und deren Cyclohexylenteil eine -OH-Gruppe und gegebenenfalls 1 oder 2 Alkylsubstituenten mit 1 bis 4 Kohlenstoffatomen trägt;
. Resten der Formel -R₆-O-R₇-, worin die Reste R₆ und R₇, die gleich oder verschieden sind, Alkylenreste mit 2 bis 6 Kohlenstoffatomen bedeuten;
. den Resten der Formel R₆-O-R₇-, worin R₆ und R₇ wie vorstehend definiert sind und R₇ durch eine OH-Gruppe substituiert ist;
. den Resten der Formeln -R₆-COO-R₇- und -R₆-OCO-R₇-, worin R₆ und R₇ wie vorstehend definiert sind;
. den Resten der Formeln -R₆-O-R₇-O-CO-R₈-, worin R₆, R₇ und R₈, die gleich oder verschieden sind, Alkylenreste mit 2 bis 6 Kohlenstoffatomen bedeuten und der Rest R₇ durch eine Hydroxylgruppe substituiert ist;
bedeutet;
- R₃ ein Wasserstoffatom oder einen linearen oder verzweigten Alkylrest mit 1 bis 6 Kohlenstoffatomen bedeutet;
- Z -O- oder -NR₉- bedeutet, wobei R₉ ein Wasserstoffatom oder einen Alkylrest mit 1 bis 6 Kohlenstoffatomen bedeutet.

3. Verbindungen der Formel (I) nach Anspruch 1, worin:
- p eine Zahl von 5 bis 55 bedeutet;
- r eine Zahl von 0 bis 40 bedeutet;
- q eine Zahl von 5 bis 54,5 bedeutet;
- die Summe p, q und r eine Zahl von 10 bis 100 ist;
- R₁
. einen Rest der Formel -(CH₂)₁₀-COO-R₄, worin R₄ einen Alkylrest mit 1 bis 6 Kohlenstoffatomen bedeutet;
. einen Rest der Formel -(CH₂)₃-OR₅, worin R₅ ein Wasserstoffatom, eine Ethylenoxidverknüpfung, eine Propylenoxidverknüpfung oder eine Acylgruppe mit 2 bis 6 Kohlenstoffatomen bedeutet;
bedeutet;
- R₂ einen Kohlenwasserstoffrest, ausgewählt aus:
. linearen oder verzweigten Alkylenresten mit 3 bis 12 Kohlenstoffatomen;
. dem Rest -(CH₂)₁₀-CO-;
. Alkylencyclohexylenresten, deren linearer oder verzweigter Alkylenteil 2 bis 6 Kohlenstoffatome besitzt und deren Cyclohexylenteil eine -OH-Gruppierung und gegebenenfalls ein oder zwei Alkylsubstituenten mit 1 bis 4 Kohlenstoffatomen besitzt;
. Resten der Formel -R₆-O-R₇-, worin die Reste R₆ und R₇, die gleich oder verschieden sind, Alkylenreste mit 2 bis 6 Kohlenstoffatomen bedeuten;
. Resten der Formel -R₆-O-R₇-, worin R₆ und R₇ wie vorstehend definiert sind und R₇ durch eine OH-Gruppe substituiert ist;
. Resten der Formel -R₆-COO-R₇- und -R₆-OCO-R₇-, worin R₆ und R₇ wie vorstehend definiert sind;
. Resten der Formel -R₆-O-R₇-O-CO-R₈-, worin R₆, R₇ und R₈, die gleich oder verschieden sind, Alkylenreste mit 2 bis 6 Kohlenstoffatomen bedeuten und der Rest R₇ durch eine Hydroxylgruppe substituiert ist;
bedeutet;
- R₃ ein Wasserstoffatom oder einen linearen oder verzweigten Alkylrest mit 1 bis 6 Kohlenstoffatomen bedeutet;
- Z -O- oder -NR₉- bedeutet, wobei R₉ ein Wasserstoffatom oder einen Alkylrest mit 1 bis 6 Kohlenstoffatomen bedeutet.

4. Verbindungen der Formel (I) nach Anspruch 1, worin:
- p eine Zahl von 5 bis 30 bedeutet;
- r eine Zahl von 0 bis 40 bedeutet;
- q eine Zahl von 5 bis 54,5 bedeutet;
- die Summe p, q und r eine Zahl von 10 bis 100 ist;
- R₁
. einen Methyl- oder Ethyldecamethylencarboxylatrest bedeutet;
- R₂
. eine Trimethylengruppe;
. eine Decamethylencarbonylgruppe;
. eine 2-Hydroxy-4-oxaheptamethylengruppe;
. eine 6-Hydroxy-4,8-dioxa-3-oxoundecamethylengruppe;
. eine 4-(1-Methylethylen)-2-hydroxy-1-methylcyclohexylgruppe bedeutet;
- R₃ ein Wasserstoffatom oder eine Methylgruppe bedeutet;
- Z -O- oder -NH- oder -N(CH₃)- bedeutet.

5. Verfahren zur Herstellung von Verbindungen der Formel (I) nach einem der Ansprüche 1 bis 4, dadurch **gekennzeichnet**, daß man eine Organosiloxanverbindung der allgemeinen Formel (II): 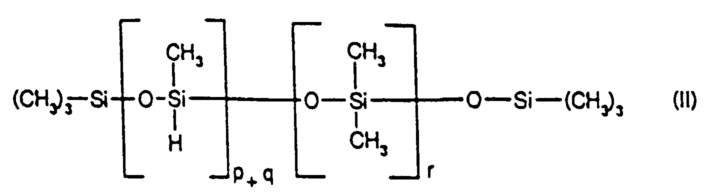 verwendet, worin
- p, q und r wie vorstehend für die Verbindungen der Formel (I) definiert sind.

6. Verfahren nach Anspruch 5, dadurch **gekenn** **zeichnet**, daß man die Wasserstoffatome der Verbindung (II) durch die Gruppierung der Formel (III): 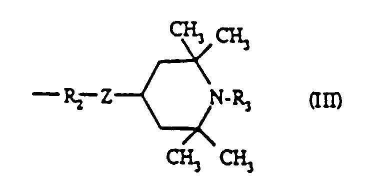 und gegebenenfalls durch die Gruppierung R₁ durch Umsetzen der Verbindung (II) mit einer Verbindung, die eine ethylenische Unsättigung, die bei der Hydrosilylierung in Gegenwart eines Platinkatalysators reagieren kann, besitzt, ersetzt.

7. Verfahren nach Anspruch 5, dadurch **gekennzeichnet**, daß man die Wasserstoffatome der Verbindung (II) durch die Gruppierung der Formel (III): 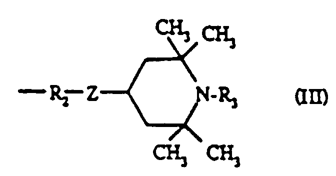 ersetzt, indem man einen Vorläufer des Rests R₂, der eine Ethylendoppelbindung trägt, durch Hydrosilylierung mit ≡Si-H reagieren läßt, anschließend eine zweite Reaktion mit diesem Vorläufer von R₂ durchführt, um den 2,2,6,6-Tetramethyl-4-piperidinylrest zu binden.

8. Verfahren nach Anspruch 7, dadurch **gekennzeichnet**, daß man, wenn Z -NR₉ bedeutet, als Vorläufer von R₂ eine Verbindung mit einer Ethylendoppelbindung und einer Epoxidgruppe mit 3-Allyloxy-1,2-epoxypropan oder 1,2-Epoxy-4-isopropenyl-1,-methylcyclohexan verwendet.

9. Verfahren nach Anspruch 8, dadurch **gekennzeichnet**, daß man die Reaktion zwischen dem Vorläufer von R₂ mit einer Epoxidfunktion und dem 4-Amino-2,2,6,6-tetramethylpiperidin oder dem 4-Alkylamino-2,2,5,6-tetramethylpiperidin der Formel (IV) 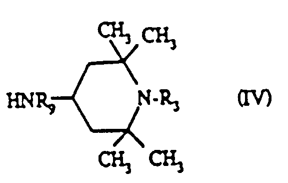 durch Erhitzen auf eine Temperatur von etwa 80 bis 140°C während einiger Minuten bis mehrerer Stunden durchführt.

10. Verfahren nach Anspruch 6, dadurch **gekennzeichnet**, daß man den Rest R₂ dadurch herstellt, indem man zuerst eine Hydrosilylierungsreaktion zwischen der ≡Si-H-Funktion der Organosiloxanverbindung der Formel (II) und einem ungesättigten Alkohol durchführt, dann die Alkoholfunktion des so auf das Si-Atom gepfropften Hydroxyalkylrests mit einer ungesättigten Carbonsäure oder bevorzugt einer ihrer Alkylester umsetzt und schließlich die Doppelbindung der ungesättigten Säure mit dem Derivat der Formel (IV) von 2,2,6,6-Tetramethylpiperidin umsetzt.

11. Verwendung einer wirksamen Menge der Verbindungen der Formel (I) nach einem der Ansprüche 1 bis 4 als UV-Stabilisatoren in organischen Polymeren.

12. Verwendung einer wirksamen Menge der Verbindungen der Formel (I) nach einem der Ansprüche 1 bis 4 als UV-Stabilisatoren von Polyolefinen, Polyalcadienen, Polystyrolen, Polyurethanen, Polyamiden, Polyestern, Polycarbonaten, Polysulfonen, Polyethersulfonen, Polyetherketonen, Acrylpolymeren, ihren Copolymeren und ihren Gemischen.

13. Verwendung einer wirksamen Menge der Verbindungen der Formel (I) nach einem der Ansprüche 1 bis 4 als UV-Stabilisatoren von Polyolefinen und Polyalcadienen, wie Polypropylen, Polyethylen hoher Dichte, linearem Polyethylen niedriger Dichte, Polyethylen niedriger Dichte, Polybutadien, ihren Copolymeren und ihren Gemischen.

14. Gegen die ungünstigen Wirkungen von Licht und UV stabilisierte organische Polymermasse, dadurch **gekennzeichnet**, daß sie 0,04 bis 20 Milliäquivalent der 2,2,6,6-Tetramethylpiperidinylfunktion auf 100 g Polymeres und bevorzugt 0,20 bis 4 Milliäquivalent der 2,2,6,6-Tetramethylpiperidinylfunktion auf 100 g Polymeres enthält.

## Patentansprüche (Patentansprüche für folgende(n) Vertragsstaat(en): DK, IT)

1. Verbindungen der allgemeinen Formel (I) 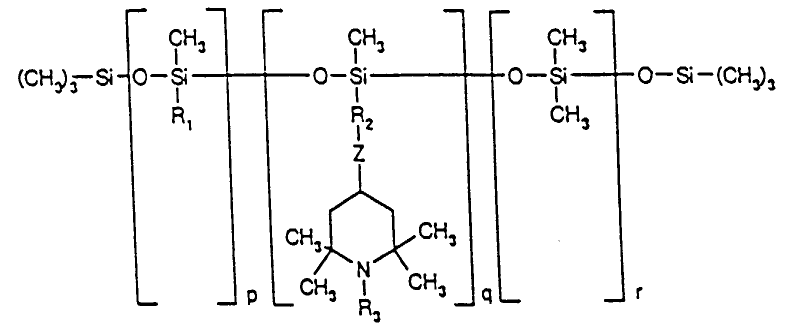 worin
- die verschiedenen Einheiten statistisch in der Kette verteilt sind;
- p und r Zahlen von gleich oder größer 0 bedeuten;
- q eine Zahl größer 0 bedeutet;
- die Summe p, q und r größer oder gleich 5 ist;
- R₁:
. einen Rest der Formel -(CH₂)ₙ-COO-R₄, worin n eine Zahl von 5 bis 20 bedeutet und R₄ einen Alkylrest mit 1 bis 12 Kohlenstoffatomen bedeutet;
. einen Rest der Formel -(CH₂)ₘ-OR₅, worin m eine Zahl von 3 bis 10 bedeutet und R₅ ein Wasserstoffatom, eine Ethylenoxidverknüpfung, eine Propylenoxidverknüpfung oder einen Acylrest mit 2 bis 12 Kohlenstoffatomen bedeutet;
bedeutet;
- R₂ einen zweiwertigen organischen Rest bedeutet, ausgewählt aus:
. linearen oder verzweigten Alkylenresten mit 2 bis 18 Kohlenstoffatomen;
. Alkylencarbonylresten, deren linearer oder verzweigter Alkylenteil 2 bis 20 Kohlenstoffatome trägt;
. Alkylencyclohexylenresten, deren linearer oder verzweigter Alkylenteil 2 bis 12 Kohlenstoffatome besitzt und deren Cyclohexylenteil eine OH-Gruppierung und gegebenenfalls 1 oder 2 Alkylreste mit 1 bis 4 Kohlenstoffatomen besitzt;
. Resten der Formel -R₆-O-R₇-, worin die Reste R₆ und R₇, die gleich oder verschieden sind, Alkylenreste mit 1 bis 12 Kohlenstoffatomen bedeuten;
. Resten der Formel -R₆-O-R₇-, worin R₆ und R₇ wie vorstehend definiert sind und einer der beiden oder beide durch eine oder zwei OH-Gruppen substituiert sind;
. Resten der Formeln -R₆-COO-R₇- und- -R₆-OCO-R₇-, worin R₆ und R₇ wie vorstehend definiert sind;
. Resten der Formel -R₆-O-R₇-O-CO-R₈-, worin R₆, R₇ und R₈, die gleich oder verschieden sind, Alkylenreste mit 2 bis 12 Kohlenstoffatomen bedeuten und der Rest R₇ durch eine Hydroxylgruppe substituiert ist;
- R₃ ein Wasserstoffatom oder einen linearen oder verzweigten Alkylrest mit 1 bis 12 Kohlenstoffatcmen bedeutet;
- Z -O- oder -NR₉- bedeutet, wobei R₉ wie R₃ definiert ist.

2. Verbindungen der Formel (I) nach Anspruch 1, worin
- p eine Zahl von 0 bis 100 bedeutet;
- r eine Zahl von 0 bis 100 bedeutet;
- q eine Zahl von 3 bis 100 bedeutet;
- die Summe p und r größer 0 ist;
- die Summe p, q und r größer oder gleich 10 ist;
- R₁:
. einen Rest der Formel -(CH₂)₁₀-COO-R₄, worin R₄ einen Alkylrest mit 1 bis 6 Kohlenstoffatomen bedeutet;
. einen Rest der Formel -(CH₂)₃-OR₅, worin R₅ ein Wasserstoffatom, eine Ethylenoxidverknüpfung, eine Propylenoxidverknüpfung oder einen Acylrest mit 2 bis 6 Kohlenstoffatomen bedeutet;
bedeutet;
- R₂ einen zweiwertigen Kohlenwasserstoffrest, ausgewählt aus:
. linearen oder verzweigen Alkylenresten mit 3 bis 12 Kohlenstoffatomen;
. Alkylencarbonylresten, deren linearer oder verzweigter Alkylenteil 2 bis 12 Kohlenstoffatome besitzt;
. Alkylencyclohexylenresten, deren linearer oder verzweigter Alkylenteil 2 bis 6 Kohlenstoffatome besitzt und deren Cyclohexylenteil eine -OH-Gruppe und gegebenenfalls 1 oder 2 Alkylsubstituenten mit 1 bis 4 Kohlenstoffatomen besitzt;
. Resten der Formel -R₆-O-R₇-, worin die Reste R₆ und R₇, die gleich oder verschieden sind, Alkylenreste mit 2 bis 6 Kohlenstoffatomen bedeuten;
. Resten der Formel -R₆-O-R₇-, worin R₆ und R₇ wie vorstehend definiert sind und R₇ durch eine OH-Gruppe substituiert ist;
. Resten der Formeln -R₆-COO-R₇- und -R₆-OCO-R₇-, worin R₆ und R₇ wie vorstehend definiert sind;
. Resten der Formel -R₆-O-R₇-O-CO-R₈-, worin R₆, R₇ und R₈, die gleich oder verschieden sind, Alkylenreste mit 2 bis 6 Kohlenstoffatomen bedeuten und der Rest R₇ durch eine Hydroxylgruppe substituiert ist;
bedeutet;
- R₃ ein Wasserstoffatom oder einen linearen oder verzweigten Alkylrest mit 1 bis 6 Kohlenstoffatomen bedeutet;
- Z -O- oder -NR₉- bedeutet, wobei R₉ ein Wasserstoffatom oder einen Alkylrest mit 1 bis 6 Kohlenstoffatomen bedeutet.

3. Verbindungen der Formel (I) nach Anspruch 1, worin:
- p eine Zahl von 5 bis 55 bedeutet;
- r eine Zahl von 0 bis 40 bedeutet;
- q eine Zahl von 5 bis 54,5 bedeutet;
- die Summe p, q und r eine Zahl von 10 bis 100 ist;
- R₁
. einen Rest der Formel -(CH₂)₁₀-COO-R₄, worin R₄ einen Alkylrest mit 1 bis 6 Kohlenstoffatomen bedeutet;
. einen Rest der Formel -(CH₂)₃-OR₅, worin R₅ ein Wasserstoffatom, eine Ethylenoxidverknüpfung, eine Propylenoxidverknüpfung oder eine Acylgruppe mit 2 bis 6 Kohlenstoffatomen bedeutet;
bedeutet;
- R₂ einen Kohlenwasserstoffrest, ausgewählt aus:
. linearen oder verzweigten Alkylenresten mit 3 bis 12 Kohlenstoffatomen;
. dem Rest -(CH₂)₁₀-CO
. Alkylencyclohexylenresten, deren linearer oder verzweigter Alkylenteil 2 bis 6 Kohlenstoffatome besitzt und deren Cyclohexylenteil eine -OH-Gruppierung und gegebenenfalls ein oder zwei Alkylsubstituenten mit 1 bis 4 Kohlenstoffatomen besitzt;
. Resten der Formel -R₆-O-R₇-, worin die Reste R₆ und R₇, die gleich oder verschieden sind, Alkylenreste mit 2 bis 6 Kohlenstoffatomen bedeuten;
. Resten der Formel -R₆-O-R₇-, worin R₆ und R₇ wie vorstehend definiert sind und R₇ durch eine OH-Gruppe substituiert ist;
. Resten der Formeln -R₆-COO-R₇- und -R₆-OCO-R₇-, worin R₆ und R₇ wie vorstehend definiert sind;
. Resten der Formel -R₆-O-R₇-O-CO-R₈-, worin R₆, R₇ und R₈, die gleich oder verschieden sind, Alkylenreste mit 2 bis 6 Kohlenstoffatomen bedeuten und der Rest R₇ durch eine Hydroxylgruppe substituiert ist;
bedeutet;
- R₃ ein Wasserstoffatom oder einen linearen oder verzweigten Alkylrest mit 1 bis 6 Kohlenstoffatomen bedeutet;
- Z -O- oder -NR₉- bedeutet, wobei R₉ ein Wasserstoffatom oder einen Alkylrest mit 1 bis 6 Kohlenstoffatomen bedeutet.

4. Verbindungen der Formel (I) nach Anspruch 1, worin:
- p eine Zahl von 5 bis 30 bedeutet;
- r eine Zahl von 0 bis 40 bedeutet;
- q eine Zahl von 5 bis 54,5 bedeutet;
- die Summe p, q und r eine Zahl von 10 bis 100 ist;
- R₁
. einen Methyl- oder Ethyldecamethylencarboxylatrest bedeutet;
- R₂
. eine Trimethylengruppe;
. eine Decamethylencarbonylgruppe;
. eine 2-Hydroxy-4-oxaheptamethylengruppe;
. eine 6-Hydroxy-4,8-dioxa-3-oxoundecamethylengruppe;
. eine 4-(1-Methylethylen)-2-hydroxy-1-methylcyclohexylgruppe bedeutet;
- R₃ ein Wasserstoffatom oder eine Methylgruppe bedeutet;
- Z -O- oder -NH- oder -N(CH₃)- bedeutet.

5. Verfahren zur Herstellung von Verbindungen der Formel (I) nach einem der Ansprüche 1 bis 4, dadurch **gekennzeichnet**, daß man eine Organosiloxanverbindung der allgemeinen Formel (II): 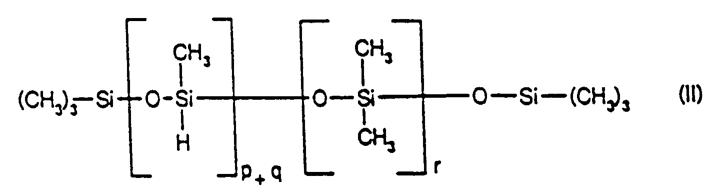 verwendet, worin
- p, q und r wie vorstehend für die Verbindungen der Formel (I) definiert sind.

6. Verfahren nach Anspruch 5, dadurch **gekennzeichnet**, daß man die Wasserstoffatome der Verbindung (II) durch die Gruppierung der Formel (III): 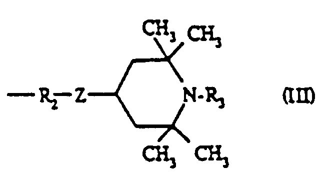 und gegebenenfalls durch die Gruppierung R₁ durch Umsetzen der Verbindung (II) mit einer Verbindung, die eine ethylenische Unsättigung, die bei der Hydrosilylierung in Gegenwart eines Platinkatalysators reagieren kann, besitzt, ersetzt.

7. Verfahren nach Anspruch 5, dadurch **gekennzeichnet**, daß man die Wasserstoffatome der Verbindung (II) durch die Gruppierung der Formel (III): 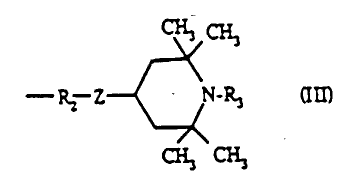 ersetzt, indem man einen Vorläufer des Rests R₂, der eine Ethylendoppelbindung trägt, durch Hydrosilylierung mit ≡Si-H reagieren läßt, anschließend eine zweite Reaktion mit diesem Vorläufer von R₂ durchführt, um den 2,2,6,6-Tetramethyl-4-piperidinylrest zu binden.

8. Verfahren nach Anspruch 7, dadurch **gekennzeichnet**, daß man, wenn Z -NR₉ bedeutet, als Vorläufer von R₂ eine Verbindung mit einer Ethylendoppelbindung und einer Epoxidgruppe, wie 3-Allyloxy-1,2-epoxypropan oder 1,2-Epoxy-4-isopropenyl-1,2-methylcyclohexan, verwendet.

9. Verfahren nach Anspruch 8, dadurch **gekennzeichnet**, daß man die Reaktion zwischen dem Vorläufer von R₂ mit einer Epoxidfunktion und dem 4-Amino-2,2,6,6-tetramethylpiperidin oder dem 4-Alkylamino-2,2,5,6-tetramethylpiperidin der Formel (IV) 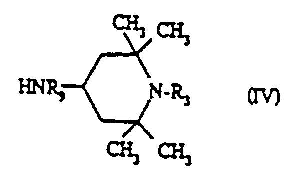 durch Erhitzen auf eine Temperatur von etwa 80 bis 140°C während einiger Minuten bis mehrerer Stunden durchführt.

10. Verfahren nach Anspruch 6, dadurch **gekennzeichnet**, daß man den Rest R₂ dadurch herstellt, indem man zuerst eine Hydrosilylierungsreaktion zwischen der ≡Si-H-Funktion der Organosiloxanverbindung der Formel (II) und einem ungesättigten Alkohol durchführt, dann die Alkoholfunktion des so auf das Si-Atom gepfropften Hydroxyalkylrests mit einer ungesättigten Carbonsäure oder bevorzugt einer ihrer Alkylester umsetzt und schließlich die Doppelbindung der ungesättigten Säure mit dem Derivat der Formel (IV) von 2,2,6,6-Tetramethylpiperidin umsetzt.

11. Verwendung einer wirksamen Menge der Verbindungen der Formel (I) nach einem der Ansprüche 1 bis 4 als UV-Stabilisatoren in organischen Polymeren.

12. Verwendung einer wirksamen Menge der Verbindungen der Formel (I) nach einem der Ansprüche 1 bis 4 als UV-Stabilisatoren von Polyolefinen, Polyalcadienen, Polystyrolen, Polyurethanen, Polyamiden, Polyestern, Polycarbonaten, Polysulfonen, Polyethersulfonen, Polyetherketonen, Acrylpolymeren, ihren Copolymeren und ihren Gemischen.

13. Verwendung einer wirksamen Menge der Verbindungen der Formel (I) nach einem der Ansprüche 1 bis 4 als UV-Stabilisatoren von Polyolefinen und Polyalcadienen, wie Polypropylen, Polyethylen hoher Dichte, linearem Polyethylen niedriger Dichte, Polyethylen niedriger Dichte, Polybutadien, ihren Copolymeren und ihren Gemischen.

14. Gegen die ungünstigen Wirkungen von Licht und UV stabilisierte organische Polymermasse, dadurch **gekennzeichnet**, daß sie 0,04 bis 20 Milliäquivalent der 2,2,6,6-Tetramethylpiperidinylfunktion auf 100 g Polymeres und bevorzugt 0,20 bis 4 Milliäquivalent der 2,2,6,6-Tetramethylpiperidinylfunktion auf 100 g Polymeres enthält.

## Patentansprüche (Patentansprüche für folgende(n) Vertragsstaat(en): ES)

1. Verfahren zur Herstellung von Verbindungen der allgemeinen Formel (I), 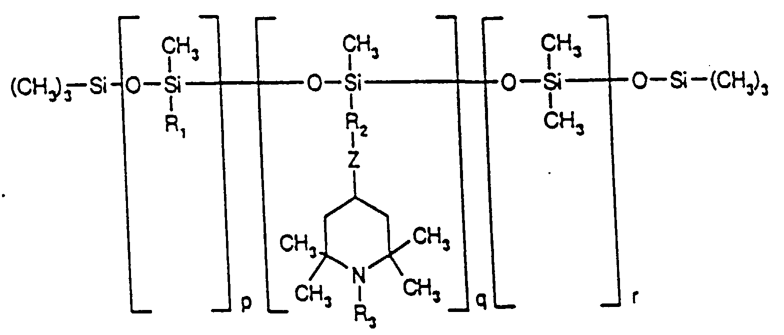 worin
- die verschiedenen Einheiten statistisch in der Kette verteilt sind;
- p und r Zahlen von gleich oder größer 0 bedeuten;
- q eine Zahl größer 0 bedeutet;
- die Summe p, q und r größer oder gleich 5 ist;
- R₁:
. einen Rest der Formel -(CH₂)ₙ-COO-R₄, worin n eine Zahl von 5 bis 20 bedeutet und R₄ einen Alkylrest mit 1 bis 12 Kohlenstoffatomen bedeutet;
. einen Rest der Formel -(CH₂)ₘ-OR₅, worin m eine Zahl von 3 bis 10 bedeutet und R₅ ein Wasserstoffatom, eine Ethylenoxidverknüpfung, eine Propylenoxidverknüpfung oder einen Acylrest mit 2 bis 12 Kohlenstoffatomen bedeutet;
bedeutet;
- R₂ einen zweiwertigen organischen Rest bedeutet, ausgewählt aus:
. linearen oder verzweigten Alkylenresten mit 2 bis 18 Kohlenstoffatomen;
. Alkylencarbonylresten, deren linearer oder verzweigter Alkylenteil 2 bis 20 Kohlenstoffatome trägt;
. Alkylencyclohexylenresten, deren linearer oder verzweigter Alkylenteil 2 bis 12 Kohlenstoffatome besitzt und deren Cyclohexylenteil eine OH-Gruppierung und gegebenenfalls 1 oder 2 Alkylreste mit 1 bis 4 Kohlenstoffatomen besitzt;
. Resten der Formel -R₆-O-R₇-, worin die Reste R₆ und R₇, die gleich oder verschieden sind, Alkylenreste mit 1 bis 12 Kohlenstoffatomen bedeuten;
. Resten der Formel -R₆-O-R₇-, worin R₆ und R₇ wie vorstehend definiert sind und einer der beiden oder beide durch eine oder zwei OH-Gruppen substituiert sind;
. Resten der Formeln -R₆-COO-R₇- und- R₆-OCO-R₇-, worin R₆ und R₇ wie vorstehend definiert sind;
. Resten der Formel -R₆-O-R₇-O-CO-R₈-, worin R₆, R₇ und R₈, die gleich oder verschieden sind, Alkylenreste mit 2 bis 12 Kohlenstoffatomen bedeuten und der Rest R₇ durch eine Hydroxylgruppe substituiert ist;
- R₃ ein Wasserstoffatom oder einen linearen oder verzweigten Alkylrest mit 1 bis 12 Kohlenstoffatomen bedeutet;
- Z -O- oder -NR₉- bedeutet, wobei R₉ wie R₃ definiert ist;
ausgenommen die Verbindungen der Formel: 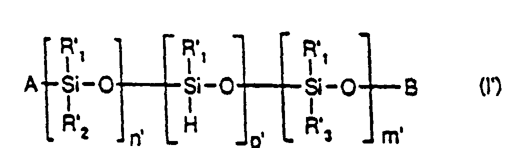 worin:
- R'₁ und R'₃, die gleich oder verschieden sein können, lineare oder verzweigte C₁-C₁₀-Alkylreste, cycloaliphatische C₅-C₁₁-Reste oder Phenylreste sind;
- R'₂ ein Rest, ausgewählt aus denjenigen der allgemeinen Formel: 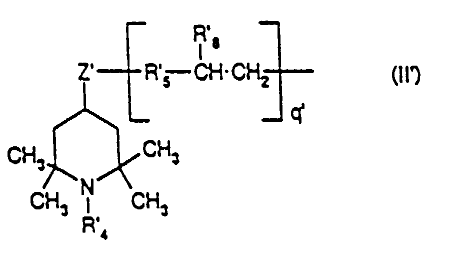 ist, worin:
R'₄ Wasserstoff oder Methyl oder Benzyl bedeutet,
R'₅ einen linearen oder verzweigten C₁-C₇-Alkylrest bedeutet,
R'₆ ein Wasserstoffatom oder eine Methylgruppe bedeutet,
Z' eine Gruppe, ausgewählt aus -O-: 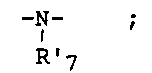 (worin R'₇ ein linearer oder verzweigter C₁-C₅-Alkylrest oder Wasserstoff ist) ist;
q' den Wert 0 oder 1 hat;
- n' eine ganze Zahl, ausgenommen 0, ist;
- m' und p', die gleich oder verschieden sein können, null oder ganze Zahlen sind, mit der Maßgabe, daß n'+p'+m' kleiner oder gleich 50 ist;
- A ein Rest der Formel: 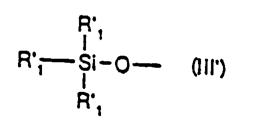 ist, worin R'₁ wie vorstehend definiert ist;
- B ein Rest der Formel: 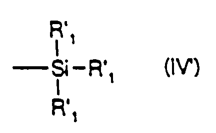 ist, worin R'₁ wie vorstehend definiert ist;
- oder A und B zusammen eine direkte Bindung bilden, die eine cyclische Struktur ergibt;
dadurch **gekennzeichnet**, daß man:
- eine Organosiloxanverbindung der allgemeinen Formel (II) : 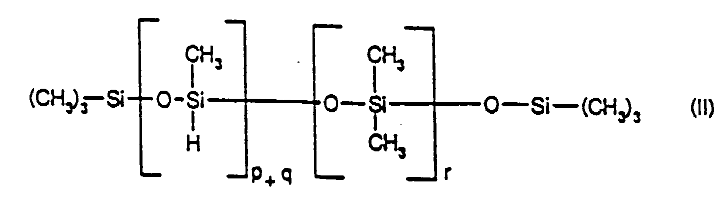 verwendet, worin:
- p, q und r wie vorstehend definiert sind, für die Verbindungen der Formel (I),
- die Wasserstoffatome der Verbindung (II) durch die Gruppierung der Formel (III): 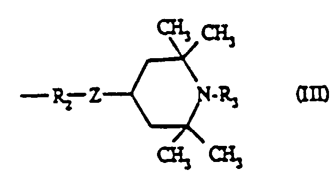 und gegebenenfalls durch die Gruppierung R₁ durch Umsetzung der Verbindung (II) mit einer Verbindung mit einer ethylenischen Unsättigung, die durch Hydrosilylierung in Gegenwart eines Platinkatalysators reagieren kann, ersetzt.

2. Verfahren nach Anspruch 1 zur Herstellung von Verbindungen der allgemeinen Formel (I) 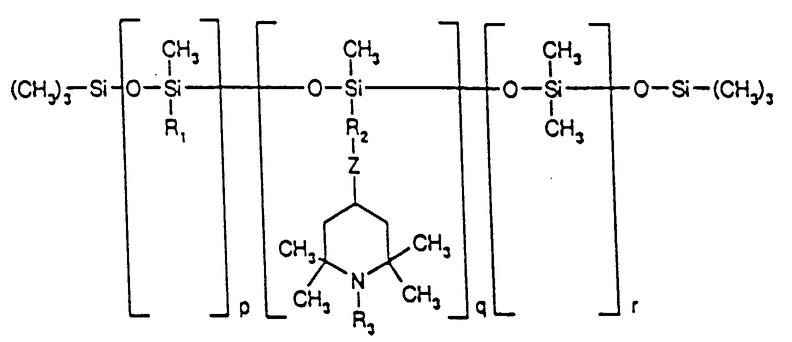 worin:
- die verschiedenen Einheiten statistisch in der Kette verteilt sind;
- p und r Zahlen von gleich oder größer 0 bedeuten;
- q eine Zahl größer 0 bedeutet;
- die Summe p, q und r größer oder gleich 5 ist;
- R₁:
. einen Rest der Formel -(CH₂)ₙ-COO-R₄, worin n eine Zahl von 5 bis 20 bedeutet und R₄ einen Alkylrest mit 1 bis 12 Kohlenstoffatomen bedeutet;
. einen Rest der Formel -(CH₂)ₘ-OR₅, worin m eine Zahl von 3 bis 10 bedeutet und R₅ ein Wasserstoffatom, eine Ethylenoxidverknüpfung, eine Propylenoxidverknüpfung oder einen Acylrest mit 2 bis 12 Kohlenstoffatomen bedeutet;
bedeutet;
- R₂ einen zweiwertigen organischen Rest bedeutet, ausgewählt aus:
. linearen oder verzweigten Alkylenresten mit 2 bis 18 Kohlenstoffatomen;
. Alkylencarbonylresten, deren linearer oder verzweigter Alkylenteil 2 bis 20 Kohlenstoffatome trägt;
. Alkylencyclohexylenresten, deren linearer oder verzweigter Alkylenteil 2 bis 12 Kohlenstoffatome besitzt und deren Cyclohexylenteil eine OH-Gruppierung und gegebenenfalls 1 oder 2 Alkylenreste mit 1 bis 4 Kohlenstoffatomen besitzt;
. Resten der Formel -R₆-O-R₇-, worin die Reste R₆ und R₇, die gleich oder verschieden sind, Alkylenreste mit 1 bis 12 Kohlenstoffatomen bedeuten;
. Resten der Formel -R₆-O-R₇-, worin R₆ und R₇ wie vorstehend definiert sind und einer der beiden oder beide durch eine oder zwei OH-Gruppen substituiert sind;
. Resten der Formeln -R₆-COO-R₇- und -R₆-OCO-R₇-, worin R₆ und R₇ wie vorstehend definiert sind;
. Resten der Formel -R₆-O-R₇-O-CO-R₈-, worin R₆, R₇ und R₈, die gleich oder verschieden sind, Alkylenreste mit 2 bis 12 Kohlenstoffatomen bedeuten und der Rest R₇ durch eine Hydroxylgruppe substituiert ist;
- R₃ ein Wasserstoffatom oder einen linearen oder verzweigten Alkylrest mit 1 bis 12 Kohlenstoffatomen bedeutet;
- Z -O- oder -NR₉- bedeutet, wobei R₉ wie R₃ definiert ist;
ausgenommen die Verbindungen der Formel: 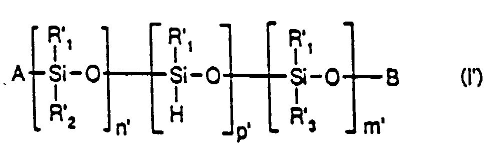 worin:
- R'₁ und R'₃, die gleich oder verschieden sein können, lineare oder verzweigte C₁-C₁₀-Alkylreste, cycloaliphatische C₅-C₁₁-Reste oder Phenylreste sind;
- R'₂ ein Rest, ausgewählt aus denjenigen der allgemeinen Formel: 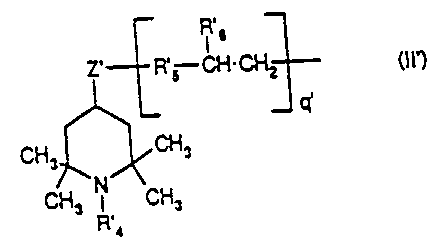 ist, worin:
R'₄ Wasserstoff oder Methyl oder Benzyl bedeutet,
R'₅ einen linearen oder verzweigten C₁-C₇-Alkylrest bedeutet,
R'₆ ein Wasserstoffatom oder eine Methylgruppe bedeutet,
Z' eine Gruppe, ausgewählt aus -O-: 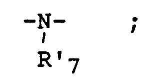 (worin R'₇ ein linearer oder verzweigter C₁-C₅-Alkylrest oder Wasserstoff ist) ist;
q' den Wert 0 oder 1 hat;
- n' eine ganze Zahl, ausgenommen 0, ist;
- m' und p', die gleich oder verschieden sein können, null oder ganze Zahlen sind, mit der Maßgabe, daß n'+p'+m' kleiner oder gleich 50 ist;
- A ein Rest der Formel: 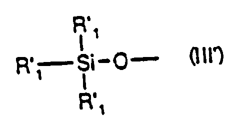 ist, worin R'₁ wie vorstehend definiert ist;
- B ein Rest der Formel: 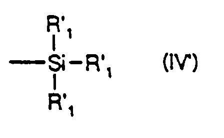 ist, worin R'₁ wie vorstehend definiert ist;
- oder A und B zusammen eine direkte Bindung bilden, die eine cyclische Struktur ergibt,
dadurch **gekennzeichnet**, daß man:
- eine Organosiloxanverbindung der allgemeinen Formel (II): 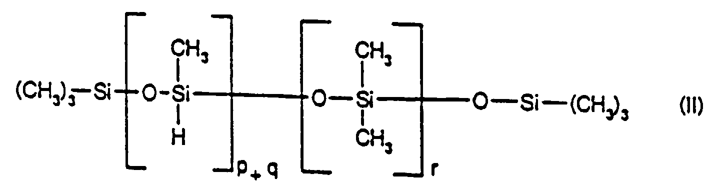 verwendet, worin:
- p, q und r wie vorstehend für die Verbindungen der Formel (I) definiert sind,
- die Wasserstoffatome der Verbindung (II) durch die Gruppierung der Formel (III) 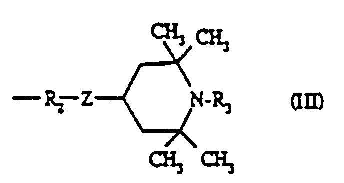 ersetzt, indem man einen Vorläufer des Rests R₂, der eine Ethylendoppelbindung trägt, durch Hydrosilylierung an ≡Si-H umsetzt, anschließend eine zweite Reaktion mit dem Vorläufer von R₂ durchführt, um die 2,2,6,6-Tetramethyl-4-piperidinylgruppe zu binden.

3. Verfahren nach Anspruch 2, dadurch **gekennzeichnet**, daß man, wenn Z -NR₉ bedeutet, als Vorläufer von R₂ eine Verbindung mit einer Ethylendoppelbindung und einer Epoxidgruppe, wie 3-Allyloxy-1,2-epoxypropan oder 1,2-Epoxy-4-isopropenyl-1-methylcyclohexan, verwendet.

4. Verfahren nach Anspruch 3, dadurch **gekennzeichnet**, daß man die Reaktion zwischen dem Vorläufer von R₂ mit einer Epoxidfunktion und dem 4-Amino-2,2,6,6-tetramethylpiperidin oder dem 4-Alkylamino-2,2,6,6-tetramethylpiperidin der Formel (IV) 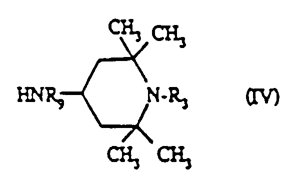 durch Erhitzen auf eine Temperatur von etwa 80 bis 140°C während einiger Minuten bis mehrerer Stunden durchführt.

5. Verfahren nach Anspruch 1, dadurch **gekennzeichnet**, daß man den Rest R₂ dadurch herstellt, indem man zuerst eine Hydrosilylierungsreaktion zwischen der ≡Si-H-Funktion der Organosiloxanverbindung der Formel (II) und einem ungesättigten Alkohol durchführt, dann die Alkoholfunktion des so auf das Si-Atom gepfropften Hydroxyalkylrests mit einer ungesättigten Carbonsäure oder bevorzugt einer ihrer Alkylester umsetzt und schließlich die Doppelbindung der ungesättigten Säure mit dem Derivat der Formel (IV) von 2,2,6,6-Tetramethylpiperidin umsetzt.

6. Verfahren nach einem der Ansprüche 1 bis 5, dadurch **gekennzeichnet**, daß man Verbindungen der Formel (I) herstellt, worin:
- p eine Zahl von 0 bis 100 bedeutet;
- r eine Zahl von 0 bis 100 bedeutet;
- q eine Zahl von 3 bis 100 bedeutet;
- die Summe p und r größer 0 ist;
- die Summe p, q und r größer oder gleich 10 ist;
- R₁:
. einen Rest der Formel -(CH₂)₁₀-COO-R₄, worin R₄ einen Alkylrest mit 1 bis 6 Kohlenstoffatomen bedeutet;
. einen Rest der Formel -(CH₂)₃-OR₅, worin R₅ ein Wasserstoffatom, eine Ethylenoxidverknüpfung, eine Propylenoxidverknüpfung oder einen Acylrest mit 2 bis 6 Kohlenstoffatomen bedeutet;
bedeutet;
- R₂ einen zweiwertigen Kohlenwasserstoffrest, ausgewählt aus:
. linearen oder verzweigen Alkylenresten mit 3 bis 12 Kohlenstoffatomen;
. Alkylencarbonylresten, deren linearer oder verzweigter Alkylenteil 2 bis 12 Kohlenstoffatome trägt;
. Alkylencyclohexylenresten, deren linearer oder verzweigter Alkylenteil 2 bis 6 Kohlenstoffatome besitzt und deren Cyclohexylenteil eine -OH-Gruppe und gegebenenfalls 1 oder 2 Alkylsubstituenten mit 1 bis 4 Kohlenstoffatomen besitzt;
. Resten der Formel -R₆-O-R₇-, worin die Reste R₆ und R₇, die gleich oder verschieden sind, Alkylenreste mit 2 bis 6 Kohlenstoffatomen bedeuten;
. Resten der Formel -R₆-O-R₇- worin R₆ und R₇ wie vorstehend definiert sind und R₇ durch eine OH-Gruppe substituiert ist;
. Resten der Formeln -R₆-COO-R₇- und -R₆-OCO-R₇-, worin R₆ und R₇ wie vorstehend definiert sind;
. Resten der Formeln -R₆-O-R₇-O-CO-R₈-, worin R₆, R₇ und R₈, die gleich oder verschieden sind, Alkylenreste mit 2 bis 6 Kohlenstoffatomen bedeuten und der Rest R₇ durch eine Hydroxylgruppe substituiert ist;
bedeutet;
- R₃ ein Wasserstoffatom oder einen linearen oder verzweigten Alkylrest mit 1 bis 6 Kohlenstoffatomen bedeutet;
- Z -O- oder -NR₉- bedeutet, wobei R₉ ein Wasserstoffatom oder einen Alkylrest mit 1 bis 6 Kohlenstoffatomen bedeutet.

7. Verfahren nach einem der Ansprüche 1 bis 5, dadurch **gekennzeichnet**, daß man Verbindungen der Formel (I) herstellt, worin
- p eine Zahl von 5 bis 55 bedeutet;
- r eine Zahl von 0 bis 40 bedeutet;
- q eine Zahl von 5 bis 54,5 bedeutet;
- die Summe p, q und r eine Zahl von 10 bis 100 ist;
- R₁
. einen Rest der Formel -(CH₂)₁₀-COO-R₄, worin R₄ einen Alkylrest mit 1 bis 6 Kohlenstoffatomen bedeutet;
. einen Rest der Formel -(CH₂)₃-OR₅, worin R₅ ein Wasserstoffatom, eine Ethylenoxidverknüpfung, eine Propylenoxidverknüpfung oder eine Acylgruppe mit 2 bis 6 Kohlenstoffatomen bedeutet;
bedeutet;
- R₂ einen Kohlenwasserstoffrest, ausgewählt aus:
. linearen oder verzweigten Alkylenresten mit 3 bis 12 Kohlenstoffatomen;
. dem Rest - (CH₂)₁₀-CO-;
. Alkylencyclohexylenresten, deren linearer oder verzweigter Alkylenteil 2 bis 6 Kohlenstoffatome besitzt und deren Cyclohexylenteil eine -OH-Gruppierung und gegebenenfalls ein oder zwei Alkylsubstituenten mit 1 bis 4 Kohlenstoffatomen besitzt;
. Resten der Formel -R₆-O-R₇-, worin die Reste R₆ und R₇, die gleich oder verschieden sind, Alkylenreste mit 2 bis 6 Kohlenstoffatomen bedeuten;
. Resten der Formel -R₆-O-R₇-, worin R₆ und R₇ wie vorstehend definiert sind und R₇ durch eine OH-Gruppe substituiert ist;
. Resten der Formel -R₆-COO-R₇- und -R₆-OCO-R₇-, worin R₆ und R₇ wie vorstehend definiert sind;
. Resten der Formel -R₆-O-R₇-O-CO-R₈, worin R₆, R₇ und R₈, die gleich oder verschieden sind, Alkylenreste mit 2 bis 6 Kohlenstoffatomen bedeuten und der Rest R₇ durch eine Hydroxylgruppe substituiert ist;
bedeutet;
- R₃ ein Wasserstoffatom oder einen linearen oder verzweigten Alkylrest mit 1 bis 6 Kohlenstoffatomen bedeutet;
- Z -O- oder -NR₉- bedeutet, wobei R₉ ein Wasserstoffatom oder einen Alkylrest mit 1 bis 6 Kohlenstoffatomen bedeutet.

8. Verfahren nach einem der Ansprüche 1 bis 5, dadurch **gekennzeichnet**, daß man Verbindungen der Formel (I) herstellt, worin:
- p eine Zahl von 5 bis 30 bedeutet;
- r eine Zahl von 0 bis 40 bedeutet;
- q eine Zahl von 5 bis 54,5 bedeutet;
- die Summe p, q und r eine Zahl von 10 bis 100 ist;
- R₁
. einen Methyl- oder Ethyldecamethylencarboxylatrest bedeutet;
- R₂
. eine Trimethylengruppe;
. eine Decamethylencarbonylgruppe;
. eine 2-Hydroxy-4-oxaheptamethylengruppe;
. eine 6-Hydroxy-4,8-dioxa-3-oxoundecamethylengruppe;
. eine 4-(1-Methylethylen)-2-hydroxy-1-methylcyclohexylgruppe bedeutet;
- R₃ ein Wasserstoffatom oder eine Methylgruppe bedeutet;
- Z -O- oder -NH- oder -N(CH₃)- bedeutet.

9. Stabilisierung von organischen Polymeren gegen UV-Strahlen in einem Wellenlängenbereich von 250 nm bis 800 nm, dadurch **gekennzeichnet**, daß man eine wirksame Menge der Verbindungen der Formel (I), hergestellt nach einem der Ansprüche 1 bis 8, verwendet.

10. Stabilisierung nach Anspruch 9, dadurch **gekennzeichnet**, daß man eine wirksame Menge der Verbindung der Formel (I), hergestellt nach einem der Ansprüche 1 bis 8, als UV-Stabilisatoren in einem Wellenlängenbereich von 250 nm bis 800 nm von Polyolefinen, Polyalcadienen, Polystyrolen, Polyurethanen, Polyamiden, Polyestern, Polycarbonaten, Polysulfonen, Polyethersulfonen, Polyetherketonen, Acrylpolymeren, ihren Copolymeren und ihren Gemischen verwendet.

11. Stabilisierung nach einem der Ansprüche 9 oder 10, dadurch **gekennzeichnet**, daß man eine wirksame Menge der Verbindung der Formel (I) nach einem der Ansprüche 1 bis 8 als UV-Stabilisatoren in einem Wellenlängenbereich von 250 nm bis 800 nm von Polyolefinen, Polyalcadienen, wie Polyproylen, Polyethylen hoher Dichte, linearem Polyethylen niedriger Dichte, Polyethlyen niedriger Dichte, Polybutadien, ihren Copolymeren und ihren Gemischen verwendet.

12. Stabilisierung von organischen Polymeren gegen die ungünstigen Wirkungen des Lichts und der UV-Strahlen nach einem der Ansprüche 9 bis 11, dadurch **gekennzeichnet**, daß man in das Polymere eine der Verbindungen der Formel (I), hergestellt nach einem der Ansprüche 1 bis 8, in einer Menge von 0,04 bis 20 Milliäquivalenten, als 2,2,6,6-Tetramethylpiperidinylfunktion auf 100 g Polymeres und bevorzugt 0,20 bis 4 Milliäquivalenten als 2,2,6,6-Tetramethylpiperidinylfunktion auf 100 g Polymeres einarbeitet.

## Claims (Claims for the following Contracting State(s): AT, BE, CH, DE, FR, GB, GR, LI, LU, NL, SE)

1. Compounds of the general formula (I) 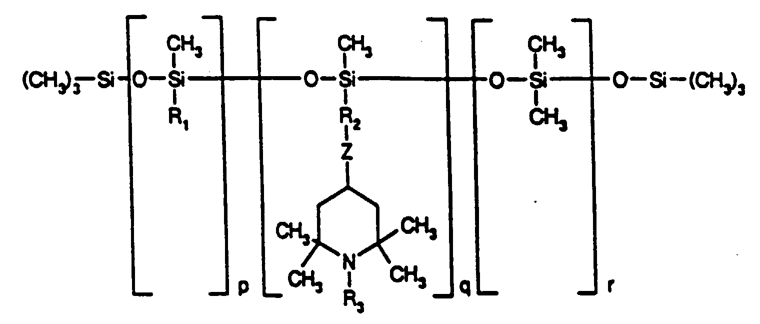 in which:
- the various units are in a random distribution in the chain;
- p and r represent numbers equal to or greater than 0;
- q represents a number greater than 0;
the sum of p, q and r is greater than or equal to 5;
R₁ represents:
. a radical of the formula -(CH₂)ₙ-COO-R₄ in which n represents a number from 5 to 20 and R₄ represents an alkyl radical having 1 to 12 carbon atoms;
. a radical of the formula -(CH₂)ₘ-OR₅ in which m represents a number from 3 to 10 and R₅ represents a hydrogen atom, an ethylene oxide chain, a propylene oxide chain or an acyl radical having 2 to 12 carbon atoms;
- R₂ represents a divalent organic radical selected from:
. linear or branched alkylene radicals having 2 to 18 carbon atoms;
. alkylene-carbonyl radicals of which the linear or branched alkylene part contains 2 to 20 carbon atoms;
. alkylene-cyclohexylene radicals of which the linear or branched alkylene part contains 2 to 12 carbon atoms and the cyclohexylene part contains an -OH grouping and optionally 1 or 2 alkyl radicals having 1 to 4 carbon atoms;
. radicals of the formula -R₆-O-R₇- in which the radicals R₆ and R₇ which can be identical or different represent alkylene radicals having 1 to 12 carbon atoms;
. radicals of the formula -R₆-O-R₇- in which R₆ and R₇ have the meanings given above and one of them is or both are substituted by one or two -OH groupings;
. radicals of the formulae -R₆-COO-R₇- and -R₆OCO-R₇- in which R₆ and R₇ have the above meanings;
. radicals of the formula -R₆-O-R₇-O-CO-R₈- in which R₆, R₇ and R₈ which can be identical or different represent alkylene radicals having 2 to 12 carbon atoms and the radical R₇ is substituted by a hydroxyl grouping;
- R₃ represents a hydrogen atom or a linear or branched alkyl radical having 1 to 12 carbon atoms; and
- Z represents -O- or -NR₉-, R₉ having the meanings given for R₃;
with exclusion of products of the formula: 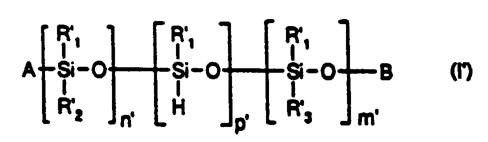 in which:
- R'₁ and R'₃ which can be identical or different are linear or branched C₁-C₁₀-alkyl radicals, C₅-C₁₁-cycloaliphatic radicals or phenyl radicals;
- R'₂ is a radical selected from those of the general formula: 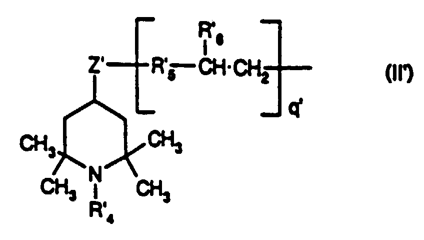 in which
R'₄ is a hydrogen or methyl or a benzyl,
R'₅ is a linear or branched C₁-C₇-alkyl radical,
R'₆ is a hydrogen atom or a methyl,
Z' is a group selected from: -O- and 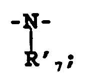 (where R'₇ is a linear or branched C₁-C₅-alkyl group or a hydrogen);
q' is zero or one;
- n' is an integer other than 0;
- m' and p' which can be identical or different are zero or integers, with the proviso that n' + p' + m' is less than or equal to 50;
- A is a group of the formula: 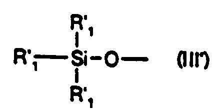 where R'₁ has the above meaning;
- B is a group of the formula: 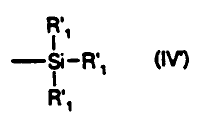 where R'₁ has the meaning given above;
- or A and B together represent a direct bond leading to the formation of a cyclic structure.

2. Compounds of the formula (I) according to claim 1, in which:
- p represents a number from 0 to 100;
- r represents a number from 0 to 100;
- q represents a number from 3 to 100;
- the sum of p and r is greater than 0;
the sum of p, q and r is greater than or equal to 10;
R₁ represents:
. a radical of the formula -(CH₂)₁₀-COO-R₄ in which R₄ represents an alkyl radical having 1 to 6 carbon atoms;
. a radical of the formula -(CH₂)₃-OR₅ in which R₅ represents a hydrogen atom, an ethylene oxide chain, a propylene oxide chain or an acyl grouping having 2 to 6 carbon atoms;
- R₂ represents a divalent hydrocarbon radical selected from:
. linear or branched alkylene radicals having 3 to 12 carbon atoms;
. alkylene-carbonyl radicals of which the linear or branched alkylene part contains 2 to 12 carbon atoms;
. alkylene-cyclohexylene radicals of which the linear or branched alkylene part contains 2 to 6 carbon atoms and the cyclohexylene part contains an -OH grouping and optionally 1 or 2 alkyl substituents having 1 to 4 carbon atoms;
. radicals of the formula -R₆-O-R₇- in which the radicals R₆ and R₇ which can be identical or different represent alkylene radicals having 2 to 6 carbon atoms;
. radicals of the formula -R₆-O-R₇- in which R₆ and R₇ have the meanings given above and R₇ is substituted by an OH group;
. radicals of the formulae -R₆-COO-R₇- and -R₆-OCO-R₇- in which R₆ and R₇ have the above meanings;
. radicals of the formula -R₆-O-R₇-O-CO-R₈- in which R₆, R₇ and R₈ which can be identical or different represent alkylene radicals having 2 to 6 carbon atoms and the radical R₇ is substituted by a hydroxyl grouping;
- R₃ represents a hydrogen atom or a linear or branched alkyl radical having 1 to 6 carbon atoms; and
- Z represents -O- or -NR₉-, R₉ representing a hydrogen atom or an alkyl radical having 1 to 6 carbon atoms.

3. Compounds of the formula (I) according to claim 1, in which:
- p represents a number from 5 to 55;
- r represents a number from 0 to 40;
- q represents a number from 5 to 54.5;
- the sum of p, q and r is a number from 10 to 100;
- R₁ represents:
. a radical of the formula -(CH₂)₁₀-COO-R₄ in which R₄ represents an alkyl radical having 1 to 6 carbon atoms;
. a radical of the formula -(CH₂)₃-OR₅ in which R₅ represents a hydrogen atom, an ethylene oxide chain, a propylene oxide chain or an acyl grouping having 2 to 6 carbon atoms;
- R₂ represents a hydrocarbon radical selected from:
. linear or branched alkylene radicals having 3 to 12 carbon atoms;
. the radical-(CH₂)₁₀-CO-;
. alkylene-cyclohexylene radicals of which the linear or branched alkylene part contains 2 to 6 carbon atoms and the cyclohexylene part contains an -OH grouping and optionally 1 or 2 alkyl substituents having 1 to 4 carbon atoms;
. radicals of the formula -R₆-O-R₇- in which radicals R₆ and R₇ which can be identical or different represent alkylene radicals having 2 to 6 carbon atoms;
. radicals of the formula -R₆-O-R₇- in which R₆ and R₇ have the meanings given above and R₇ is substituted by an OH group;
. radicals of the formulae -R₆-COO-R₇- and -R₆-OCO-R₇- in which R₆ and R₇ have the above meanings;
. radicals of the formula -R₆-O-R₇-O-CO-R₈- in which R₆, R₇ and R₈ which can be identical or different represent alkylene radicals having 2 to 6 carbon atoms and the radical R₇ is substituted by a hydroxyl grouping;
- R₃ represents a hydrogen atom or a linear or branched alkyl radical having 1 to 6 carbon atoms; and
- Z represents -O- or -NR₉-, R₉ representing a hydrogen atom or an alkyl radical having 1 to 6 carbon atoms.

4. Compounds of the formula (I) according to claim 1, in which:
- p represents a number from 5 to 30;
- r represents a number from 0 to 40;
- q represents a number from 5 to 54.5;
- the sum of p, q and r is a number from 10 to 100;
- R₁ represents:
. a methyl or ethyl decamethylene-carboxylate radical;
- R₂ represents:
. a trimethylene radical;
. a decamethylene-carbonyl radical;
. a 2-hydroxy-4-oxa-heptamethylene radical;
. a 6-hydroxy-4,8-dioxa-3-oxo-undecamethylene radical;
. a 4-(1-methylethylene)-2-hydroxy-1-methyl-cyclohexyl radical;
- R₃ represents a hydrogen atom or a methyl radical; and
- Z represents -O- or -NH- or -N(CH₃)-.

5. Process for preparing compounds of the formula (I) according to one of claims 1 to 4, characterized in that an organosiloxane compound of the general formula (II): 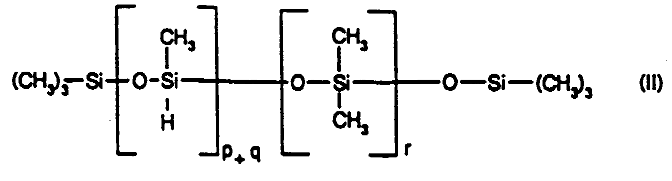 is used, in which:
- p, q and r have the meanings given above for the compounds of the formula (I).

6. Process according to claim 5, characterized in that hydrogen atoms in the compound (II) are replaced by the grouping of the formula (III): 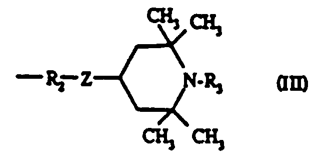 and optionally by the grouping R₁, by reacting the compound (II) with a compound having an ethylenic double bond susceptible to a hydrosilylation reaction in the presence of a platinum catalyst.

7. Process according to claim 5, characterized in that hydrogen atoms of the compound (II) are replaced by the grouping of the formula (III): 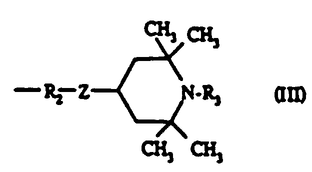 by causing a precursor of the radical R₂, containing an ethylenic double bond, to react by hydrosilylation on ≡Si-H, and then carrying out a 2nd reaction on this precursor of R₂ for fixing the 2,2,6,6-tetramethyl-4-piperidyl radical.

8. Process according to claim 7, characterized in that, when Z represents -NR₉, a compound containing an ethylenic double bond and an epoxide grouping, such as 3-allyloxy-1,2-epoxypropane or 1,2-epoxy-4-isopropenyl-1-methylcyclohexane, is used as the precursor of R₂.

9. Process according to claim 8, characterized in that the reaction between the precursor of R₂ with an epoxide function and 4-amino-2,2,6,6-tetramethylpiperidine or 4-alkylamino-2,2,5,6-tetramethylpiperidine of the formula (IV) 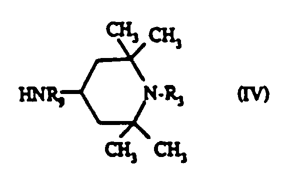 is carried out by heating to a temperature of about 80 to 140°C for a few minutes or up to several hours.

10. Process according to claim 6, characterized in that the radical R₂ is built up by first carrying out a hydrosilylation reaction between the ≡Si-H function of the organosiloxane compound of the formula (II) and an unsaturated alcohol, then causing the alcohol function of the hydroxyalkyl radical thus grafted onto the Si atom to react with an unsaturated carboxylic acid or preferably one of the alkyl esters thereof, and finally causing the double bond of the unsaturated acid to react with the 2,2,6,6-tetramethylpiperidine derivative of the formula (IV).

11. Use of an effective quantity of compounds of the formula (I) according to one of claims 1 to 4 as UV stabilizers in organic polymers.

12. Use of an effective quantity of compounds of the formula (I) according to one of claims 1 to 4 as UV stabilizers for polyolefins, polyalkadienes, polystyrenes, polyurethanes, polyamides, polyesters, polycarbonates, polysulphones, polyether-sulphones, polyether-ketones, acrylic polymers, copolymers thereof and mixtures thereof.

13. Use of an effective quantity of compounds of the formula (I) according to one of claims 1 to 4 as UV stabilizers for polyolefins and polyalkadienes such as polypropylene, high-density polyethylene, linear low-density polyethylene, low-density polyethylene, polybutadiene, copolymers thereof and mixtures thereof.

14. Organic polymer composition stabilized against the detrimental effects of light and UV, characterized in that it contains 0.04 to 20 milliequivalents of 2,2,6,6-tetramethylpiperidyl functional groups per 100 g of polymer and preferably 0.20 to 4 milliequivalents of 2,2,6,6-tetramethylpiperidyl functional groups per 100 g of polymer.

## Claims (Claims for the following Contracting State(s): DK, IT)

1. Compounds of the general formula (I) 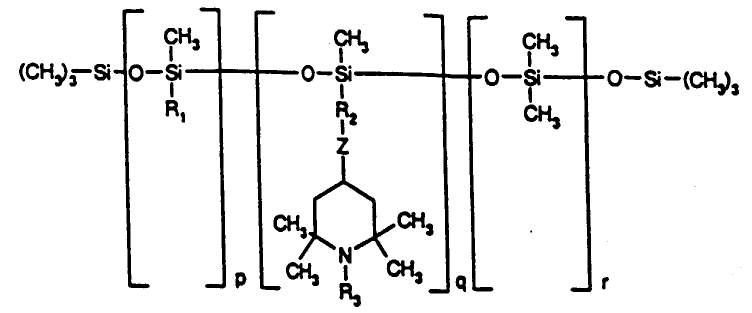 in which:
- the various units are in a random distribution in the chain;
- p and r represent numbers equal to or greater than 0;
- q represents a number greater than 0;
- the sum of p, q and r is greater than or equal to 5;
- R₁ represents:
. a radical of the formula -(CH₂)ₙ-COO-R₄ in which n represents a number from 5 to 20 and R₄ represents an alkyl radical having 1 to 12 carbon atoms;
. a radical of the formula -(CH₂)ₘ-OR₅ in which m represents a number from 3 to 10 and R₅ represents a hydrogen atom, an ethylene oxide chain, a propylene oxide chain or an acyl radical having 2 to 12 carbon atoms;
- R₂ represents a divalent organic radical selected from:
. linear or branched alkylene radicals having 2 to 18 carbon atoms;
. alkylene-carbonyl radicals of which the linear or branched alkylene part contains 2 to 20 carbon atoms;
. alkylene-cyclohexylene radicals of which the linear or branched alkylene part contains 2 to 12 carbon atoms and the cyclohexylene part contains an -OH grouping and optionally 1 or 2 alkyl radicals having 1 to 4 carbon atoms;
. radicals of the formula -R₆-O-R₇- in which the radicals R₆ and R₇ which can be identical or different represent alkylene radicals having 1 to 12 carbon atoms;
. radicals of the formula -R₆-O-R₇- in which R₆ and R₇ have the meanings given above and one of them is or both are substituted by one or two -OH groupings;
. radicals of the formulae -R₆-COO-R₇- and -R₆-OCO-R₇- in which R₆ and R₇ have the above meanings;
. radicals of the formula -R₆-O-R₇-O-CO-R₈- in which R₆, R₇ and R₈ which can be identical or different represent alkylene radicals having 2 to 12 carbon atoms and the radical R₇ is substituted by a hydroxyl grouping;
- R₃ represents a hydrogen atom or a linear or branched alkyl radical having 1 to 12 carbon atoms; and
- Z represents -O- or -NR₉-, R₉ having the meanings given for R₃.

2. Compounds of the formula (I) according to claim 1, in which:
- p represents a number from 0 to 100;
- r represents a number from 0 to 100;
- q represents a number from 3 to 100;
- the sum of p and r is greater than 0;
- the sum of p, q and r is greater than or equal to 10;
- R₁ represents:
. a radical of the formula -(CH₂)₁₀-COO-R₄ in which
. R₄ represents an alkyl radical having 1 to 6 carbon atoms;
a radical of the formula -(CH₂)₃-OR₅ in which R₅ represents a hydrogen atom, an ethylene oxide chain, a propylene oxide chain or an acyl grouping having 2 to 6 carbon atoms;
- R₂ represents a divalent hydrocarbon radical selected from:
. linear or branched alkylene radicals having 3 to 12 carbon atoms;
. alkylene-carbonyl radicals of which the linear or branched alkylene part contains 2 to 12 carbon atoms;
. alkylene-cyclohexylene radicals of which the linear or branched alkylene part contains 2 to 6 carbon atoms and the cyclohexylene part contains an -OH grouping and optionally 1 or 2 alkyl substituents having 1 to 4 carbon atoms;
. radicals of the formula -R₆-O-R₇- in which the radicals R₆ and R₇ which can be identical or different represent alkylene radicals having 2 to 6 carbon atoms;
. radicals of the formula -R₆-O-R₇- in which R₆ and R₇ have the meanings given above and R₇ is substituted by an OH group;
. radicals of the formulae -R₆-COO-R₇- and -R₆-OCO-R₇- in which R₆ and R₇ have the above meanings;
. radicals of the formula -R₆-O-R₇-O-CO-R₈- in which R₆, R₇ and R₈ which can be identical or different represent alkylene radicals having 2 to 6 carbon atoms and the radical R₇ is substituted by a hydroxyl grouping;
- R₃ represents a hydrogen atom or a linear or branched alkyl radical having 1 to 6 carbon atoms; and
- Z represents -O- or -NR₉-, R₉ representing a hydrogen atom or an alkyl radical having 1 to 6 carbon atoms.

3. Compounds of the formula (I) according to claim 1, in which:
- p represents a number from 5 to 55;
- r represents a number from 0 to 40;
- q represents a number from 5 to 54.5;
- the sum of p, q and r is a number from 10 to 100;
- R₁ represents:
. a radical of the formula -(CH₂)₁₀-COO-R₄ in which R₄ represents an alkyl radical having 1 to 6 carbon atoms;
. a radical of the formula -(CH₂)₃-OR₅ in which R₅ represents a hydrogen atom, an ethylene oxide chain, a propylene oxide chain or an acyl grouping having 2 to 6 carbon atoms;
- R₂ represents a hydrocarbon radical selected from:
. linear or branched alkylene radicals having 3 to 12 carbon atoms;
. the radical-(CH₂)₁₀-CO-;
. alkylene-cyclohexylene radicals of which the linear or branched alkylene part contains 2 to 6 carbon atoms and the cyclohexylene part contains an -OH grouping and optionally 1 or 2 alkyl substituents having 1 to 4 carbon atoms;
. radicals of the formula -R₆-O-R₇- in which radicals R₆ and R₇ which can be identical or different represent alkylene radicals having 2 to 6 carbon atoms;
. radicals of the formula -R₆-O-R₇- in which R₆ and R₇ have the meanings given above and R₇ is substituted by an OH group;
. radicals of the formulae -R₆-COO-R₇- and -R₆-OCO-R₇- in which R₆ and R₇ have the above meanings;
. radicals of the formula -R₆-O-R₇-O-CO-R₈- in which R₆, R₇ and R₈ which can be identical or different represent alkylene radicals having 2 to 6 carbon atoms and the radical R₇ is substituted by a hydroxyl grouping;
- R₃ represents a hydrogen atom or a linear or branched alkyl radical having 1 to 6 carbon atoms; and
- Z represents -O- or -NR₉-, R₉ representing a hydrogen atom or an alkyl radical having 1 to 6 carbon atoms.

4. Compounds of the formula (I) according to claim 1, in which:
- p represents a number from 5 to 30;
- r represents a number from 0 to 40;
- q represents a number from 5 to 54.5;
- the sum of p, q and r is a number from 10 to 100;
- R₁ represents:
. a methyl or ethyl decamethylene-carboxylate radical;
- R₂ represents:
. a trimethylene radical;
. a decamethylene-carbonyl radical;
. a 2-hydroxy-4-oxa-heptamethylene radical;
. a 6-hydroxy-4,8-dioxa-3-oxo-undecamethylene radical;
. a 4-(1-methylethylene)-2-hydroxy-1-methyl-cyclohexyl radical;
- R₃ represents a hydrogen atom or a methyl radical; and
- Z represents -O- or -NH- or -N(CH₃)-.

5. Process for preparing compounds of the formula (I) according to one of claims 1 to 4, characterized in that an organosiloxane compound of the general formula (II) : 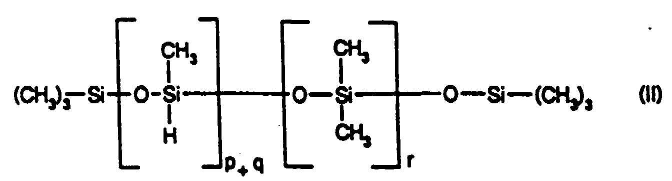 is used, in which:
- p, q and r have the meanings given above for the compounds of the formula (I).

6. Process according to claim 5, characterized in that hydrogen atoms in the compound (II) are replaced by the grouping of the formula (III): 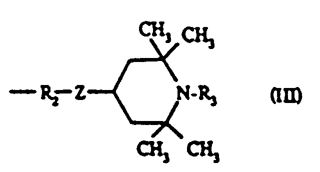 and optionally by the grouping R₁, by reacting the compound (II) with a compound having an ethylenic double bond susceptible to a hydrosilylation reaction in the presence of a platinum catalyst.

7. Process according to claim 5, characterized in that hydrogen atoms of the compound (II) are replaced by the grouping of the formula (III): 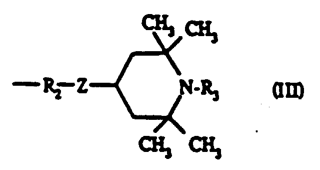 by causing a precursor of the radical R₂, containing an ethylenic double bond, to react by hydrosilylation on ≡Si-H, and then carrying out a 2nd reaction on this precursor of R₂ for fixing the 2,2,6,6-tetramethyl-4-piperidyl radical.

8. Process according to claim 7, characterized in that, when Z represents -NR₉, a compound containing an ethylenic double bond and an epoxide grouping, such as 3-allyloxy-1,2-epoxypropane or 1,2-epoxy-4-isopropenyl-1-methylcyclohexane, is used as the precursor of R₂.

9. Process according to claim 8, characterized in that the reaction between the precursor of R₂ with an epoxide function and 4-amino-2,2,6,6-tetramethylpiperidine or 4-alkylamino-2,2,5,6-tetramethylpiperidine of the formula (IV) 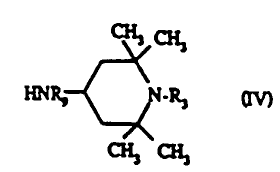 is carried out by heating to a temperature of about 80 to 140°C for a few minutes or up to several hours.

10. Process according to claim 6, characterized in that the radical R₂ is built up by first carrying out a hydrosilylation reaction between the ≡Si-H function of the organosiloxane compound of the formula (II) and an unsaturated alcohol, then causing the alcohol function of the hydroxyalkyl radical thus grafted onto the Si atom to react with an unsaturated carboxylic acid or preferably one of the alkyl esters thereof, and finally causing the double bond of the unsaturated acid to react with the 2,2,6,6-tetramethylpiperidine derivative of the formula (IV).

11. Use of an effective quantity of compounds of the formula (I) according to one of claims 1 to 4 as UV stabilizers in organic polymers.

12. Use of an effective quantity of compounds of the formula (I) according to one of claims 1 to 4 as UV stabilizers for polyolefins, polyalkadienes, polystyrenes, polyurethanes, polyamides, polyesters, polycarbonates, polysulphones, polyether-sulphones, polyether-ketones, acrylic polymers, copolymers thereof and mixtures thereof.

13. Use of an effective quantity of compounds of the formula (I) according to one of claims 1 to 4 as UV stabilizers for polyolefins and polyalkadienes such as polypropylene, high-density polyethylene, linear low-density polyethylene, low-density polyethylene, polybutadiene, copolymers thereof and mixtures thereof.

14. Organic polymer composition stabilized against the detrimental effects of light and UV, characterized in that it contains 0.04 to 20 milliequivalents of 2,2,6,6-tetramethylpiperidyl functional groups per 100 g of polymer and preferably 0.20 to 4 milliequivalents of 2,2,6,6-tetramethylpiperidyl functional groups per 100 g of polymer.

## Claims (Claims for the following Contracting State(s): ES)

1. Process for preparing compounds of the general formula (I) 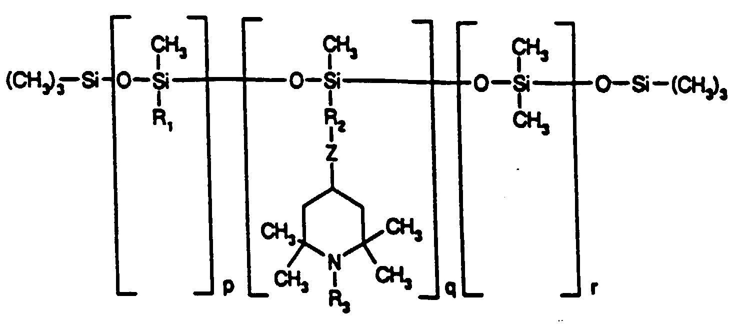 in which:
- the various units are in a random distribution in the chain;
- p and r represent numbers equal to or greater than 0;
- q represents a number greater than 0;
- the sum of p, q and r is greater than or equal to 5;
- R₁ represents:
. a radical of the formula -(CH₂)ₙ-COO-R₄ in which n represents a number from 5 to 20 and R₄ represents an alkyl radical having 1 to 12 carbon atoms;
. a radical of the formula -(CH₂)ₘ-OR₅ in which m represents a number from 3 to 10 and R₅ represents a hydrogen atom, an ethylene oxide chain, a propylene oxide chain or an acyl radical having 2 to 12 carbon atoms;
- R₂ represents a divalent organic radical selected from:
. linear or branched alkylene radicals having from 2 to 18 carbon atoms;
. alkylene-carbonyl radicals of which the linear or branched alkylene part contains 2 to 20 carbon atoms;
. alkylene-cyclohexylene radicals of which the linear or branched alkylene part contains 2 to 12 carbon atoms and the cyclohexylene part contains an -OH grouping and optionally 1 or 2 alkyl radicals having from 1 to 4 carbon atoms;
. radicals of the formula -R₆-O-R₇- in which the radicals R₆ and R₇ which can be identical or different represent alkylene radicals having 1 to 12 carbon atoms;
. radicals of the formula -R₆-O-R₇- in which R₆ and R₇ have the meanings given above and one of them is or both are substituted by one or two -OH groupings;
. radicals of the formulae -R₆-COO-R₇- and -R₆-OCO-R₇- in which R₆ and R₇ have the above meanings;
. radicals of the formula -R₆-O-R₇-O-CO-R₈- in which R₆, R₇ and R₈ which can be identical or different represent alkylene radicals having 2 to 12 carbon atoms and the radical R₇ is substituted by a hydroxyl grouping;
- R₃ represents a hydrogen atom or a linear or branched alkyl radical having 1 to 12 carbons atoms; and
- Z represents -O- or -NR₉-, R₉ having the meanings given for R₃;
with exclusion of products of the formula: 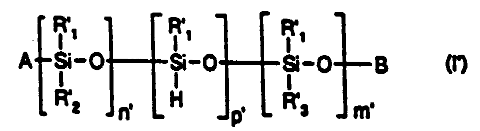 in which:
- R'₁ and R'₃ which can be identical or different are linear or branched C₁-C₁₀-alkyl radicals, C₅-C₁₁-cycloaliphatic radicals or phenyl radicals;
- R'₂ is a radical selected from those of the general formula: 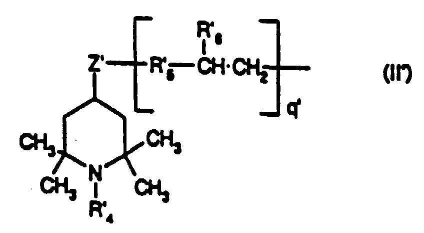 in which
R'₄ is a hydrogen or methyl or a benzyl,
R'₅ is a linear or branched C₁-C₇-alkyl radical,
R'₆ is a hydrogen atom or a methyl,
Z' is a group selected from: -O- and 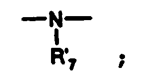 (where R'7 is a linear or branched C₁-C₅-alkyl group or a hydrogen);
q' is zero or one;
- n' is an integer other than 0;
- m' and p' which can be identical or different are zero or integers, with the proviso that n' + p' + m' is less than or equal to 50;
- A is a group of the formula: 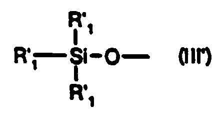 where R'₁ has the above meaning;
- B is a group of the formula: 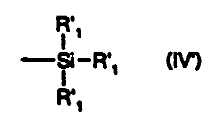 where R'₁ has the meaning given above;
- or A and B together represent a direct bond leading to the formation of a cyclic structure;
characterized:
- in that an organosiloxane compound of the general formula (II) 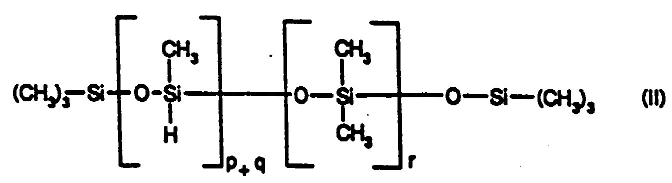 is used, in which:
p, q and r have the meanings given above for the compounds of the formula (I),
- and in that hydrogen atoms in the compound (II) are replaced by the grouping of the formula (III): 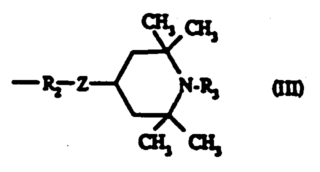 and optionally by the grouping R₁, by reacting the compound (II) with a compound having an ethylenic double bond susceptible to a hydrosilylation reaction in the presence of a platinum catalyst.

2. Process according to claim 1, for preparing compounds of the general formula (I): 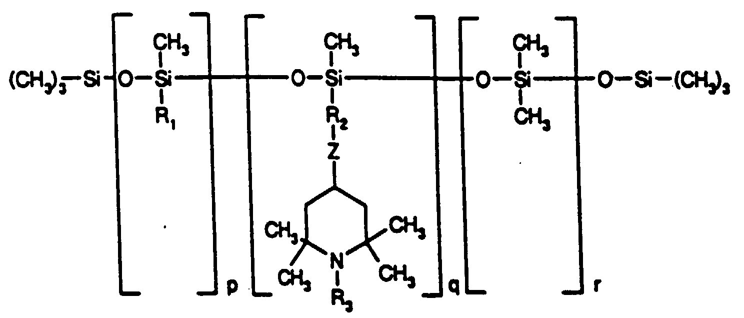 in which:
- the various units are in a random distribution in the chain;
- p and r represent numbers equal to or greater than 0;
- q represents a number greater than 0;
- the sum of p, q and r is greater than or equal to 5;
- R₁ represents:
. a radical of the formula -(CH₂)ₙ-COO-R₄ in which n represents a number from 5 to 20 and R₄ represents an alkyl radical having 1 to 12 carbon atoms;
. a radical of the formula -(CH₂)ₘ-OR₅ in which m represents a number from 3 to 10 and R₅ represents a hydrogen atom, an ethylene oxide chain, a propylene oxide chain or an acyl radical having 2 to 12 carbon atoms;
- R₂ represents a divalent organic radical selected from:
. linear or branched alkylene radicals having from 2 to 18 carbon atoms;
. alkylene-carbonyl radicals of which the linear or branched alkylene part contains 2 to 20 carbon atoms;
. alkylene-cyclohexylene radicals of which the linear or branched alkylene part contains 2 to 12 carbon atoms and the cyclohexylene part contains an -OH grouping and optionally 1 or 2 alkyl radicals having from 1 to 4 carbon atoms;
. radicals of the formula -R₆-O-R₇- in which the radicals R₆ and R₇ which can be identical or different represent alkylene radicals having 1 to 12 carbon atoms;
. radicals of the formula -R₆-O-R₇- in which R₆ and R₇ have the meanings given above and one of them is or both are substituted by one or two -OH groupings;
. radicals of the formulae -R₆-COO-R₇ and -R₆-OCO-R₇- in which R₆ and R₇ have the above meanings;
. radicals of the formula -R₆-O-R₇-O-CO-R₈- in which R₆, R₇ and R₈ which can be identical or different represent alkylene radicals having 2 to 12 carbon atoms and the radical R₇ is substituted by a hydroxyl grouping;
- R₃ represents a hydrogen atom or a linear or branched alkyl radical having 1 to 12 carbons atoms; and
- Z represents -O- or -NR₉-, R₉ having the meanings given for R₃;
with exclusion of products of the formula: 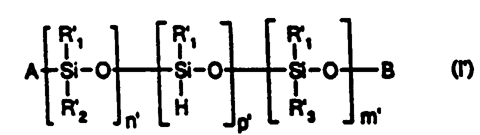 in which:
- R'₁ and R'₃ which can be identical or different are linear or branched C₁-C₁₀-alkyl radicals, C₅-C₁₁-cycloaliphatic radicals or phenyl radicals;
- R'₂ is a radical selected from those of the general formula: 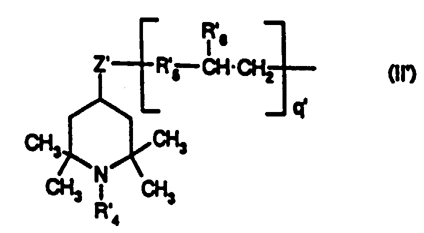 in which
R'₄ is a hydrogen or methyl or a benzyl,
R'₅ is a linear or branched C₁-C₇-alkyl radical,
R₆, is a hydrogen atom or a methyl,
Z' is a group selected from: -O- and 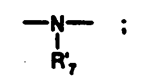 (where R'₇ is a linear or branched C₁-C₅-alkyl group or a hydrogen);
q' is zero or one;
- n' is an integer other than 0;
- m' and p' which can be identical or different are zero or integers, with the proviso that n' + p' + m' is less than or equal to 50;
- A is a group of the formula: 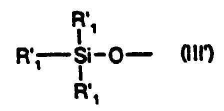 where R'₁ has the above meaning;
- B is a group of the formula: 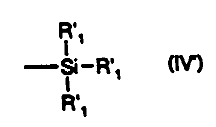 where R'₁ has the meaning given above;
- or A and B together represent a direct bond leading to the formation of a cyclic structure;
characterized:
- in that an organosiloxane compound of the general formula (II) 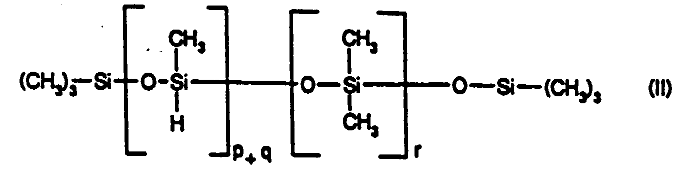 is used, in which:
p, q and r have the meanings given above for the compounds of the formula (I),
- and in that hydrogen atoms in the compound (II) are replaced by the grouping of the formula (III): 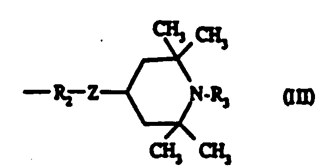 by causing a precursor of the radical R₂, containing an ethylenic double bond, to react by hydrosilylation on ≡Si-H, and then carrying out a second reaction on this precursor of R₂ for fixing the 2,2,6,6-tetramethyl-4-piperidyl radical.

3. Process according to claim 2, characterized in that, when Z represents -NR₉, a compound containing an ethylenic double bond and an epoxide grouping, such as 3-allyloxy-1,2-epoxypropane or 1,2-epoxy-4-isopropenyl-1-methylcyclohexane, is used as the precursor of R₂.

4. Process according to claim 3, characterized in that the reaction between the precursor of R₂ with an epoxide function and 4-amino-2,2,6,6-tetramethylpiperidine or 4-alkylamino-2,2,6,6-tetramethylpiperidine of the formula (IV): 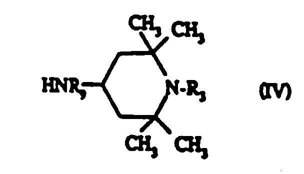 is carried out by heating to a temperature of about 80 to 140°C for a few minutes or up to several hours.

5. Process according to claim 1, characterized in that the radical R₂ is built up by first carrying out a hydrosilylation reaction between the ≡Si-H function of the organosiloxane compound of the formula (II) and an unsaturated alcohol, then causing the alcohol function of the hydroxyalkyl radical thus grafted onto the Si atom to react with an unsaturated carboxylic acid or preferably one of the alkyl esters thereof, and finally causing the double bond of the unsaturated acid to react with the 2,2,6,6-tetramethylpiperidine derivative of the formula (IV).

6. Process according to one of claims 1 to 5, characterized in that compounds of the formula (I) are prepared in which:
- p represents a number from 0 to 100;
- r represents a number from 0 to 100;
- q represents a number from 3 to 100;
- the sum of p and r is greater than 0;
- the sum of p, q and r is greater than or equal to 10;
- R₁ represents:
. a radical of the formula -(CH₂)₁₀-COO-R₄ in which R₄ represents an alkyl radical having 1 to 6 carbon atoms;
. a radical of the formula -(CH₂)₃-OR₅ in which R₅ represents a hydrogen atom, an ethylene oxide chain, a propylene oxide chain or an acyl grouping having 2 to 6 carbon atoms;
- R₂ represents a divalent hydrocarbon radical selected from:
. linear or branched alkylene radicals having 3 to 12 carbon atoms;
. alkylene-carbonyl radicals of which the linear or branched alkylene part contains 2 to 12 carbon atoms;
. alkylene-cyclohexylene radicals of which the linear or branched alkylene part contains 2 to 6 carbon atoms and the cyclohexylene part contains an -OH grouping and optionally 1 or 2 alkyl substituents having 1 to 4 carbon atoms;
. radicals of the formula -R₆-O-R₇- in which the radicals R₆ and R₇ which can be identical or different represent alkylene radicals having 2 to 6 carbon atoms;
. radicals of the formula -R₆-O-R₇- in which R₆ and R₇ have the meanings given above and R₇ is substituted by an OH group;
. radicals of the formulae -R₆-COO-R₇- and -R₆-OCOR₇- in which R₆ and R₇ have the above meanings;
. radicals of the formula -R₆-O-R₇-O-CO-R₈- in which R₆, R₇ and R₈ which can be identical or different represent alkylene radicals having 2 to 6 carbon atoms and the radical R₇ is substituted by a hydroxyl grouping;
- R₃ represents a hydrogen atom or a linear or branched alkyl radical having 1 to 6 carbon atoms; and
- Z represents -O- or -NR₉-, R₉ representing a hydrogen atom or an alkyl radical having 1 to 6 carbon atoms.

7. Process according to one of claims 1 to 5, characterized in that compounds of the formula (I) are prepared in which:
- p represents a number from 5 to 55;
- r represents a number from 0 to 40;
- q represents a number from 5 to 54.5;
- the sum of p, q and r is a number from 10 to 100;
- R₁ represents:
. a radical of the formula -(CH₂)₁₀-COO-R₄ in which R₄ represents an alkyl radical having 1 to 6 carbon atoms;
. a radical of the formula -(CH₂)₃-OR₅ in which R₅ represents a hydrogen atom, an ethylene oxide chain, a propylene oxide chain or an acyl grouping having 2 to 6 carbon atoms;
- R₂ represents a hydrocarbon radical selected from:
. linear or branched alkylene radicals having 3 to 12 carbon atoms;
. the radical-(CH₂)₁₀-CO-;
. alkylene-cyclohexylene radicals of which the linear or branched alkylene part contains 2 to 6 carbon atoms and the cyclohexylene part contains an -OH grouping and optionally 1 or 2 alkyl substituents having 1 to 4 carbon atoms;
. radicals of the formula -R₆-O-R₇- in which radicals R₆ and R₇ which can be identical or different represent alkylene radicals having 2 to 6 carbon atoms;
. radicals of the formula -R₆-O-R₇- in which R₆ and R₇ have the meanings given above and R₇ is substituted by an OH group;
. radicals of the formulae -R₆-COO-R₇- and -R₆-OCO-R₇- in which R₆ and R₇ have the above meanings;
. radicals of the formula -R₆-O-R₇-O-CO-R₈- in which R₆, R₇ and R₈ which can be identical or different represent alkylene radicals having 2 to 6 carbon atoms and the radical R₇ is substituted by a hydroxyl grouping;
- R₃ represents a hydrogen atom or a linear or branched alkyl radical having 1 to 6 carbon atoms; and
- Z represents -O- or -NR₉-, R₉ representing a hydrogen atom or an alkyl radical having 1 to 6 carbon atoms.

8. Process according to one of claims 1 to 5, characterized in that compounds of the formula (I) are prepared in which:
- p represents a number from 5 to 30;
- r represents a number from 0 to 40;
- q represents a number from 5 to 54.5;
- the sum of p, q and r is a number from 10 to 100;
- R₁ represents:
. a methyl or ethyl decamethylene-carboxylate radical;
- R₂ represents:
. a trimethylene radical;
. a decamethylene-carbonyl radical;
. a 2-hydroxy-4-oxa-heptamethylene radical;
. a 6-hydroxy-4,8-dioxa-3-oxo-undecamethylene radical;
. a 4-(1-methylethylene)-2-hydroxy-1-methyl-cyclohexyl radical;
- R₃ represents a hydrogen atom or a methyl radical; and
- Z represents -O- or -NH- or -N(CH₃)-.

9. Stabilization of organic polymers against UV radiation in a wavelength range from 250 nm to 800 nm, characterized by the use of an effective quantity of compounds of the formula (I), prepared according to one of claims 1 to 8.

10. Stabilization according to claim 9, characterized in that an effective quantity of compounds of the formula (I), prepared according to one of claims 1 to 8, is used as UV stabilizer, in a wavelength range from 250 nm to 800 nm, for polyolefins, polyalkadienes, polystyrenes, polyurethanes, polyamides, polyesters, polycarbonates, polysulphones, polyether-sulphones, polyether-ketones, acrylic polymers, copolymers thereof and mixtures thereof.

11. Stabilization according to one of claims 9 and 10, characterized in that an effective quantity of compounds of the formula (I), according to one of claims 1 to 8, is used as UV stabilizer, in a wavelength range from 250 nm to 800 nm, for polyolefins and polyalkadienes such as polypropylene, high-density polyethylene, linear low-density polyethylene, low-density polyethylene, polybutadiene, copolymers thereof and mixtures thereof.

12. Stabilization of organic polymer against the detrimental effects of light and UV, according to one of claims 9 to 11, characterized in that one of the compounds of the formula (I), prepared according to one of claims 1 to 8, is incorporated in the said polymer at a rate of 0.04 to 20 milliequivalents of 2,2,6,6-tetramethylpiperidyl functional groups per 100 g of polymer and preferably 0.20 to 4 milliequivalents of 2,2,6,6-tetramethylpiperidyl functional groups per 100 g of polymer.
